(19)

Europäisches Patentamt
European Patent Office
Office européen des brevets

(11) **EP 3 306 935 A1**

(12) **EUROPEAN PATENT APPLICATION**
published in accordance with Art. 153(4) EPC

(43) Date of publication:
**11.04.2018 Bulletin 2018/15**

(21) Application number: **16803806.5**

(22) Date of filing: **07.06.2016**

(51) Int Cl.:
*H04N 19/52* (2014.01)  *H04N 19/105* (2014.01)
*H04N 19/176* (2014.01)  *H04N 19/174* (2014.01)
*H04N 19/139* (2014.01)  *H04N 19/51* (2014.01)

(86) International application number:
**PCT/KR2016/005998**

(87) International publication number:
**WO 2016/195453 (08.12.2016 Gazette 2016/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 05.06.2015  KR 20150079916
05.06.2015  KR 20150079917
05.06.2015  KR 20150079918

(71) Applicant: **Intellectual Discovery Co., Ltd.**
**Seoul 06158 (KR)**

(72) Inventors:
• **JEONG, Je Chang**
**Seoul 06291 (KR)**
• **KIM, Ki Baek**
**Seoul 07936 (KR)**
• **KIM, Yong Hoon**
**Seoul 03073 (KR)**
• **LEE, Jung Hyun**
**Seoul 04759 (KR)**

(74) Representative: **Betten & Resch**
**Patent- und Rechtsanwälte PartGmbB**
**Maximiliansplatz 14**
**80333 München (DE)**

(54) **IMAGE ENCODING AND DECODING METHOD AND IMAGE DECODING DEVICE**

(57) Disclosed are an image encoding and decoding method and an image decoding device for selecting a prediction candidate from reference blocks of a reference picture, which includes a current picture, and using the selected prediction candidate so as to derive motion information on a current block during image encoding and decoding. The image encoding and decoding method includes the steps of: configuring a spatial motion vector candidate; determining whether the reference picture of the current block is present within the current picture; and adding a spatial motion vector candidate in other block of the current picture encoded before the current block, when the reference picture of the current block is present within the current picture.

[Fig. 19]

## Description

### Technical Field

The present invention relates to an image encoding and decoding method. More particularly, the present invention relates to an image encoding and decoding method and an image decoding device, whereby the method and the device select a prediction candidate from reference blocks of a reference picture including a current picture, and use the selected prediction candidate to derive motion information for a current block when encoding and decoding an image.

Background Art

With the spread of the Internet and mobile terminals and the development of information communication technology, the use of multimedia data is rapidly increasing. Accordingly, there is a need for improving performance and efficiency of the image processing system for providing various services or performing operations for the same by using image prediction within various systems.

Meanwhile, in a conventional image encoding and decoding method, motion information for neighbor blocks of a current block is predicted in at least one reference picture that is after or before the current picture by using an inter-prediction method, or a motion vector of a current block is estimated by obtaining motion information in a reference block within a current picture by using an intra-prediction method.

However, in a conventional inter-prediction method, a prediction block is generated by using a temporal prediction mode between pictures, thus the calculation thereof becomes complex, and intra-prediction also becomes complicated.

Accordingly, there is a need for improving image encoding or image decoding performance in the conventional image encoding and decoding method.

### Disclosure

### Technical Problem

Accordingly, the present invention has been made keeping in mind the above problems occurring in the prior art, and an object of the present invention is to provide an image encoding and decoding method and an image decoding device, wherein the method and the device select a prediction candidate from prediction candidates of a reference picture including a current picture, and use a motion vector candidate selection method to derive motion information of a current block when image encoding and decoding.

Another object of the present invention is to provide an image encoding and decoding method and an image decoding device, wherein the method and the device use a motion vector difference when selecting a prediction candidate from reference blocks of a reference picture including a current picture to derive motion information of a current block when image encoding and decoding.

Still another of the present invention is to provide an image encoding and decoding method and image decoding device, wherein the method and the device use a motion vector precision when selecting a prediction candidate from reference blocks of a reference picture including a current picture to derive motion information of a current block when image encoding and decoding.

Technical Solution

In order to achieve the above object, in one aspect of the present invention, there is provided an image encoding method, the method is an image encoding method of configuring a reference pixel when performing intra-prediction, the method including: obtaining a reference pixel of a current block from a neighbor block when performing intra-prediction of the current block; adaptively performing filtering on the reference pixel; generating a prediction block of the current block by using the reference pixel to which filtering is adaptively applied as an input value according to a prediction mode of the current block; and applying an adaptive post-process filter on the prediction block.

Herein, in the obtaining of the reference pixel, the reference pixel of the current block may be obtained from the neighbor block.

Herein, the obtaining of the reference pixel may be determined according to whether or not the neighbor block is usable.

Herein, whether or not the neighbor block is usable may be determined by a position of the neighbor block or a specific flag (constrained_intra_pred_flag) or both. In one embodiment, the specific flag may have a value of 1 when the neighbor block is usable. This may mean that a reference pixel of a corresponding block may be used for predicting the current block when a prediction mode of the neighbor block is an inter mode.

Herein, the specific flag (constrained_intra_pred_flag) may be determined according to the prediction mod of the neighbor block, and the prediction mode may be one of intra-prediction and inter-prediction.

Herein, when the specific flag (constrained_intra_pred_flag) is 0, whether or not the neighbor block is usable becomes "true" regardless of the prediction mode of the neighbor block, and when the specific flag is 1, whether or not the neighbor block is usable becomes "true" when the prediction mode of the neighbor block is intra-prediction, and whether or not the neighbor block is usable becomes "false" when the prediction mode of the neighbor block is inter-prediction.

Herein, inter-prediction may generate a prediction block by referencing at least one reference picture.

Herein, the reference picture may be managed by using a reference picture list 0 (List 0) and a reference picture list 1 (List 1), and at least one of a previous picture, a following picture, and a current picture may be included in the List 0 and List 1.

Herein, for the List 0 and the List1, whether or not to include the current picture in a reference picture list may be adaptively determined.

Herein, information determining whether or not to include the current picture in the reference picture list may be included in a sequence, a reference picture parameter set, etc.

In order to achieve the above object, in another aspect of the present invention, there is provided an image decoding method, wherein the method is an image decoding method performed in a computing device, the method including: obtaining a flag indicating whether or not a reference pixel of a neighbor block is usable in a sequence or picture unit from an input bitstream; determining whether or not the reference pixel of the neighbor block is usable when performing intra-prediction according to the flag; when the flag is 0, using the reference pixel of the neighbor block for predicting a current block regardless of a prediction mode of the neighbor block; when the flag is 1, using the reference pixel of the neighbor block for predicting the current block when the prediction mode of the neighbor block is intra-prediction; and not using the reference pixel of the neighbor block for predicting the current block when the prediction mode of the neighbor block is inter-prediction.

Herein, inter-prediction may generate a prediction block based on performing block matching in a reference picture.

Herein, the reference picture may be managed by using a List 0 in a P-picture, and using a List 0 and a List 1 in a B-picture.

Herein, in inter-prediction, the List 0 may include a current picture.

Herein, in inter-prediction, the List 1 may include the current picture.

Herein, whether or not to include the current picture in the List 0 and the List 1 may be determined based on a flag transmitted from a sequence parameter.

Herein, whether or not to include the current picture in the List 0 and the List 1 may be determined based on a flag transmitted from a picture parameter.

In order to achieve the above object, in another aspect of the present invention, there is provided a motion vector candidate selection method, the method including: configuring a spatial motion vector candidate (first candidate); determining whether or not a reference picture of a current block is present in a current picture; and when the reference picture of the current block is present in the current picture, adding a spatial motion vector candidate (second candidate) of another block of the current picture which is encoded before the current block.

Herein, the motion vector candidate selection method may further include adding a temporal motion vector candidate (third candidate) when the reference picture of the current block is not present in the current picture.

Herein, the motion vector candidate selection method may further include configuring a combined list candidate including the first candidate, the second candidate, and the third candidate after adding the spatial motion vector candidate and the temporal motion vector candidate.

Herein, the motion vector candidate selection method may further include: after configuring the combined list candidate, determining whether or not the current picture is a reference picture; and adding a fixed candidate having preset fixed coordinates when the current picture is the reference picture and a number of motion vector candidates within the combined list candidate is smaller than a preset number.

Herein, the motion vector candidate selection method may further include adding a fixed candidate having (0, 0) coordinates when the current picture is not the reference picture, and a number of motion vector candidate within the combined list candidate is smaller than a preset number.

Herein, the other blocks of the current picture may be blocks facing the current block with a neighbor block of the current block therebetween, and may include a block that is encoded before the current block in the current picture. The other block of the current picture may be a block encoded by performing inter-prediction before the current block.

In order to achieve the above object, in another aspect of the present invention, there is provided an image encoding method, the method including: configuring a spatial motion vector candidate (first candidate); determining whether or not a reference picture of a current block is present within a current picture; when the reference picture of the current block is present within the current picture, adding a spatial motion vector candidate (second candidate) of another block of the current picture which is encoded before the current block; when the reference picture of the current block is not present within the current picture, adding a temporal motion vector candidate (third candidate); and performing reference pixel filtering based on a motion vector candidate including any one of the first candidate, the second candidate, and the third candidate.

Herein, the image encoding method may further include: before performing the reference pixel filtering, determining whether or not the current picture is the reference picture; when the current picture is the reference picture and a number of motion vector candidates within the combined list candidate is smaller than a preset number, adding a fixed candidate having preset fixed coordinates; and when the current picture is not the reference picture, and a number of motion vector candidates within the combined list candidate is smaller than a preset number, adding a fixed candidate having (0, 0) coordinates.

Herein, the image encoding method may further include: after performing the reference pixel filtering, generating a prediction block by performing intra-prediction; and encoding a prediction mode of the generated prediction block.

In order to achieve the above object, in another aspect of the present invention, there is provided an image encoding method, the method including: configuring a spatial motion vector candidate (first candidate); determining whether or not a reference picture of a current block is present within a current picture; when the reference picture of the current block is present within the current picture, adding a spatial motion vector candidate (second candidate) of another block of the current picture which is encoded before the current block; when the reference picture of the current block is not present within the current picture, adding a temporal motion vector candidate (third candidate); and performing motion estimation based on a motion vector candidate including any one of the second candidate and the third candidate, and the first candidate.

Herein, the image encoding method may further include: before performing the motion estimation; determining whether or not the current picture is the reference picture; when the current picture is the reference picture, and a number of motion vector candidates within the combined list candidate is smaller than a preset number, adding a fixed candidate having preset fixed coordinates; and when the current picture is not the reference picture, and a number of motion vector candidates within the combined list candidate is smaller than a preset number, adding a fixed candidate having (0, 0) coordinates.

Herein, the image encoding method may further include, after the performing the motion estimation, performing interpolation.

In order to achieve the above object, in another aspect of the present invention, there is provided an image decoding method, the method including: entropy decoding an encoded picture; performing dequantization on the decoded picture; performing inverse-transform in the dequantized picture; selecting a motion information prediction candidate of the inverse-transformed image based on header information of the decoded picture; and decoding the inverse-transformed image based on image information obtained based on the motion information prediction candidate.

Herein, in the selecting of the motion information prediction candidate, motion prediction of a current block may be performed based on a candidate group including a spatial motion vector candidate (first candidate) from a neighbor block of a current picture within the inverse-transformed image, and a spatial motion vector candidate (second candidate) from other blocks of the current picture which are encoded before the current block.

Herein, in the selecting of the motion information prediction candidate, motion prediction of the current block may be performed based on a candidate group to which a temporal motion vector candidate (third candidate) is further added.

Herein, in the selecting of the motion information prediction candidate, a combined list candidate group including the first candidate, the second candidate, and the third candidate may be configured, and whether or not a current picture of the current block is a reference picture may be determined, and when the current picture is the reference picture and a number of motion vector candidates within the combined list candidate is smaller than a preset number, a fixed candidate having preset fixed coordinates may be added.

Herein, in the selecting of the motion information prediction candidate of the image decoding method, when the current picture is not the reference picture, and a number of motion vector candidates within the combined list candidate is smaller than the preset number, a fixed candidate having (0, 0) coordinates may be added.

Herein, the other blocks of the current picture may include blocks facing the current block with a neighbor block of the current block therebetween, and include a block that is encoded by performing inter-prediction before the current block in the current picture.

In order to achieve the above object, in another aspect of the present invention, there is provided an image encoding method, wherein the method is an image encoding method of generating a prediction image by predicting motion information from an original image, the method including: configuring a motion information prediction candidate group; changing a motion vector of a candidate block belonging to the candidate group according to a precision unit of a motion vector of a current block; and calculating a difference value by subtracting the motion vector of the candidate block according to the precision unit from the motion vector of the current block.

In order to achieve the above object, in another aspect of the present invention, there is provided an image decoding method, wherein the method is an image decoding method of generating a reconstructed image by entropy decoding an encoded image, performing dequantization on the entropy decoded image, and performing inverse-transform on the dequantized image, the method including: configuring a motion information prediction candidate group of the reconstructed image based on header information of the entropy decoded image; changing a motion vector of a candidate block belonging to the candidate group according to a precision unit of a motion vector of a current block; and calculating a differential value by subtracting the motion vector of the candidate block according to the precision unit from the motion vector of the current block.

Herein, in the changing of the motion vector of the candidate block, the motion vector may be scaled according to a first distance between a current picture at which the current block is positioned and a reference picture, and a second distance between a picture of the candidate block and a reference picture of a corresponding candidate block.

Herein, the image encoding method may further include, after the calculating of the differential value, determining an interpolation precision of each reference picture based on an average distance of the first distance and the second distance.

Herein, the changing of the motion vector of the candidate block may be omitted when a reference picture of the current block and a reference picture of the candidate block are identical.

Herein, in the changing of the motion vector of the candidate block, a motion vector of a neighbor block or adjacent block of may be changed to a motion vector precision unit of the current block according to a motion vector precision of the current block.

Herein, the neighbor block may be included in and positioned at another block between the current block. In addition, the neighbor block may be a block in which a motion vector thereof is searched by performing inter-prediction before the current block.

In order to achieve the above object, in another aspect of the present invention, there is provided an image decoding device including a memory storing a program or a program code for generating a reconstructed image by entropy decoding an encoded image, performing dequantization on the entropy decoded image, and performing inverse-transform on the dequantized image, and a processor connected to the memory and executing the program, the processor, by executing the program: configures a motion information prediction candidate group of the reconstructed image based on header information of the entropy decoded image; changes a motion vector of a candidate block belonging to the candidate group according to a precision unit of a motion vector of a current block; and calculates a difference value by subtracting the motion vector of the candidate block according to the precision unit from the motion vector of the current block.

Herein, the processor may scale the motion vector according to a first distance between a current picture at which the current block is positioned, and a second distance between a picture of the candidate block and a reference picture of a corresponding candidate block when the processor changes the motion vector of the candidate block.

Herein, the processor may determine an interpolation precision of each reference picture based on an average distance of the first distance and the second distance when the processor calculates the differential value.

Herein, the processor may omit the changing of the motion vector of the candidate block when a reference picture of the current block and a reference picture of the candidate block are identical.

Herein, the processor may change a motion vector of a neighbor block or adjacent block to a motion vector precision unit of the current block according to a motion vector precision of the current block when the processor changes the motion vector of the candidate block.

Herein, the neighbor block may be included in and positioned at another block between the current block, and includes a block in which a motion vector is searched by performing inter-prediction before the current block.

In order to achieve the above object, in another aspect of the present invention, there is provided an image encoding method, the method including: searching, when an interpolation precision of a reference picture is a first value, a precision of a motion vector for a first neighbor block of a current block referencing the reference picture, the precision being identical to the first value or being a second value greater than the first value; searching a precision of a motion vector for a second neighbor block of the current block, the precision being a third value greater than the second value; and encoding first information for the motion vectors of the first block and the second block, and matching information for the precisions of the motion vectors.

In order to achieve the above object, in another aspect of the present invention, there is provided an image decoding method, the method including: searching, when an interpolation precision of a reference picture has a first value, a precision of a motion vector for a first neighbor block of a current block referencing the reference picture, the precision being identical to the first value or being a second value greater than the first value; searching a precision of a motion vector for a second neighbor block of the current block, the precision being a third value greater than the second value; and image decoding based on matching information of the precisions of the motion vectors, and information of the motion vectors for the first block and the second block.

Herein, information of a current picture may be added in ends of a reference picture list 0 and a reference picture list 1.

Herein, the first value may be a proper fraction. In addition, the second value or the third value may be an integer.

Herein, the second value may have a number of binary bits shorter than a number of binary bits of the third value when the second value has an occurrence frequency greater that an occurrence frequency of the third value within an index including the matching information.

Herein, the third value may have a zero value, that is, a precision being 0, when the third value has the highest occurrence frequency within the index.

Herein, the first neighbor block or the second neighbor block may be included in and positioned at a block spatially different from the current block. The first neighbor block or the second neighbor block may be a block encoded by performing inter-prediction before the current block.

Herein, a reference picture of the first neighbor block or the second neighbor block may be the current picture. A motion vector of the first neighbor block or the second neighbor block may be searched by performing inter-prediction.

In order to achieve the above object, in another aspect of the present invention, there is provided an image decoding device including a memory storing a program or a program code for image decoding, and a processor connected to the memory, wherein the processor, by the program: searches, when an interpolation precision of a reference picture is a first value, a precision of a motion vector for a first neighbor block of a current block referencing the reference picture, the precision being identical to the first value, or being a second value greater than the first value; searches a precision of a motion vector for a second neighbor block of the current block, the precision being a third value greater than the second value; and decodes an image based on matching information of the precisions of the motion vectors, and information of motion vectors for the first block and the second block.

## Advantageous Effects

According to an image encoding and decoding method and an image decoding device according to an embodiment of the present invention described as above, a motion vector candidate may be effectively selected for image encoding and decoding in various systems configured with an image processing system or including such an image processing system, thus performance and efficiency of a device or system may be improved.

In addition, performance and efficiency of an image encoding device, an image decoding device, or an image processing system may be improved since a motion vector candidate or motion information prediction candidate is effectively selected.

Particularly, scaling or precision adjustment may be applied in various forms according to a precision of a block or picture by selecting a motion vector by using a motion vector difference. In addition, performance and efficiency of encoding and decoding may be improved by selecting an optimized candidate from an applicable candidate group, calculating a difference value with a motion vector of a current block, and encoding the calculated difference value.

In addition, particularly, a reference block may be copied and used as a prediction block within a current picture by selecting a motion vector by using a motion vector precision. Accordingly, performance and efficiency of image encoding and decoding may be improved.

In addition, performance and efficiency of encoding and decoding may be improved by using intra block copy or block matching to extend precision of a motion vector, and by including a current picture in a reference picture list 0 (List 0) and a reference picture list 1 (List 1) of a motion vector.

## Description of Drawings

FIG. 1 is a view for illustrating a system using an image encoding device or image decoding device or both of the present invention.

FIG. 2 is a block diagram of the image encoding device according to an embodiment of the present invention.

FIG. 3 is a block diagram of the image decoding device according to an embodiment of the present invention.

FIG. 4 is an example view showing inter-prediction of a P-slice in an image encoding and decoding method according to an embodiment of the present invention.

FIG. 5 is an example view showing inter-prediction of a B-slice in the image encoding and decoding method according to an embodiment of the present invention.

FIG. 6 is an example view for illustrating generating of a prediction block in one direction in the image encoding and decoding method according to an embodiment of the present invention.

FIG. 7 is an example view of configuring a reference picture list in the image encoding and decoding method according to an embodiment of the present invention.

FIG. 8 is another example view of performing inter-prediction from a reference picture list in the image encoding and decoding method according to an embodiment of the present invention.

FIG. 9 is an example view for illustrating intra-prediction in the image encoding method according to an embodiment of the present invention.

FIG. 10 is an example view for illustrating a prediction principle in a P-slice or B-slice in the image encoding method according to an embodiment of the present invention.

FIG. 11 is an example view for illustrating interpolation performed in the image encoding method of FIG. 10.

FIG. 12 is a view for illustrating a main process of the image encoding method according to an embodiment of the present invention in a syntax of a coding unit.

FIG. 13 is an example view for illustrating an example of supporting symmetric division or asymmetric division as like the inter-prediction when a prediction block is generated by performing block matching in a current picture used in FIG. 12.

FIG. 14 is an example view for illustrating that inter-prediction supports 2Nx2N and NxN as the intra-prediction of FIG. 9.

FIG. 15 is a view for illustrating a process of applying a one-dimensional horizontal filter to pixels present at positions (assuming x) at a, b, and c of an image in the image encoding method according to an embodiment of the present invention.

FIG. 16 is an example view of a current block and a neighbor block according to a comparative example.

FIG. 17 is an example view of a current block and a neighbor block according to another comparative example.

FIG. 18 is an example view of a current block and a neighbor block according to still another comparative example.

FIG. 19 is an example view of a current block and a neighbor block which may be selected in the image encoding method according to an embodiment of the present invention.

FIG. 20 is an example view for illustrating a case in the image encoding method according to an embodiment of the present invention of excluding from a candidate group when a temporal distance between a reference picture of a current block and a reference picture of a candidate block is equal to or greater than a predetermined distance, and including in a candidate group after performing scaling according to a distance when the temporal distance is less than the predetermined distance.

FIG. 21 is an example view for illustrating a case in the image encoding method according to an embodiment of the present invention of adding a current picture to a prediction candidate group when a picture reference by a current block is a picture different from the current picture.

FIG. 22 is an example view for illustrating a case in the image encoding method according to an embodiment of the present invention of adding a current picture to a prediction candidate group when a picture referenced by a current block is the current picture.

FIG. 23 is a flowchart of an image encoding method according to another embodiment of the present invention.

FIG. 24 is a view for illustrating when a motion vector precision varies in a block unit.

FIG. 25 is a view for illustrating a case in the image encoding method according to an embodiment of the present invention of determining a motion vector precision of a block according to interpolation precision of a reference picture.

FIG. 26 is a flow chart of an image encoding and decoding method using a motion vector difference according to an embodiment of the present invention.

FIG. 27 to FIG. 32 are views for illustrating a process in the image encoding method according to an embodiment of the present invention of calculating a motion vector difference in various cases when interpolation precision is determined in a block unit.

[Correction 20.06.2016 Under Rule 91]

FIG. 33 to FIG. 36 are views for illustrating a process in the image encoding method according to an embodiment of the present invention of expressing a precision of a motion vector difference.

[Correction 20.06.2016 Under Rule 91]

FIG. 37 shows an example of a reference structure of a random access mode in the image encoding and decoding method according to an embodiment of the present invention.

[Correction 20.06.2016 Under Rule 91]

FIG. 38 is a view for illustrating that a single picture may have at least two interpolation precisions in the image encoding method according to an embodiment of the present invention.

[Correction 20.06.2016 Under Rule 91]

FIG. 39 is a view showing a reference picture list when a current picture is an I-picture in FIG. 38.

[Correction 20.06.2016 Under Rule 91]

FIG. 40 is a view showing a reference picture list when a current picture is a P-picture in FIG. 38.

[Correction 20.06.2016 Under Rule 91]

FIG. 41 is a view showing a reference picture list when a current picture is B(2) in the image encoding and decoding method according to an embodiment of the present invention.

[Correction 20.06.2016 Under Rule 91]

FIG. 42 is a view showing a reference picture list when a current picture is B(5) in the image encoding and decoding method according to an embodiment of the present invention.

[Correction 20.06.2016 Under Rule 91]

FIG. 43 is a view for illustrating a process in the image encoding and decoding method according to an embodiment of the present invention of determining a motion vector precision of each block according to a interpolation precision of a reference picture.

[Correction 20.06.2016 Under Rule 91]

FIG. 44 is a view for illustrating a process in the image encoding and decoding method according to an embodiment of the present invention of adaptively determining a motion vector precision of each block when an interpolation precision of each reference picture is constant.

**Mode for Invention**

The preferred embodiments of the present invention will be explained below with reference to accompanied drawings. While the invention can have a variety of modifications and configurations, certain embodiments have been illustrated and explained herein. However, this should not be construed as limiting the invention to any specific disclosed configuration, but rather understood as including all the modifications, equivalents or replacements that may be included under the concept and technical scope of the present invention.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used here, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the invention. As used herein, the singular forms "a", "an", and "the" are intended to include the plural forms as well, unless the context clearly indicates otherwise. It will be further understood that the terms "comprises", "comprising:", "includes", and "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined here.

Generally, a video may be configured with a series of pictures, and each picture may be divided into a predetermined area such as frame or block. In addition, the divided area may be referred to using various sizes or terms such as coding tree unit (CTU), coding unit (CU), prediction unit (PU), transform unit (TU). Each unit may be configured with a single luma block and two chroma blocks, and the unit may be differently configured according to a color format. In addition, a size of a luma block and a chroma block may be determined according to a color format. For example, in case of 4:2:0, a chroma block may have horizontal and vertical lengths to be 1/2 of horizontal and vertical lengths of a luma block. For the above unit and terms, terms of a conventional HEVC (high efficiency video coding) or H.264/AVC (advanced video coding) may be referenced.

In addition, a picture, a block, or a pixel reference while encoding or decoding a current block or a current pixel is called a reference picture, a reference block, or a reference pixel. In addition, it will be appreciated by those skilled in the art that the term "picture" described below may be replaced with other terms having equivalent meanings such as image, frame, etc.

Hereinafter, exemplary embodiments of the present invention will be described in detail with reference to the attached drawings. In order to facilitate a thorough understanding of the present invention, the same reference numerals designate the same components in the drawings, and repeated description of the same components will be omitted.

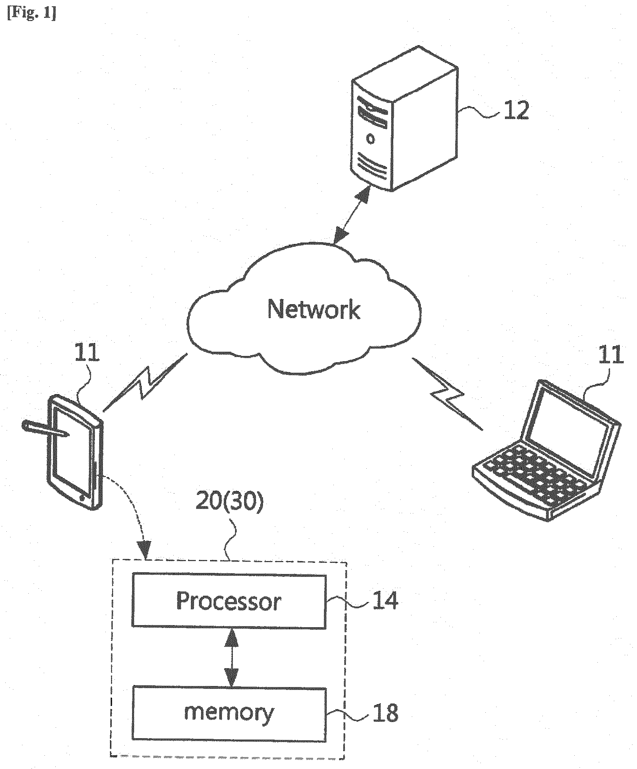

FIG. 1 is a view for illustrating a system using an image encoding device or an image decoding device or both of the present invention.

Referring to FIG. 1, the system using the image encoding device or the image decoding device or both may be a user terminal 11 such as personal computer (PC), laptop computer, a personal digital assistant (PDA), portable multimedia player (PMP), PlayStation Portable (PSP), wireless communication terminal, smart phone, television, etc. or may be a server terminal 12 such as application server, service server, etc. The above system may be called a computing device.

In addition, the computing device may include various devices including a communication device such as communication modem for communicating between various devices and wired and wireless communication network, a memory 18 storing various programs and data for encoding or decoding an image or for inter or intra prediction used for performing the same, and a processor 14 for calculating and controlling by executing programs.

In addition, in the computing device, images may be encoded in a bitstream by the image encoding device, the bitstream may be transmitted in real-time or in non real-time to the image decoding device by using a wired or wires communication network such as Internet, near field wireless communication network, wireless LAN network, Wibro-network, mobile communication network, etc. or by using various communication interfaces such as cable, universal serial bus (USB), and the transmitted stream may be decoded and played in a reconstructed image in the image decoding device. In addition, the image encoded in a bitstream by the image encoding device may be transmitted from the encoding device to the decoding device by using a computer readable recording medium.

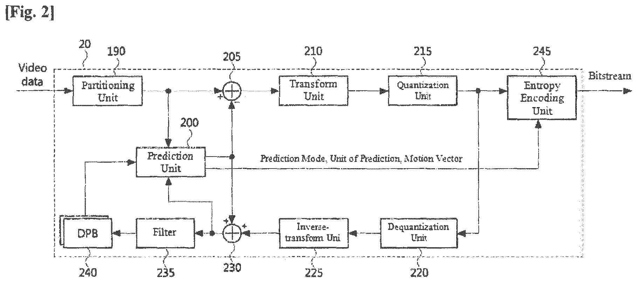

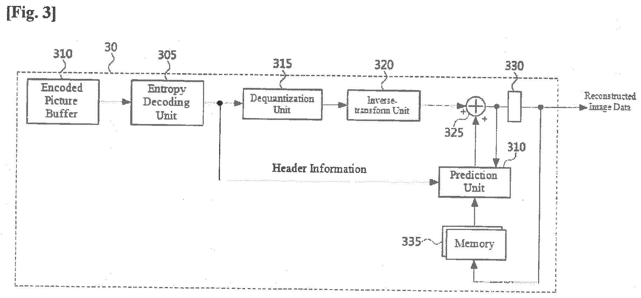

FIG. 2 is a block diagram of the image encoding device according to an embodiment of the present invention. FIG. 3 is a block diagram of the image decoding device according to an embodiment of the present invention.

An image encoding device 20 according to an embodiment, as shown in FIG. 2, may include a prediction unit 200, a subtractor 205, a transform unit 210, a quantization unit 215, a dequantization unit 220, a inverse-transform unit 225, an adder 230, a filtering unit 235, a decoded picture buffer (DPB) 240, and an entropy encoding unit 245. In addition, the image encoding device 20 may further include a partition unit 190.

In addition, an image decoding device 30 according to an embodiment, as shown in FIG. 3, may include an entropy decoding unit 305, a prediction unit 310, a dequantization unit 315, a inverse-transform unit 320, an adder 325, a filtering unit 330, and a decoded picture buffer 335.

The above image encoding device 20 and the image decoding device 30 may be independent devices. However, according to an implementation, a single image encoding and decoding device may be formed. Herein, the prediction unit 200, the dequantization unit 220, the inverse-transform unit 225, the adder 230, the filtering unit 235, and the decoded picture buffer 240 of the image encoding device 20 may be respectively and substantially identical to the prediction unit 310, the dequantization unit 315, the inverse-transform unit 320, the adder 325, the filtering unit330, and the memory 335 of the image decoding device 30, thus structures thereof are identical or may be implemented to perform identical functions. In addition, the entropy encoding unit 245 may correspond to the entropy decoding unit 305 by reversely performing functions thereof. Accordingly, in the following detailed description of technical elements and their operating principles, overlapped descriptions of the corresponding technical elements will be omitted.

In addition, the image decoding device corresponds to a computing device in which an image encoding method performed by the image encoding device is applied to an image decoding method, thus in the following description, the image encoding device will be mainly described.

The computing device may include a memory storing a program or a software module for implementing the image encoding method or the image decoding method or both, and a processor performing the program in association with the memory. In addition, the image encoding device may be called an encoder, and image decoding device may be called a decoder.

Each configuration element of the image encoding device of the present embodiment will be described in detail.

The partition unit 190 may divide an input image into a block having a predetermined size (M×N). Herein, M or N is an arbitrary natural number equal to or greater than 1.

In detail, the partition unit 190 may be configured with a picture partition unit and a block partition unit. A size of form of the block may be determined according to a characteristic and a resolution of an image. A size or form of a block supported by the picture partition unit may be an MxN square form represented by the exponential power of 2 in horizontal and vertical lengths (256x256, 128x128, 64x64, 32x32, 16×16, 8x8, 4x4, etc.) or may be an MxN rectangle form. For example, in case of an 8k UHD image with a high resolution, the input image may be divided into a 256x256 block size, in case of a HD image, the input image may be divided into a 128x128 block size, and in case of a WVGA image, the input image may be divided into a 16x16 block size.

Information of the block size or form may be set in a sequence unit, a picture unit, a slice unit, etc. In addition, information for the same may be transmitted to the decoder. In other words, the information may be set in a sequence parameter set, a picture parameter set, a slice header, or a combination unit thereof.

Herein, the sequence may be a unit configured with a number of scenes. In addition, the picture is a term indicating a luma components (Y) or both luma and chroma components (Y, Cb, and Cr) in a single scene or picture, a single frame or a single filed may be a range of a single picture according to circumstances.

The slice may refer to a single independent slice segment or a plurality of dependent slice segments present in an identical access unit. The access unit means a set of network abstraction layer (NAL) units, and the network abstraction layer is related to a single coded picture. The NAL unit is a video compressed bitstream that is configured in a network friendly syntax structure in a H.264/AVC and HEVC standard. Generally, a single slice unit is configured with a single NAL unit. In the system standard, a NAL unit or NAL set which constitute a single frame is considered as a single access unit.

Describing again the picture partition unit, information of a block size or form (MxN) may be configured with an explicit flag. In detail, the explicit flag may include block form information, length information when the block is a square, or each length or a difference between horizontal and vertical lengths when the block is a rectangle.

For example, when M and N are configured of exponential power of k (assuming that k is 2) (M=2m, N=2n), information of m and n may be encoded by using various methods such as a unary binarization method, a truncated unary binarization method, etc. and transmitted to the decoder.

In addition, when a minimum division available size (Minblksize) supported by the picture partition unit is I×J (Assuming I = J for convenience of explanation. When I is 2i, and J is 2j), information of m-i or n-j may be transmitted. As another example, when M and N are different, a difference value between m and n (|m-n|) may be transmitted. In addition, when a maximum division available size (Maxblksize) supported by the picture partition unit is I×J (Assuming I = J for convenience of explanation. When I is 2i, and J is 2j), information of i-m or n-j may be transmitted.

In an implicated case, for example, when a syntax for related information is present but is not checked in the encoder/decoder, the encoder or the decoder may follow a basic preset setting. For example, when a related syntax is not checked while checking block form information, a block form may be set to a square form that is a basic set.

In addition, when checking block size information, in more detail, checking block size information by using a difference value from the minimum division available size (Minblksize) as the above example, a syntax related to the difference value may be checked. However, when it is not possible to check the syntax related to the difference value, it may be obtained from a preset basic setting value related to the minimum division available size (Minblksize).

Accordingly, a block size or form of the picture partition unit may be explicitly transmitted from the encoder or decoder or both by using related information, or may be implicitly determined according to a characteristic and a resolution of an image.

The block divided and determined by the picture partition unit as above may be used as a basic coding unit. In addition, the block divided and determined by the picture partition unit may be a minimum unit constituting a higher level unit such as picture, slice, tile, etc., or may be a maximum unit such as coding block, prediction block, transform block, quantization block, entropy block, inloopfiltering block, etc. However, some blocks are not limited thereto, and exceptions are possible. For example, the inloopfiltering block may be applied to a unit greater than the above described block size.

The block partition unit performs division of a coding block, a prediction block, a transform block, a quantization block, an entropy block, an inloopfiltering block, etc. The partition unit 190 may perform its function by being included in each configuration. For example, the transform unit 210 may include a transform block partition unit, and the quantization unit 215 may include a quantization block partition unit. An initial block size or form of the block partition unit may be determined by a previous step or by a division result of a higher level block.

For example, in case of a coding block, a block obtained by the picture partition unit that is a previous process may be set to an initial block. Alternatively, in case of a prediction block, a block obtained by dividing a coding block that is a higher level than the prediction block may be set to an initial block. Alternatively, in case of a transform block, a block obtained by dividing a coding block that is a higher level than the transform block may be set to an initial block.

A condition of determining a size or form of an initial block is not fixed, and there may be cases where some are changed or excluded. In addition, according to at least one combination of a division state of a previous process or a higher level block (for example, a size of a coding block, a form of a coding block) and a setting condition of a current level (for example, a supported size or form of a transform block), the division operation of the current level (whether or not division is possible, a block form that may be divided, etc.) may be affected.

The block partition unit may support a division method based on a quad tree. In other words, a block may be divided into four blocks having vertical and horizontal lengths being 1/2 of an original block. This means that division may be repeatedly performed up to a division available depth limit (dep_k, k means a number of available division times, a block size is (M >> k, N >> k) when a block has the division available depth limit (dep_k)).

In addition, a division method based on a binary tree may be supported. This means that a block may be divided into two blocks in which at least one of a horizontal length or a vertical length is 1/2 of an original block. The quad-tree division and the binary-tree division may be symmetric division or asymmetric division. Which division is used may be determined according to setting of the encoder/decoder. In the image encoding method according to the present embodiment is mainly described with symmetric dividing.

Whether or not to divide each block may be represented by using a division flag (div_flag). When the corresponding value is 1, division is performed, and when the corresponding value is 0, division is not performed. Alternatively, when the corresponding value is 1, division is performed and additional division is available, and when the corresponding value is 0, division is not performed and additional division is not available. The above flag may consider whether or not to perform division by using a condition of a minimum division available size, a division available depth limit, etc., and may not consider whether or not to additionally perform division.

The division flag may be used for quad-tree division, and also may be used for binary-tree division. In binary-tree division, a division direction may be determined according to at least one of a division depth, a coding mode, a prediction mode, a size, a form, a type (may be one of a coding type, a prediction type, a transform type, a quantization type, an entropy type, or an inloop filter, or may be one of a luma type or a chroma type), a slice type, a division available depth limit, and a minimum/maximum division available size of a block, or according to a combination thereof. In addition, according to the division flag or a corresponding division direction or both, in other words, the block may be divided by 1/2 in width or divided by 1/2 in length.

For example, it is assumed that when a block has a MxN (M>N)size and M is greater than N so that division in length is supported, and a current division depth (dep_curr) is smaller than a division available depth limit so that additional division is available, 1-bit is assigned to the above division flag. When the corresponding value is 1, division is performed, otherwise, no more division is available.

A single division depth may be used for both quad-tree division and binary-tree division, or a respective division depth may be used for quad tree division and binary-tree division. In addition, a single division available depth limit may be used for both quad-tree division and binary-tree division, or respective division available depth limits may be used for quad-tree division and binary-tree division.

As another example, when a block has a M×N (M>N) size and N is equal to a preset minimum division available size so that horizontal division is not supported, 1-bit is assigned to the above division flag. When the corresponding value is 1, vertical division is performed, otherwise, division is not performed.

In addition, respective flags (div_h_flag and div_h_flag) may be supported for horizontal division and vertical division. Binary division may be supported according to the above flag. Whether to perform horizontal or vertical division for each block may be represented by a horizontal division flag (div_h_flag) or a vertical division flag (div_v_flag), when the horizontal division flag (div_h_flag) or the vertical division flag (div_v_flag) is 1, horizontal or vertical division is performed, otherwise, horizontal or vertical division is not performed.

In addition, when each flag is 1, horizontal or vertical division is performed and additional horizontal or vertical division is available, and when each flag is 0, horizontal or vertical division is not performed, and no more additional horizontal or vertical division is available. The flag may consider whether or not to perform division by using a condition of a minimum division available size, a division available depth limit, etc., and may not consider whether or not to perform additional division.

In addition, flags (div_flag/h_v_flag) for horizontal division or vertical division may be supported, and binary division may be supported according to the above flag. The division flag (div_flag) may represent whether or not to perform horizontal or vertical division, and the flag (h_v_flag) may represent whether division is performed in a horizontal direction or in a vertical direction. When the division flag (div_flag) is 1, division is performed, and horizontal or vertical division is performed according to the division direction flag (h_v_flag). When the division flag (div_flag) is 0, horizontal or vertical division is not performed.

In addition, when the corresponding value is 1, horizontal or vertical division is performed and additional horizontal or vertical division is available according to the division direction flag (h_v_flag). When the corresponding value is 0, horizontal or vertical division is not performed, and no more horizontal or vertical division is available. The above flag may consider whether or not to perform division by using a condition of a minimum division available size, a division available depth limit, etc., and may not consider whether or not to perform additional division.

Such a division flag may be used for each of horizontal and vertical divisions, and binary-tree division may be supported according to the above flag. In addition, when a division direction is pre-determined, one of the two division flags may be used as the above example, or both two division flags may be used.

For example, when all of the above flags are used, a block may be divided in any form of M×N, M/2×N, M×N/2, and M/2×N/2. Herein, the flag may be encoded in an order of a horizontal division flag or a vertical division flag (div_h_flag/div_v_flag), as 00, 10, 01, and 11.

The above case is an example in which a division flag is set to be used by being overlapped, and the division flag may be set not to be used by being overlapped. For example, a block may be divided in a form of M×N, M/2×N, and M×N/2. Herein, the above flag may be encoded in an order of horizontal or vertical division flag as 00, 01, and 10. Alternatively, the above flag may be encoded in an order of the division flag (div_flag) and the horizontal-vertical flag (h_v_flag) (flag representing whether division is in a horizontal direction or a vertical direction) as 00, 10, and 11. Herein, the flag being overlapped may mean that horizontal division and vertical division are performed at the same time.

Any one of quad-tree division and binary-tree division which are described as above may be used in the encoder or the decoder or both according to settings thereof, or may be used in combination. For example, according to a block size or form, quad-tree division or binary tree may be determined. In other words, when a block form is M×N and M is greater than N so that horizontal division is performed, and when the block form is M×N and N is greater than M so that vertical division is performed, binary-tree division may be supported. Alternatively, when the block form is MxN and N is equal to M, quad-tree division may be supported.

As another example, when an M×M block size is equal to or greater than a block division boundary value (thrblksize), binary-tree division may be supported, otherwise, quad-tree division may be supported.

As another example, when M or N of an M×N block is equal to or smaller than a first maximum division available size (Maxblksize1) and is equal to or greater than a first minimum division available size (Minblksize1), quad-tree division may be supported. When M or N of the M×N block is equal to or smaller than a second maximum division available size (Maxblksize2) and is equal to or greater than a second minimum division available size (Minblksize2), binary-tree division may be supported.

When a first division support range and a second division support range which are defined as the maximum division available size and the minimum division available size overlap with each other, an order of priority among the first and second division may be assigned according to setting of the encoder and the decoder. In the present embodiment, first division may be quad-tree division and second division may be binary-tree division.

For example, when a first minimum division available size (Minblksize1) is 16, a second maximum division available size (Maxblksize2) is 64, and a block has a 64x64 size before being divided, both quad-tree division and binary-tree division are available since the block belongs to both first division support range and second division support range. When a higher priority is assigned to first division (quad-tree division in the present embodiment) according to a preset setting, and a division flag (div_flag) is 1, quad-tree division is performed and additional quad-tree division is available. When the division flag (div_flag) is 0, quad-tree division is not performed and no more quad-tree division is performed.

The above flag may consider whether or not to perform division by using a condition of a minimum division available size, a division available depth limit, etc., and may not consider whether or not to perform additional division. When the division flag (div_flag) is 1, a block having a 32×32 size is divided into four blocks since the size is greater than the first minimum division available size (Minblksize1), thus quad-tree division may be continuously performed. When the division flag (div_flag) is 0, additional quad-tree division is not performed, and binary-tree division may be performed since a current block size 64×64 belongs to the second division support range.

When division flags (in an order of div_flag/h_v_flag) are 0, no more division is performed. When the flag is 10 or 11, horizontal division or vertical division may be performed. When a block has a 32×32 size before being divided and a division flag (div_flag) is 0 so that no more quad-tree division is performed, and a second maximum division available size (Maxblksize2) is 16, no more division may be supported since the current block size 32x32 does not belong to the second division support range.

In the above description, the order of priority of division methods may be determined according to at least one of a slice type, a coding mode, and a luma/chroma component, or according to a combination thereof.

As another example, various settings may be supported according to luma and chroma components. For example, a structure of quad tree or binary-tree division determined in a luma component may be used in a chroma component as it is without encoding/decoding additional information. Alternatively, when independent divisions for a luma component and a chroma component are supported, both quad-tree and binary-tree division may be supported for the luma component, and quad-tree division may be supported for the chroma component.

In addition, both quad-tree division and binary-tree division may be supported for luma and chroma components, and division support ranges may be or may not be identically or proportionally set for the luma and chroma components. For example, when a color format is 4:2:0, a division support range of the chroma component may be N/2 of a division support range of the luma component.

As another example, different settings may be set according to a slice type. For example, in an I-slice, quad-tree division may be supported, in a P-slice, binary-tree division may be supported, and in a B-slice, both quad-tree division and binary-tree division may be supported.

Quad-tree division and binary-tree division may be set and supported according to various conditions as in the above example. The above examples are not specific to the above-mentioned case, but may include cases where the conditions of each other are reversed. Alternatively, at least one condition of the above described examples, or a combination thereof may be included. Alternatively, in other cases, modifications are also available. The above division available depth limit may be determined according to at least one of a division method (quad-tree division, binary-tree division), a slice type, a luma/chroma component, and a coding mode, or according to a combination thereof.

In addition, the division support range may be determined according to at least one of a division method (quad-tree division, binary-tree division), a slice type, a luma/chroma component, and a coding mode, or according to a combination thereof. Information for the same may be represented by using a maximum value and a minimum value of a division support range. When the information is configured with an explicit flag, the flag may represent length information of the respective maximum value and minimum value, or information of a difference value between the minimum value and the maximum value.

For example, when the maximum value and the minimum value are configured with an exponential power of k (herein, assuming that k is 2), exponential information of the maximum value and the minimum value may be transmitted to the decoding device by encoding exponential information by using various binarization methods. Alternatively, an exponential difference value of the maximum value and the minimum value may be transmitted. Herein, the transmitted information may be exponential information of the minimum value and information of the exponential difference value.

According to the above description, information related to the flag may be generated in and transmitted in a sequence unit, a picture unit, a slice unit, a tile unit, a block unit, etc.

Block division information may be represented by using the division flags described in the above example or by using a combination of both quad-tree and binary-tree division flags. The division flag may be transmitted to the decoding device by encoding information for the same by using various methods such as unary binarization method, truncated unary binarization method, etc. A bitstream structure of the division flag for representing the division information of the block may be selected from at least one scanning method.

For example, the division flags may be configured in a bitstream based on a division depth order (from dep0 to dep_k), or the division flags may be configured in a bitstream based on whether or not to perform division. The method based on the division depth order is method of obtaining division information in a current depth level based on an initial block and obtaining division information in a next level depth, and the method based on whether or not to perform division is a method of preferentially obtaining additional division information in a divided block based on an initial block. Other scanning methods not described in the above examples may be included and selected.

In addition, according to an implementation, the block partition unit may, rather than the described division flag, generate index information of a block candidate group having a pre-defined form, and represent the generated index information. The form of the block candidate group may be, for example, a form that a block may have before being divided, and include a form of M×N, M/2×N, M×N/2, M/4×N, 3M/4×N, M×N/4, M×3N/4, and M/2×N/2.

When the candidate group of the division block is determined as described above, index information of the division block form may be encoded by using various methods such as fixed length binarization method, unary truncated binarization method, truncated binarization method, etc. As the division flag described above, the division block candidate group may be determined according to at least one of a division depth, a coding mode, a prediction mode, a size, a form, a type, and a slice type of a block, a division available depth limit, and a minimum/maximum size division available, or according to a combination thereof.

For the next description, it is assumed that a first candidate list (list1) is (M×N, M×N/2), a second candidate list (list2) is (M×N, M/2×N, M×N/2, M/2×N/2), a third candidate list (list3) is (M×N, M/2×N, M×N/2), and a fourth candidate list (list4) is (M×N, M/2×N, M×N/2, M/4×N, 3M/4×N, M×N/4, M×3N/4, M/2×N/2). For example, describing based on M×N, when M=N, a division block candidate of the second candidate list may be supported, when M≠N, a division block candidate of the third candidate list may be supported.

As another example, when M or N of MxN is equal to or greater than a boundary value (blk_th), a division block candidate of the second candidate list may be supported, otherwise, a division block candidate of the fourth candidate list may be supported. In addition, when M or N is equal to or greater than a first boundary value (blk_th_1), a division block candidate of the first candidate list may be supported. When M or N is smaller than the first boundary value (blk_th_1) but equal to or greater than a second boundary value (blk_th_2), a division block candidate of the second candidate list may be supported. When M or N is smaller than the second boundary value (blk_th_2), a division block candidate of the fourth candidate list may be supported.

As another example, when an encoding mode is intra-prediction, a division block candidate of the second candidate list may be supported, and when the encoding mode is inter-prediction, a division block candidate of the fourth candidate list may be supported.

Although the division block candidate described above is supported, a bit configuration may be identical or different according to a binarization method of each block. For example, as the division flag described above, when a support of a division block candidate is limited according to a block size or form, a bit configuration may vary according to a binarization method of a corresponding block candidate. For example, when M>N, a block form according to horizontal division, in other words, MxN, MxN/2, M/2xN/2 may be supported, and binary bits of indexes in MxN/2 of a division block candidate group (MxN, M/2xN, MxN/2, M/2xN/2), and in an MxN/2 according to a current condition may be different from each other.

Information of a block division and a block form may be represented by using one of a division flag and a division index method according to a block type, for example, which is used in a coding block, a prediction block, a transform block, a quantization block, an entropy block, an inloopfiltering block, etc. In addition, a block size restriction and a division available depth limit for supporting division and a block form may vary according to each block type.

After determining a coding block, encoding and decoding of a block unit may be performed according to a process of determining a prediction block, determining a transform block, determining a quantization block, determining an entropy block, determining an inloop filter, etc. The order of the above encoding and decoding processes is not fixed, and some sequences may be changed or excluded. A size and a form of each block may be determined according to an encoding cost for each candidate size and form of the block, and image data of each determined block and division information such as the determined size and form of each determined block may be encoded.

The prediction unit 200 may be implemented by using a prediction module that is a software module, or may generate a prediction block of a block to be encoded by using an intra-prediction method or an inter-prediction method. Herein, the prediction block is a block that closely matches with the block to be encoded in terms of pixel difference, and may be determined by using various methods including SAD (sum of absolute difference), and SSD (sum of square difference). In addition, herein, various syntaxes that may be used when decoding image blocks may be generated. The prediction block may be classified into an intra block and an inter block according to an encoding mode.

Intra-prediction is a prediction method using a spatial correlation, and refers to a method of predicting a current block by using reference pixels of reconstructed blocks that are previously encoded or decoded. In other words, luminance values which are reconfigured through intra-prediction and reconstruction are used as reference pixels in the encoder and the decoder. Intra-prediction may be effective for a planar area having continuity and for an area having a pre-determined direction, since intra-prediction uses a spatial correlation, random access is ensured, and intra-prediction may be used for preventing error diffusion.

Inter-prediction refers to a compression method of removing overlapped data using a temporal correlation by referencing at least one image that is previously encoded or may be encoded in a future picture. In other words, inter-prediction may generate a prediction signal with high similarity by referencing at least one of a previous or following picture. The encoder using inter-prediction may search a block having high correlation with a block that is currently encoded in a reference picture, and transmit position information and a residue signal of the selected block to the decoder. The decoder may generate a prediction block identical to the image of the encoder by using selected information of the transmitted image, and configure a reconstructed image by compensating the transmitted residue signal.

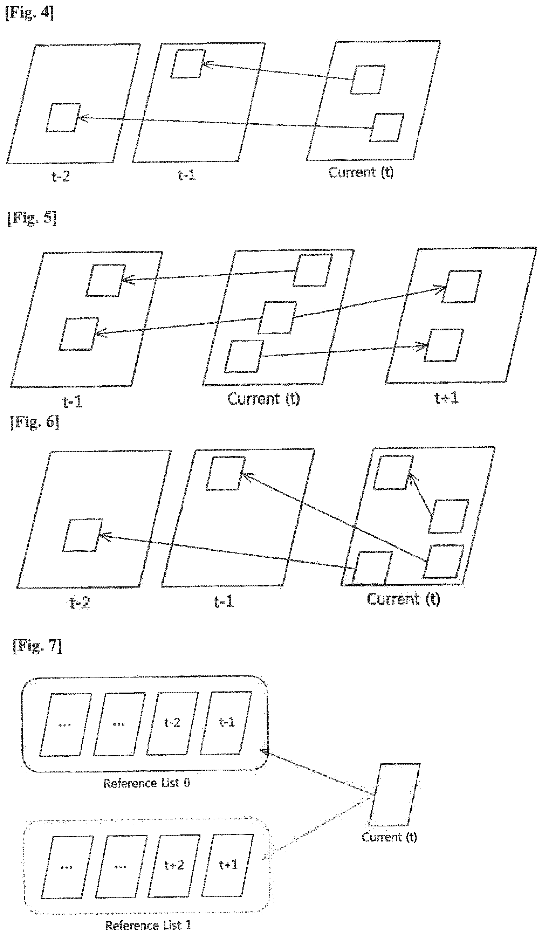

FIG. 4 is an example view showing inter-prediction of a P-slice in the image encoding and decoding method according to an embodiment of the present invention. FIG. 5 is an example view showing inter-prediction of a B-slice in the image encoding and decoding method according to an embodiment of the present invention.

In the image encoding method of the present embodiment, encoding efficiency may be increased since inter-prediction generates a prediction block from a picture having high temporal correlation and which is previously encoded. A current (t) may refer to a current picture to be encoded, and based on a temporal flow or a POC (picture order count) of an image picture, include a first reference picture having a first temporal distance (t-1) that is before than the POC of the current picture, and a second reference picture having a second temporal distance (t-2) that is before than the first temporal distance.

In other words, as shown in FIG. 4, inter-prediction that may be used in the image encoding method of the present embodiment may perform motion estimation that finds an optimized prediction block with a high correlation from reference pictures (t-1, and t-2) which have been already encoded by performing block matching between reference blocks of the reference pictures (t-1 and t-2) and a current block of the current picture (current (t)). For precise estimation according to the need, a final prediction block may be found by finding an optimized prediction block through interpolation based on a structure in which at least one sub-pixel is disposed between two pixels, and by motion compensating the optimized prediction block.

In addition, as shown in FIG. 5, inter-prediction that may be used in the image encoding method of the present embodiment may generate a prediction block from reference pictures (t-1 and t+1) which have been already encoded and temporally present at both directions based on the current picture (current(t)). In addition, two prediction blocks may be generated from one reference picture.

When an image is encoded through inter-prediction, information of a motion vector for an optimized prediction block and information of a reference picture may be encoded. In the present embodiment, when a prediction block is generated in one direction or two directions, a prediction block may be generated from a corresponding reference picture list by differently configuring a reference picture list. In general, a reference picture temporally present before a current picture may be managed by being assigned to a list 0 (L0), and a reference picture temporally present after the current picture may be managed by being assigned to a list 1 (L1).

When configuring a reference picture list 0 and a number of available reference pictures is not padded, a reference picture present after a current picture may be assigned. Similarly, when configuring a reference picture list 1 and a number of available reference pictures is not padded, a reference picture present after the current picture may be assigned.

FIG. 6 is an example view for illustrating generating of a prediction block in one direction in the image encoding and decoding method according to an embodiment of the present invention.

Referring to FIG. 6, the image encoding and decoding method according to the present embodiment may conventionally find a prediction block from encoded reference pictures (t-1 and t-2), in addition to this, may find a prediction block from an area that has been already encoded within a current picture (current(t)).

In other words, the image encoding and decoding method according to the present embodiment may be implemented to generate a prediction block from pictures (t-1 and t-2) which are previously encoded and which are have temporally high correlation, and also to find a prediction block having spatially high correlation. Finding such a prediction block having spatially high correlation may correspond to finding a prediction block by using an intra-prediction method. In order to perform block matching from an area that has been already encoded in the current picture, the image encoding method of the present embodiment may configure a syntax for information related to a prediction candidate by combining with an intra-prediction mode.

For example, when n (n is an arbitrary natural number) intra-prediction modes are supported, an intra-prediction mode may be encoded by using M bits that supports n+1 modes by adding one mode to an intra-prediction candidate group, and satisfies 2M-1≤n+1<2M. In addition, it may be implemented to select from a candidate group of a prediction mode with high possibility such as a most probable mode (MPM) of HEVC. In addition, it may be also possible to preferentially encode a process higher than encoding of a prediction mode.

When a prediction block is generated by performing block matching in a current picture, the image encoding method may configure a syntax of related information by combining with an inter-prediction mode. As additional related prediction mode information, information related to motion or displacement may be used. The information related to motion or displacement may include information of an optimized vector candidate among a plurality of vector candidates, a difference value between an optimized vector candidate and an actual vector, a reference direction, reference picture information, etc.

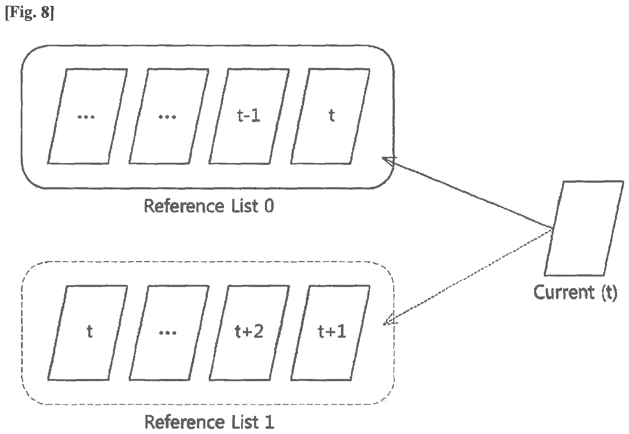

FIG. 7 is an example view of configuring a reference picture list in the image encoding and decoding method according to an embodiment of the present invention. FIG. 8 is another example view of performing inter-prediction from a reference picture list in the image encoding and decoding method according to an embodiment of the present invention.

Referring to FIG. 7, the image encoding method according to a present embodiment may perform inter-prediction for a current block of a current picture (current(t)) from a first reference picture list (reference list 0, L0) and a second reference picture list (reference list 1, L1)

Referring to FIG. 7 and FIG. 8, the reference picture list 0 may be configured with a reference picture before the current picture (t), and t-1 and t-2 indicate reference pictures having a first temporal distance (t-1) and a second temporal distance (t-2) which have POCs before than a POC of the current picture (t). In addition, the reference picture list 1 may be configured with a reference picture after the current picture (t), and t+1 and t+2 indicate reference pictures which have POCs after a POC of the current picture (t).

The above examples of configuring a reference picture list are described with an example of configuring a reference picture list with reference pictures having temporal distances by 1 (based on POC in the present example). However, it may be configured with reference pictures having different temporal distances. In other words, it means that index differences between reference pictures and temporal distance differences between reference pictures may not be proportional. In addition, a list configuration order may not be configured based on a temporal distance. A description of the above feature will be confirmed with an example of configuring a reference picture list that will be described later.

According to a slice type (I, P or B), prediction may be performed from a reference picture present in a list. In addition, when a prediction block is generated by performing block matching in a current picture (current (t)), encoding may be performed by using an inter-prediction method by adding the current picture to a reference picture list (reference list 0 or reference list 1 or both).

As shown in FIG. 8, a current picture (t) may be added to a reference picture list 0 (reference list 0), or the current picture (current (t)) may be added to a reference picture list 1 (reference list 1). In other words, the reference picture list 0 may be configured by adding a reference picture having a temporal distance (t) that is before the current picture (t) to a reference picture. Then, the reference picture list 1 may be configured by adding a reference picture having a temporal distance (t) that is after the current picture (t) to the reference picture.

For example, when configuring the reference picture list 0, a reference picture before the current picture may be assigned to the reference picture list 0, and then the current picture (t) is assigned. When configuring the reference picture list 1, a reference picture after the current picture may be assigned to the reference picture list 1, and then the current picture (t) may be assigned. Alternatively, when configuring the reference picture list 0, the current picture (t) may be assigned and then the reference picture before the current picture may be assigned, and when configuring the reference picture list 1, the current picture (t) may be assigned and then the reference picture after the current picture may be assigned.

In addition, when configuring the reference picture list 0, the reference picture before the current picture may be assigned, the reference picture after the current picture may be assigned, and then the current picture (t) may be assigned. Similarly, when configuring the reference picture list 1, the reference picture after the current picture may be assigned, the reference picture before the current picture may be assigned, and then the current picture (t) may be assigned. The above examples are not limited to the above case, but may include cases where the conditions of each other are reversed. Examples of other cases are also possible.

Whether or not to include the current picture in each reference picture list (for example, not adding to any list, adding to the list 0, adding to the list 1, or adding to both lists 0 and 1) may be identically set in the encoder/decoder, and information of this may be transmitted in a sequence unit, a picture unit, a slice unit, etc. Information for the same may be encoded by using methods such as fixed length binarization method, unary truncated binarization method, truncated binarization method, etc.

In the image encoding and decoding method of the present embodiment, different to the method of FIG. 7, a prediction block is selected by performing block matching in a current picture (t), a reference picture list including information of the selected prediction block is configured, and the reference picture list is used for encoding and decoding an image.

When configuring a reference picture list, an order and rule, a number of available reference pictures for each list may be differently set. The above feature may be determined according to at least one of whether or not to include a current picture in a list (whether or not to include the current picture as a reference picture in inter-prediction), a slice type, a list reconfiguration parameter (may be applied to each of lists 0 and 1, may be applied to both lists 0 and 1), a position within a group of picture (GOP), and temporal layer information (temporal id), or according to a combination thereof. Information for the same may be explicitly transmitted in a sequence unit, a picture unit, etc.

For example, in case of a P-slice, a reference picture list 0 may follow a list configuration rule A regardless of whether a current picture is included in the list. In case of a B-slice, a reference picture list 0 in the current picture may follow a list configuration rule C, and a reference picture list 1 may follow a list configuration rule C, a reference picture list 0 that does not includes the current picture may follow a list configuration rule D, and the reference picture list 1 may follow a list configuration rule E. Among the rules, the rules B and D may be identical from each other, and the rules C and E may be identical from each other. The list configuration rule may be configured in the same or modified manner as described in the above described reference picture list configuration example.

As another example, when a current picture is included in a list, a first number of available reference pictures may be set, or when the current picture is not included in the list, a second number of available reference pictures may be set. The first number of available reference pictures and the second number of available reference pictures may be identical or different. Fundamentally, a difference between the first number of available reference pictures and the second number of available reference pictures may be set to 1.

As another example, when a current picture is included in a list and a list reconfiguration parameter is applied, all reference pictures may be included in a list reconfiguration candidate group in a slice A, and a part of reference pictures may be included in a list reconfiguration candidate group in a slice B. Herein, the slice A or B may be distinguished by whether or not the current picture is included in the list, temporal layer information, and a position within a GOP. Whether or not to include in a candidate group may be determined by a POC of a reference picture or an index of the reference picture, a reference prediction direction (before/after the current picture), and whether or not the current picture is in the list.

According to the above described configuration, when performing motion prediction of an I-slice, inter-prediction may be available or used since a reference block encoded through inter-prediction in a current picture may be used.

In addition, when configuring a reference picture list, an index assignment or a list configuration order may vary according to a slice type. In case of an I-slice, a smaller index (for example, such as idx=0, 1, 2) may be used by increasing a priority of a current picture (current (t)) as the example of the reference picture list configuration. In addition, a bit amount used when encoding an image may be reduced by using a binarization method (fixed length binarization method, unary truncated binarization method, truncated binarization method, etc.) which uses a number of available reference pictures of a corresponding reference picture list as a maximum value.

In addition, in case of a P or B-slice, when a probability to select a reference picture of a current block as a prediction candidate by performing block matching in a current picture is determined to be lower than a probability to select the prediction candidate by using other reference picture, by decreasing the priority of performing block matching in the current picture and using a higher index (for example, such as idx= C, C-1), a bit amount when encoding an image may be reduced by using various binarization methods which use a number of available reference pictures of a corresponding reference picture list as a maximum value.

In the above examples, setting of a priority of a current picture may be configured in the same or modified method as that described in the example of the reference picture list configuration. In addition, according to a slice type (for example, I-slice), information of a reference picture may be omitted by not configuring a reference picture list. For example, a prediction block may be generated by using conventional inter-prediction, but inter prediction information may be represented by motion information in an inter-prediction mode from which reference picture information is excluded.

Whether or not a method of performing block matching in a current picture is supported may be determined according to a slice type. For example, the method may be set to support block matching in a current block in an I-slice, but not to support in a P-slice or a B-slice. Modifications to other examples are also possible.

In addition, whether or not to support a method of performing block matching in a current picture may be determined in a picture unit, a slice unit, a tile unit, etc. or may be determined according to a position within a GOP, temporal layer information (temporal ID), etc. The setting information may be transmitted while encoding or may be transmitted from the encoder to the decoder in a sequence unit, a picture unit, a slice unit, etc.

In addition, although setting information related to the above or a syntax is present in a higher level unit and operations related to the setting is turned on, and setting information or a syntax which is identical to the above is present in a lower level unit, the setting information of the lower level unit may have a priority higher than the setting information of the higher level unit. For example, when identical or similar setting information is processed in a sequence unit, a picture unit, and a slice unit, the picture unit may have a priority higher than a priority of the sequence unit, and the slice unit may have a priority higher than the priority of the picture unit.

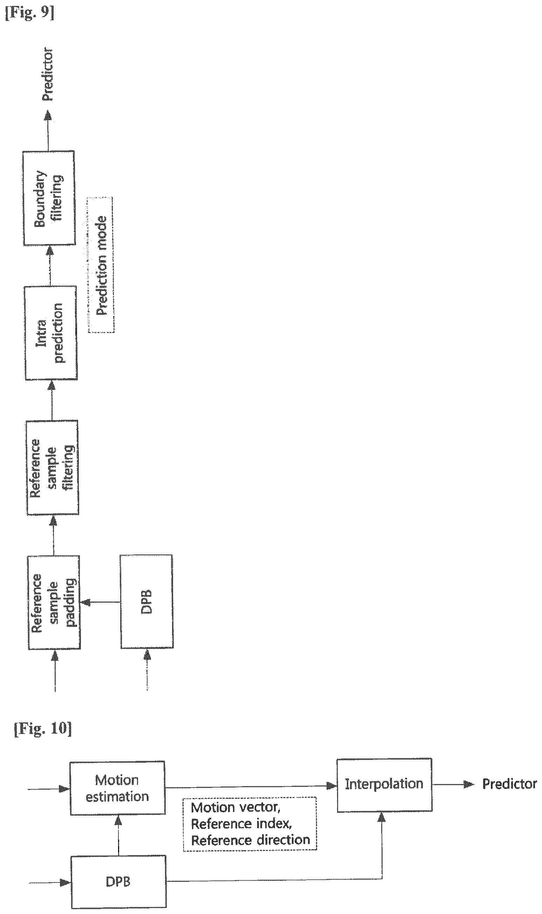

FIG. 9 is an example view for illustrating intra-prediction in the image encoding method according to an embodiment of the present invention.

Referring to FIG. 9, an intra-prediction method according to the present embodiment may include a series of steps of reference sample padding, reference sample filtering, intra-prediction, and boundary filtering.

Reference pixel padding may be an example of a reference pixel configuration, reference pixel filtering may be performed by a reference pixel filtering unit, intra-prediction may include generating a prediction block and encoding a prediction mode, and boundary filtering may be an example of post-process filtering.

In other words, intra-prediction performed in the image encoding method of the present embodiment may include configuring a reference pixel, filtering the reference pixel, generating a prediction block, encoding a prediction mode, and post-process filtering. One or part of the above steps may be omitted according to, for example, a block size, a block form, a block position, a prediction mode, a prediction method, a quantization parameter, etc. Alternatively, other steps may be added, or the steps may be changed in an order different from the order described above.

Configuring a reference pixel, filtering a reference pixel, generating a prediction block, encoding a prediction mode, and post-process filtering which are described above may be implemented in a form that is executed by a processor connected to a memory storing software modules. Accordingly, in the following description, for convenience of description, as a function unit or a configuration unit performing functions thereof or both which is generated by a combination of a software module implementing each step and a processor performing the same, each of a reference pixel configuration unit, reference pixel filtering unit, prediction block generating unit, a prediction mode encoding unit, and a post-process filtering unit is called an execution unit of each step.

Describing each configuration in more detail, the reference pixel configuration unit configures a reference pixel that will be used for predicting a current block by performing reference pixel padding. When a reference pixel is not present or is not available to use, reference pixel padding may be used for padding the reference pixel by copying a pixel value of a pixel closest to an available pixel. A reconstructed picture buffer or decoded picture buffer (DPB) may be used when copying the pixel value.

In other words, intra-prediction performs prediction by using a reference pixel of blocks that have been encoded before a current picture. For this, in the configuring of the reference pixel, as a reference pixel, neighbor pixels of a neighbor block of the current block, in other words, left, left upper, left lower, upper, and right upper blocks may be mainly used.

However, a candidate group of a neighbor block for the reference pixel is an example obtained according to raster scanning or z-scanning an encoding order of the block. When the candidate group of the neighbor block is obtained according to an encoding order scanning method such as inverse z-scanning, in addition to the above blocks, neighbor pixels of right, right lower, and lower blocks may be used as a reference pixel.

In addition, according to an implementation, according to a configuration of each step of intra-prediction, in addition to the neighbor pixels, additional pixels may be replaced, or may be used in combination with a conventional reference pixel.

In addition, when prediction is performed by a directional mode among intra-prediction modes, a reference pixel may be generated by using a reference pixel of an integer unit by performing linear interpolation. The mode performing prediction by using a reference pixel present at a position of an integer unit includes several modes such as vertical direction, horizontal direction, 45 degrees, and 135 degrees. For the above prediction modes, generating a reference pixel of a real number may not be necessary.

A reference pixel that is interpolated in prediction modes having other direction except for the above prediction mode may have an interpolation precision of exponential power of 1/2 such as 1/2, 1/4, 1/8, 1/16, 1/32, and 1/64, or may have a precision of a multiple of 1/2.

This is because since an interpolation precision may be determined according to a number of supported prediction modes or a prediction direction of a prediction mode. A constant interpolation precision may be supported for a picture, a slice, a tile, and a block. Alternatively, an adaptive interpolation precision may be supported according to a block size, a block form, a prediction direction of a supported mode, etc. Herein, the prediction direction of the mode may be presented as slope information or angle information of a direction indicated by the mode based on a specific line (for example, positive <+> x axis on the coordinate plane).

As an interpolation method, linear interpolation may be performed by using a neighbor integer pixel. However, other interpolation methods may be supported. For interpolation, at least one filter type and a number of taps may be supported, for example, 6-tap Wiener filter, 8-tap Kalman filter. Which interpolation is performed may be determined according to a block size, a prediction direction, etc. In addition, information for the same may be transmitted in a sequence unit, a picture unit, a slice unit, a block unit, etc.

The reference pixel filtering unit may perform filtering for a reference pixel after configuring the reference pixel so as to reduce degradation generated when encoding and increasing prediction efficiency. The reference pixel filtering unit may implicitly or explicitly determine a filter type and whether or not to apply filtering according to a block size, a block form, and a prediction mode. In other words, when a tap-filter is applied, a filter coefficient may be differently determined according to a filter type. For example, 3-tap filter may be used such as [1,2,1]/4, and [1,6,1]/8.

In addition, the reference pixel filtering unit may determine whether or not to apply filtering by determining whether or not to send an additional bit. For example, in an implicated case, the reference pixel filtering unit may determine whether or not to apply filtering according to a characteristic of pixels in a neighbor reference block (distribution, standard deviation, etc.).

In addition, the reference pixel filtering unit may determine whether or not to apply filtering when a related flag satisfies a preset hiding condition such as residue coefficient, intra-prediction mode, etc. A number of taps may be set, for example, to 3-tap in a small block (blk) such as [1,2,1]/4, and to 5-tap in a large block (blk) such as [2,3,6,3,2]/16. A number of applying times may be determined by whether or not filtering is performed, whether or not filtering is performed one time, whether or not filtering is performed in two times, etc.

In addition, the reference pixel filtering unit may fundamentally apply filtering to a neighbor reference pixel closest to a current block. In addition to the closest neighbor reference pixel, the reference pixel filtering unit may considerer applying filtering to additional reference pixels. For example, when replacing the closest neighbor reference pixel, filtering may be applied to additional reference pixels, or filtering may be applied by combining the closest neighbor reference pixel with the additional reference pixels.

The filtering may be constantly or adaptively applied. This may be determined according to at least one of a size of a current block or a size of a neighbor block, an encoding mode of the current block or neighbor block, block boundary characteristics of the current block and the neighbor block (for example, whether a boundary is a boundary of a coding unit, or is a boundary of a transform unit boundary, etc.), a prediction mode or direction of the current block or neighbor block, a prediction method of the current block or neighbor block, a quantization parameter, or according to a combination thereof.

Determination for the same may be identically set in the encoder/decoder (implicit), or may be determined by considering an encoding cost (explicit). A filter that is fundamentally applied is a low pass filter, and a number of taps, a filter coefficient, whether or not to encode a filter flag, a number of filter applying times, etc. may be determined by the above factors. In addition, information for the same may be set in a sequence unit, a picture unit, a slice unit, and a block unit, and may be transmitted to the decoder.

When performing intra-prediction, the prediction block generating unit may generate a prediction block by using an extrapolation method using a reference pixel, an interpolation method such as using a reference pixel average value (DC mode), and a planar mode, or a method of copying a reference pixel.

In the method of copying the reference pixel, at least one prediction pixel may be generated by copying a single reference pixel, or at least one prediction pixel may be generated by copying at least one reference pixel. A number of copied reference pixels may be equal to or less than a number of copied prediction pixels.

In addition, according to the prediction method, the prediction method may be classified into a directional prediction method and a non-directional prediction method. In detail, the directional prediction method is classified into a liner directional method and a curved directional method. The linear directional method uses an extrapolation method and generates a pixel of a prediction block by using a reference pixel positioned on a prediction directional line. The curved directional method uses an extrapolation method and generates a pixel of a prediction block by using a reference pixel positioned on a prediction directional line. However, a partial prediction direction of a pixel unit may be changed in consideration with a detailed direction (for example, edge) of a block. In the image encoding and decoding method of the present embodiment, a linear directional method is mainly described as a directional prediction mode.

In addition, in the directional prediction method, an interval between adjacent prediction modes may be uniform or non-uniform, and this may be determined according to a block size or form. For example, when a current block is divided into blocks having an MxN size by the block partition unit, and M is equal to N, intervals between prediction modes may be uniform, and when M is not equal to N, intervals between prediction modes may be non-uniform.

As another example, when M is greater than N, in vertical directional modes, a precise interval may be set between prediction modes close to a vertical mode (90 degrees), and a wide interval may be assigned between prediction modes farther from the vertical mode. When N is greater than N, in horizontal directional modes, a precise interval may be set between prediction modes close to a horizontal mode (180 degrees), and a wide interval may be assigned between prediction modes farther from the horizontal mode.

The above examples are not limited to the above case, and may include cases where the conditions of each other are reversed, and examples of other cases may also be modified. Herein, an interval between prediction modes may be calculated based on a numerical value representing a direction of each mode. A direction of a prediction mode may be quantified in slope information or angle information of the direction.

In addition, in addition to the above method, a prediction block may be generated by including other methods using a spatial correlation. For example, a reference block using inter-prediction such as motion searching and compensation which use a current picture as a reference picture may be generated as a prediction block.

In generating a prediction block, a prediction block may be generated by using a reference pixel according to the above prediction method. In other words, a prediction block may be generated by using a directional prediction or non-directional prediction method such as extrapolation of conventional intra-prediction according to the above prediction method, interpolation, copy, average, etc., and the prediction block may be generated by using an inter-prediction method, or by using other additional method.

The intra-prediction method may be supported under the same settings of the encoder/decoder, and may be determined according to a slice type, a block size, and a block form. The intra-prediction method may be supported according to at least one of the described prediction methods, or according to a combination thereof. An intra-prediction mode may be configured according to the supported prediction method. A number of supported intra-prediction modes may be determined according to the prediction method, a slice type, a block size, a block form, etc. Information for the same may be set and transmitted in a sequence unit, a picture unit, a slice unit, a block unit, etc.

Encoding of a prediction mode may determine a mode that is optimized in terms of an encoding cost according to each prediction mode as a prediction mode of a current block.

In one embodiment, in order to reduce a bit amount of a prediction mode, the prediction mode encoding unit may use a mode of at least one neighbor block to prediction a mode of the current block. A mode having a higher probability of being identical to a mode of the current block (most_probable_mode, MPM) may be included in a candidate group. Modes of the neighbor block may be included in the above candidate group. For example, prediction modes of left upper, left lower, upper, and right upper blocks of the current block may be included in the above candidate group.

A candidate group of a prediction mode may be configured according to at least one of a position of a neighbor block, a priority of a neighbor block, a priority in a division block, a size or form of a neighbor block, a preset specific mode, and a prediction mode of a luma block (in case of a chroma block), or according to a combination thereof. Information for the same may be transmitted in a sequence unit, a picture unit, a slice unit, a block unit, etc.

For example, when a block adjacent to the current block is divided into at least two blocks, which mode of a block the two divided blocks will be included in a mode prediction candidate of the current block may be determined under the same settings of the encoder/decoder.

In addition, for example, when a left block among neighbor blocks of a current block (MxM) is configured with three division blocks by quad-tree division of the block partition unit so that the left block includes M/2xM/2, M/4×M/4, and M/4xM/4 blocks from top to bottom direction, a prediction mode of the M/2xM/2 block may be included as a mode prediction candidate of the current block based on a block size.

As another example, when an upper block of neighbor blocks of a current block (NxN) is configured with three division blocks by binary-tree division of the block partition unit so that the upper block includes N/4×N, N/4xN, and N/2×N blocks from the left to right direction, according to a preset order (priority is assigned from left to right), a prediction mode of a first N/4xN block of a left side is included as a mode prediction candidate of the current block.

As another example, when a prediction mode of a neighbor block of the current block is a directional prediction mode, a prediction mode adjacent to the corresponding mode (slope information or angle information of the direction of the above mode) may be included in a mode prediction candidate group of the current block.

In addition, a preset mode (planar, DC, vertical, horizontal, etc.) may be preferentially included according to a prediction mode configuration of a neighbor block or a combination thereof. In addition, a prediction mode having a high occurrence frequency among prediction modes of a neighboring block may be preferentially included. The above priority may mean a probability for being included in a mode prediction candidate group of the current block, and a probability for being assigned with a higher priority or index in the above candidate group configuration (in other words, means a probability for being assigned with less bits during binarization process)

As another example, when a maximum number of modes within a mode prediction candidate group of the current block is k, a left block is configured with m blocks with a vertical length shorter than a vertical length of the current block, and an upper block is configured with n blocks with a horizontal length upper than a horizontal length of the current block, a candidate group may be padded according to a preset order (from left to right, from upper to lower) when the sum of the division blocks of the neighbor blocks (m+n) is greater than k. When the sum of the division blocks of the neighbor blocks (m+n) is greater than the maximum number k, prediction modes of the neighbor blocks (left block and upper block) and a prediction mode of a block of other neighbor blocks other than the neighbor blocks (for example, left lower, left upper, right upper, etc.) may be included in the mode prediction candidate group of the current block. The above examples are not limited to the above cases, but may include cases where the conditions of each other are reversed, and examples of other cases are also possible.

Accordingly, a candidate block for predicting a mode of the current block is not limited to a block of a specific position. Prediction mode information of a block positioned at least one of left, left upper, left lower, upper, and right upper blocks may be used. A prediction mode of the current block may constitute a candidate group in consideration with various features as the example described above.

The prediction mode encoding unit may classify the prediction mode into a mode candidate group having a high probability of being the same as the mode of the current block (referred as a first candidate group in the present example) and an otherwise mode candidate group (referred as a second candidate group in the present example). A prediction mode encoding process may be changed according to which of the two candidate groups the prediction mode of the current block belongs.

The all of the prediction modes may be configured by summing the prediction mode of the first candidate group and the prediction mode of the second candidate group. A number of prediction modes of the first candidate group and a number of prediction modes of the second candidate group may be determined according to at least one of a slice type, a block size, and a block form, or according to a combination thereof. According to the candidate group, an identical binarization method or different binarization methods may be applied.

For example, a fixed length binarization method may be applied to the first candidate group, and a unary truncated binarization method may be applied to the second candidate group. In the above description, two candidate groups are used as an example. The candidate group may be extended to a first mode candidate group having a high probability of being the same as the mode of the current block, a second mode candidate group having a high probability of being identical to the mode of the current block, an otherwise mode candidate group, etc, and variations thereof are also possible.

Post-process filtering executed by the post-process filtering unit, considering that a correlation between a reference pixel that is adjacent to a boundary of a neighbor block and the current block and a pixel within the adjacent current block is high, may replace several prediction pixels of prediction blocks that are previously generated with a value generated by performing filtering for at least one reference pixel adjacent to a boundary and at least one prediction pixel. Alternatively, the post-process filtering unit may replace the prediction pixel with a value generated by applying a characteristic quantified value (for example, difference between pixel values, slope information, etc.) between reference pixels adjacent to the boundary of the block to filtering. In addition to the above methods, other methods having a similar purpose (correcting several prediction pixels of a prediction block by using a reference pixel) may be added thereto.

In the post-process filtering unit, a filter type and whether or not to apply filtering may be implicitly or explicitly determined. A reference pixel, a position and a number of current pixels, and a type of an applied prediction mode which are used in the post-process filtering unit may be set in the encoder/decoder. Information related to the above may be transmitted in a unit of a sequence unit, a picture unit, a slice unit, etc.

In addition, in post-process filtering, an additional post-process such as boundary filtering may be performed after generating a prediction block. In addition, considering a characteristic of a pixel of a reference block, post-process filtering, similar to the above boundary filtering, may be performed for a current block. The current block is reconstructed by summing a residue signal obtained by performing transform/quantization and a reverse process thereof after obtaining a residue signal, and a prediction signal.

Finally, a prediction block is selected or obtained by using the above process. Information related to the above may be information of a prediction mode, and may be transmitted to the transform unit 210 so that the residue signal is encoded after the prediction block is obtained.

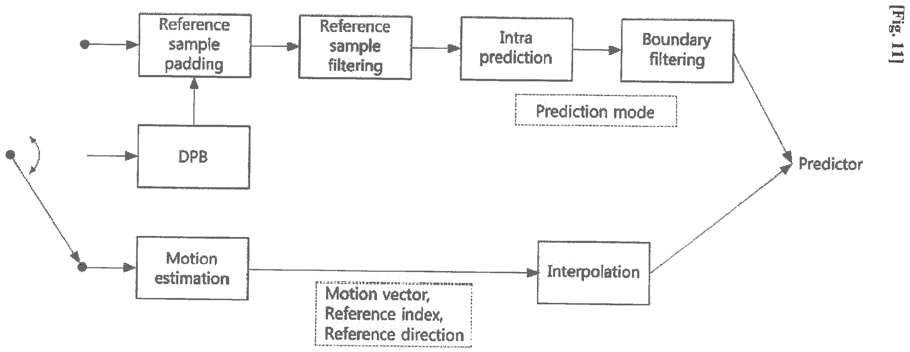

FIG. 10 is an example view for illustrating a prediction principle in a P-slice or B-slice in the image encoding method according to an embodiment of the present invention. FIG. 11 is an example view for illustrating interpolation performed in the image encoding method of FIG. 10.

Referring to FIG. 10, the image encoding method according to the present embodiment may include step of motion estimation (motion estimation module) and step of interpolation. A motion vector, a reference picture index, and information of a reference direction which are generated in the step of motion estimation may be transmitted to the step of interpolation. In motion estimation and interpolation, a value stored in a reconstructed picture buffer (decoded picture buffer, DPB) may be used.

In other words, the image encoding device may perform motion estimation to find a block similar to a current block from previously encoded pictures. In addition, in order to perform more precise prediction than a real number unit, the image encoding device may execute interpolation of a reference picture. Finally, the image encoding device may obtain a prediction block through a prediction factor (predictor). Information related to the above may be a motion vector, a reference picture index (or reference index), a reference direction, etc. Then, the image encoding device may encode a residue signal.

In the present embodiment, since intra-prediction is performed in a P-slice or B-slice, the image encoding method may be implemented in a combination method of FIG. 11 which supports inter-prediction and intra-prediction.

As shown in FIG. 11, the image encoding method according to the present embodiment may include: reference sample padding; reference pixel filtering; intra-prediction; boundary filtering; motion estimation; and interpolation.

In the image encoding device, when block matching is supported in a current picture, a prediction method in an I-slice may be implemented in a configuration shown in FIG. 11 rather than the configuration shown in FIG. 9. In other words, the image encoding device may use a prediction mode in an I-slice and information such as motion vector, reference picture index, reference direction, etc. generated in a P-slice or B-slice for generating a prediction block. However, since the reference picture is a current picture, there may be some pieces of information that may be omitted. In one embodiment, when a reference picture is a current picture, a reference picture index, and a reference direction may be omitted.

In addition, in the image encoding device, when interpolation is applied, block matching may not be necessarily performed up to a real number unit due to a characteristic of an image, that is, artificial characteristics of images due to computer graphics, thus whether or not to perform block matching may be set in the encoder, and may be set in a sequence unit, a picture unit, a slice unit, etc.

For example, the image encoding device may not perform interpolation for reference pictures used in inter-prediction according to setting of the encoder. Various settings are available such as performing interpolation when block matching is performed in a current picture, etc. In other words, in the image encoding device of the present embodiment, whether or not to perform interpolation for reference pictures may be set. Herein, whether or not to perform interpolation of the entire or a part of reference pictures constituting a reference picture list may be determined.

In one embodiment, the image encoding device may not perform interpolation for some blocks when block matching is not necessary up to a real number unit since an image has an artificial characteristic in which a reference block is present, and may perform interpolation when block matching is necessary up to a real number unit since an image is a natural image.

In addition, in the image encoding device, whether or not to apply block matching to a reference picture for which interpolation is performed in a block unit may be set. For example, when a natural image and an artificial image are combined, interpolation may be performed for a reference picture. When an optimized motion vector is obtained by searching a part of the artificial image, a motion vector may be represented in a predetermined unit (herein, integer unit). In addition, selectively, when an optimized motion vector is obtained by searching a part of the natural image, a motion vector may be represented in another predetermined unit (herein, 1/4 unit).

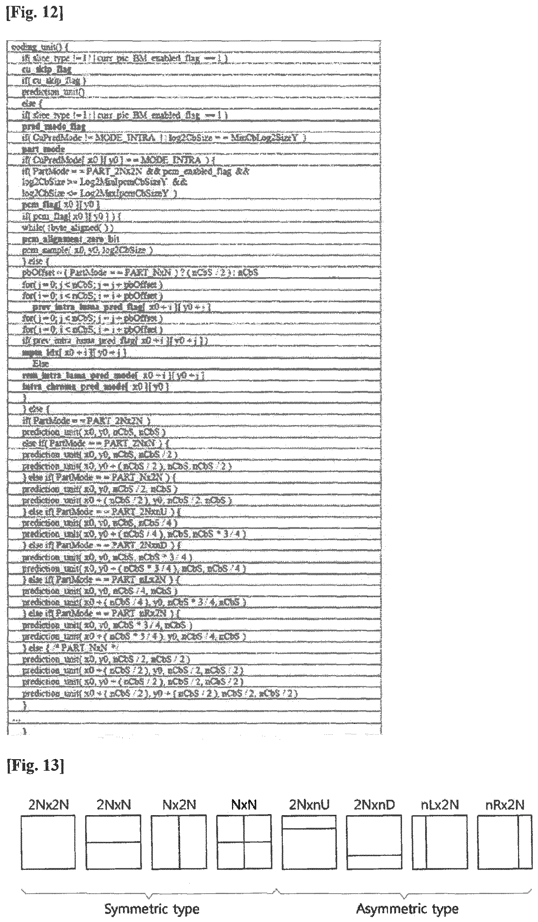

FIG. 12 is a view for illustrating the main process of the image encoding method according to an embodiment of the present invention in a syntax of a coding unit.

Referring to FIG. 12, curr_pic_BM_enabled_flag may mean a flag indicating whether or not block matching is allowed in a current picture, and may be defined and transmitted in a sequence unit and a picture unit. Herein, generating a prediction block by performing block matching in a current picture may mean a case that is operated through inter-prediction. In addition, it may be assumed that cu_skip_flag being an inter method that does not encode a residue signal is a flag that is supported in a P-slice or B-slice except for an I-slice. Herein, when curr_pic_BM_enabled_flag is ON, in an I-slice, block matching (BM) may be supported in an inter-prediction mode.

In the image encoding method according to the present embodiment, skip may be supported when a prediction block is generated by performing block matching in a current picture, and in addition to block matching, skip may be also supported for another inter method. In addition, according to the condition, skip may not be supported in an I-slice. Whether or not skip is supported may be determined according to the setting of the encoder.

In one embodiment, when skip is supported in an I-slice, by using a specific flag that is if(cu_skip_flag), a prediction block may be directly reconstructed to a reconstructed block by performing block matching rather than encoding a residue signal in connection with a prediction_unit() that is a prediction unit. In addition, the image encoding device may classify a method of using a prediction block by performing block matching in a current picture into an inter-prediction method, and distinguish the classified method by using a specific flag that is pred_mode_flag.

In addition, the image encoding device according to the present embodiment may set a prediction mode to an inter-prediction mode (MODE_INTER) when pred_mode_flag is 0, and set to an intra-prediction mode (MODE_INTRA) when pred_mode_flag is 0. The above method may be similar to a conventional intra method. In order to distinguish from the conventional structure, it may be classified into an inter method or an intra method in an I-slice. In other words, the image encoding device of the present embodiment may not use a temporal correlation in an I-slice, but use a structure of the temporal correlation. part_mode means information of a block size and a block form of a block divided in a coding unit.

Examples of some syntaxes used in the present embodiment are provided below.

A syntax that is sps_curr_pic_ref_enabled_flag in a sequence parameter may be a flag indicating whether or not IBC is used.

A syntax that is pps_curr_pic_ref_enabled_flag in a picture parameter may be a flag indicating whether or not an IBC is used in a picture unit.

In addition, according to ON/OFF of the syntax of pps_curr_pic_ref_enabled_flag, whether or not to increase NumPicTotalCurr for a current picture is determined.

When configuring a reference picture list 0, according to pps_curr_pic_ref_enabled_flag, whether or not to include a current picture in a reference picture may be determined.

When configuring a reference picture list 1, according to pps_curr_pic_ref_enabled_flag, whether or not to add a reference picture list of a current picture may be determined.

According to the above configuration, according to the above flags, whether or not to include a current picture in a reference picture list during inter-prediction may be determined.

FIG. 13 is an example view for illustrating an example of supporting symmetric division or asymmetric division as like the inter-prediction when a prediction block is generated by performing block matching in a current picture used in FIG. 12.

Referring to FIG. 13, the image encoding method according to the present embodiment may support symmetric division such as 2Nx2N, 2NxN, N×2N, and NxNm, or asymmetric division such as nLx2N, nRx2N, 2N×nU, and 2NxnD when a prediction block is generated by performing block matching in a current picture.

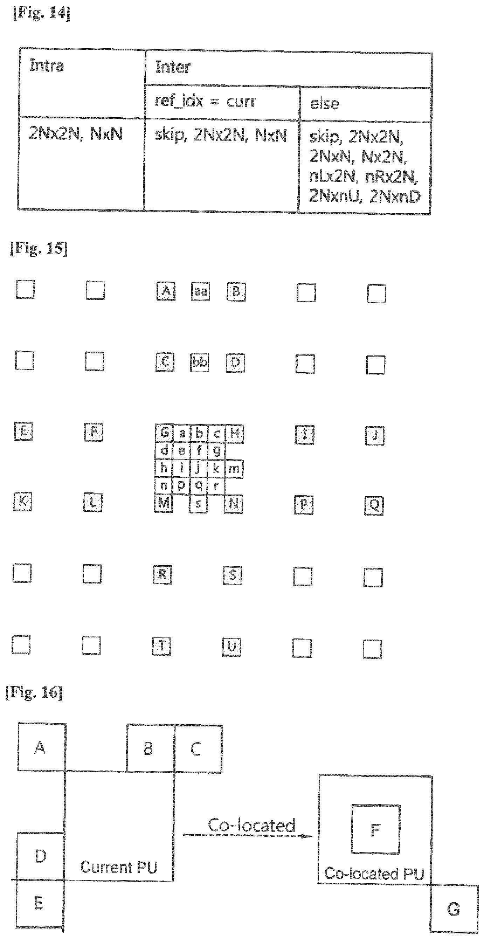

FIG. 14 is an example view for illustrating that inter-prediction supports 2Nx2N and NxN as the intra-prediction of FIG. 9. Various sizes and forms of a block may be determined according to a division method of the block partition unit.

Referring to FIG. 14, the image encoding method according to the present embodiment may support 2Nx2N and NxN blocks as a prediction block form used in conventional intra-prediction. This is an example showing that a square form is supported by the block partition unit by using a quad-tree division method or a division method according to a pre-defined predetermined block candidate group. In addition, in intra-prediction, another block form may be supported by adding a rectangle form to a binary-tree division method or a pre-defined predetermined block candidate group. Setting for the same may be performed in the encoder.

In addition, in the encoder, whether or not to apply skip when block matching is performed for a current picture during intra-prediction (ref_idx = curr), whether or not to apply skip to conventional intra-prediction, and whether or not to apply new intra-prediction to a prediction block having another (else) division form (refer to FIG. 13) may be set. Information for the same may be transmitted in a sequence unit, a picture unit, a slice unit, etc.

The subtractor 205 (refer to FIG. 2) may generate a residue block by subtracting pixel values of a prediction block generated by the prediction unit 200 from a pixel value of a current block to be encoded, and by deducing pixel difference values.

The transform unit 210 (refer to FIG. 2) receives from the subtractor 205 a residue block that is a difference value between a current block and a prediction block generated through intra-prediction or inter-prediction, and transforms the received residue block to a frequency area. Each pixel of the residue block is transformed to a transform coefficient of a transform block through a transform process. A size and form of the transform block may be equal to or smaller than a size and form of a coding unit. In addition, the size and form of the transform block may be equal to or smaller than a size and form of the prediction unit. The image encoding device may perform transform by grouping a plurality of prediction units.

A size or form of the transform block may be determined by the block partition unit, and transform to a square form or to a rectangle form may be supported according to block division. Settings related to transform supported in the encoder/decoder (size and form of a supported transform block) may have influence on operations of the block division.

A size and form of each transform block may be determined according to an encoding cost for each candidate of a size and form of the transform block, and division information such as image data of the each determined transform block and a size and form of each determined transform block, etc. may be encoded.

Transform may be performed by a one-dimensional transform matrix. For example, each transform matrix may be adaptively used in a discrete cosine transform (DCT) unit, a discrete cosine transform (DST) unit, a horizontal unit, and a vertical unit. Adaptive usage may be determined, for example, based on a block size, a block form, a block type (luma/chroma), an encoding mode, prediction mode information, a quantization parameter, encoding information of a neighbor block, etc.

For example, in case of intra-prediction, when a prediction mode is a horizontal direction, a transform matrix based on a DCT may be used in a vertical direction, and a transform matrix based on a DST may be used in a horizontal direction. In addition, when the prediction mode is a vertical direction, a transform matrix based on a DCT may be used in a horizontal direction, and a transform matrix based on a DST may be used in a vertical direction.

The transform matrix is not limited to the above description. Information for the same may be determined by using an implicit or explicit method, and may be determined according to at least one of a block size, a block form, a coding mode, a prediction mode, a quantization parameter, and encoding information of a neighbor block, or according to a combination thereof. The information may be transmitted in a sequence unit, a picture unit, a slice unit, a block unit, etc.

Herein, when the explicit method is used, and at least two transform matrixes are included as a candidate group for horizontal and vertical directions, information of which a transform matrix is used for each direction may be transmitted. Alternatively, when two transform matrixes used for respective horizontal and vertical directions are grouped in a pair, and at least two pairs are included in a candidate group, information of which transform matrixes are used for horizontal and vertical directions may be transmitted.

In addition, considering a characteristic of an image, the entire or a part of transform may be omitted. For example, transform of any one or both horizontal and vertical components may be omitted. When intra-prediction or inter-prediction is not performed well so that a big difference is generated between a current block and a prediction block, in other words, when a residue component is large and transform is performed, loss may become large when encoding is performed in such a situation. Omitting of transform may be determined according to at least one of an encoding mode, a prediction mode, a block size, a block form, a block type (luma/chroma), a quantization parameter, encoding information of a neighbor block, or according to a combination thereof. According to the above condition, omitting of transform may be represented by using an implicit or explicit method. Information for the same may be transmitted in a unit of a sequence unit, a picture unit, a slice unit, etc.

The quantization unit215 (refer to FIG. 2) performs quantization for a transformed residue component. A quantization parameter may be determined in a block unit, and the quantization parameter may be set in a sequence unit, a picture unit, a slice unit, a block unit, etc.

In one embodiment, the quantization unit 215 may predict a current quantization parameter by using one or at least two quantization parameters which are derived from a neighbor block of a current block such as left, left upper, upper, right upper, and left lower blocks.

In addition, when the quantization parameter predicted from the neighbor block is not present, in other words, when a block is positioned at a boundary of a picture, a slice, etc., the quantization unit 215 may output or transmit a difference value with a basic parameter that is transmitted in a sequence unit, a picture unit, a slice unit, etc. When the quantization parameter predicted from the neighbor block is present, a difference value may be transmitted by using a quantization parameter of a corresponding block.

A priority of a block in which a quantization parameter is derived may be preset, or may be transmitted in a sequence unit, a picture unit, a slice unit, etc. A residue block may be quantized by using a dead zone uniform threshold quantization (DZUTQ) method, a quantization weighted matrix method, or a method modified therefrom. Accordingly, at least one quantization method may be included as a candidate, and the method may be determined based on an encoding mode, prediction mode information, etc.

For example, in the quantization unit 215, whether or not a quantization weight matrix is applied to an inter coding unit and an intra coding unit, etc., may be set. In addition, different quantization weight matrixes may be applied according to an intra-prediction mode. Assuming that the quantization weight matrix has an MxN size and a block has a size is identical to a size of a quantization block, a quantization coefficient may be differently applied to each position of each frequency component. In addition, the quantization unit 215 may select one from various conventional quantization methods, and the quantization unit 215 may be used in the encoder/decoder under the same settings. Information for the same may be transmitted in a sequence unit, a picture unit, a slice unit, etc.

Meanwhile, the dequantization units 220 and 315, and the inverse-transform units 225 and 320 which are shown in FIGS. 2 and 3 may be implemented by reversely performing processes of the above transform unit 210 and the quantization unit 215. In other words, the dequantization unit 220 may perform dequantization for a quantized transform coefficient that is generated in the quantization unit 215, and the inverse-transform unit 225 may generate a reconstructed residue block by inverse-transforming a dequantized transform coefficient.

The adders 230 and 324 shown in FIGS. 2 and 3 may generate a reconstructed block by adding a pixel value of a prediction block generated by the prediction unit to a pixel value of a reconstructed residue block. The reconstructed block may be stored in the decoded picture buffers 240 and 335, and provided to the prediction unit and the filtering unit.

The filtering units 235 and 330 may apply an inloop filter such as deblocking filter, sample adaptive offset (SAO), and adaptive poop filter (ALP) to a reconstructed block. The deblocking filter may perform filtering for the reconstructed block so as to remove distortion generated in a block boundary when ending and decoding. The SAO is a filtering process that reconstructs an offset difference between an original image and a reconstructed image in a pixel unit for a residue block. The ALF may perform filtering to minimize a difference between a prediction block and the reconstructed block. The ALF may perform filtering based on a comparison value between a block reconstructed through deblocking filter and a current block.

The entropy encoding unit 245 may entropy encode transform coefficients quantized by the quantization unit 215. For example, the entropy encoding unit 245 may perform methods such as context adaptive variable length coding (CAVLC), context adaptive binary arithmetic coding (CABAC), syntax-based context-adaptive binary arithmetic coding (SBAC), probability interval partitioning entropy (PIPE) coding, and other coding methods.

In the entropy encoding unit 245, a bit sequence in which a quantization coefficient is encoded, and various kinds of information which are used for decoding the bit sequence may be included in encoding data. The encoding data may include an encoded block form, a quantization coefficient, and a bit sequence in which a quantization block is encoded and information required for prediction, etc. In case of the quantization coefficient, a two-dimensional quantization coefficient may be scanned to one-dimension. The quantization coefficient may have different distribution according to an image characteristic. Particularly, in case of intra-prediction, since a coefficient distribution may have a specific distribution according to a prediction mode, a scanning method may be differently set.

In addition, the entropy encoding unit 245 may be differently set according to a size of a block to be encoded. At least one of various patterns such as zig-zag pattern, diagonal pattern, raster pattern, etc. may be set as a scanning pattern or as a candidate thereof. The scanning pattern may be determined by an encoding mode, prediction mode information, etc., or may be used in the encoder and the decoder under the same settings. Information for the same may be transmitted in a sequence unit, a picture unit, a slice unit, etc.

A quantized block input to the entropy encoding unit 245 (hereinafter, quantization block) may have a size equal to or smaller than a size of a transform block. In addition, the quantization block may be divided into at least two sub-blocks. When the quantization block is divided, a scanning pattern in a division block thereof may be set identical to or different from a scanning pattern of the original quantization block.

For example, when the original quantization block is scanned in a zig-zag scanning pattern, the zig-zag scanning pattern may be applied to all sub-blocks. Alternatively, the zig-zag scanning pattern may be applied to a sub-block positioned at left upper side of a block including a DC component, and a diagonal scanning pattern may be applied to the remaining blocks. Determination for the same is performed according to an encoding mode, prediction mode information, etc.

In addition, in the entropy encoding unit 245, a start position of a scanning pattern fundamentally starts at left upper position. However, the start position may be at a right upper position, a right lower position, or a left lower position according to an image characteristic. Information of which one of at least two candidate groups is selected may be transmitted in a sequence unit, a picture unit, a slice unit, etc. As an encoding method, an entropy encoding method may be used, but it is not limited thereto.

Meanwhile, dequantization of the dequantization unit 220 and inverse-transforming of the inverse-transform unit 225 shown in FIG. 2 and FIG. 3 may be implemented by reversely configuring quantization of the quantization unit 215 and transforming of the transform unit 210, and by combining the fundamental filtering units 235 and 330.

Next, interpolation that may be used in the image encoding device of the present invention will be briefly described in below.

In order to perform more precise prediction by performing block matching, interpolation is performed in a resolution of a real number unit that is more precise than an integer unit. For the above interpolation, a discrete cosine transform based interpolation filter (DCT-IF) method may be used. For interpolation in high efficiency video coding (HEVC), the DCT-IF is used, for example, a reference picture is interpolated by generating a pixel in 1/2 and 1/4 units that are between integers, and a prediction block is generated by performing block matching by referencing the same.

[Table 1]

| pixel position | filter coefficients (fi) |
|---|---|
| 0 | 0,0,0,64,0,0,0,0 |
| 1/4 | -1,4,-10,58,17,-5,1,0 |
| 1/2 | -1,4,-11.40,40,-11,4,-1 |
| 3/4 | 0,1,-5,17,58,-10,4,-1 |

[Table 2]

| pixel position | filter coefficients (fi) |
|---|---|
| 0 | 0,64,0,0 |
| 1/8 | -2,58,10,-2 |
| 1/4 | -4,54,16,-2 |

(continued)

| pixel position | filter coefficients (fi) |
| --- | --- |
| -3/8 | -6,46,28,-4 |
| 1/2 | -4,36,36-4 |
| 5/8 | -4,28,46,-6 |
| 3/4 | -2,16,54,-4 |
| 7/8 | -2,10,58,-2 |

Table 1 and Table 2 respectively show filter coefficients used in a luma component and a chroma component, for the luma component an 8-tap DCT-IF filter is used, and for the chroma component, a 4-tap DCT-IF filter is used. For the chroma component, a different filter may be applied according to a color format. In case of 4:2:0 of YCbCr, a filter shown in Table 2 may be applied. In case of 4:4:4, a filter shown in Table 1 or other filters may be applied rather than the filter of Table 2. In case of 4:2:2, a horizontal a 1D 4-tap filter of Table 2 and a vertical a 1D 8-tap filter of Table 1 may be applied.

FIG. 15 is a view for illustrating a process of applying a one-dimensional horizontal filter to pixels present at positions (assuming x) at a, b, and c of an image in the image encoding method according to an embodiment of the present invention

As shown in FIG. 15, for sub-pixels positioned at positions (assuming as x) of a, b, and c between a first pixel (G) and a second pixel (H) adjacent to the first pixel, a 1D horizontal filter may be applied. This may be represented as the formula below.

$$x = ( f1*E + f2*F + f3*G + f4*H + f5*I + f6*J + 32 ) / 64$$

Then, for sub-pixels positioned at positions (assuming as y) of d, h, and n, a 1D vertical filter may be applied. This may be represented as the formula below.

$$y = ( f1*A + f2*C + f3*G + f4*M + f5*R + f6*T + 32 ) / 64$$

For sub-pixels f, g, i, j, k, p, q, and r positioned at the center, a 2D separable filter may be applied. For example, the sub-pixel e may be interpolated by interpolating the sub-pixel a, and pixels positioned at a vertical direction, and by using the interpolated pixels. Then, as interpolating the sub-pixel a between the pixel G and the pixel H, 1D horizontal filtering is performed. Then, a value of the sub-pixel e may be obtained by performing 1D vertical filtering for sub-pixels obtained by the 1D horizontal filtering. For a chroma signal, similar operations may be performed.

The above description is a part of interpolation. In addition to the DCT-IF filter, other filters may be used. A filter type and a number of taps may be differently applied to each real number unit. For example, for 1/2 unit, an 8-tap Kalman filter may be used, for a 1/4 unit, a 6-tap Wiener filter may be used, and for a 1/8 unit, a 2-tap liner filter may be used. A filter coefficient may be encoded by using a fixed coefficient such as DCT-IF or by calculating a filter coefficient. As described above, a single interpolation filter may be used for a picture, or a different interpolation filter may be used for each area according to an image characteristic. Alternatively, at least two reference pictures to which a plurality of interpolation filters is applied may be generated, and one of the reference pictures may be selected.

A different filter may be applied according to encoding information such as reference picture type, temporal layer, state of a reference picture (for example, whether or not is a current picture), etc. The above mentioned information may be set and transmitted in a sequence unit, a picture unit, a slice unit, etc.

Before describing in detail improved methods of motion estimation, motion compensation, and motion prediction which may be used in the image encoding method according to the present embodiment, fundamental meanings thereof are defined as below.

Motion estimation refers, when predicting motion of a current block to be encoded, to a process of dividing an image frame into small blocks and estimating from which blocks of a frame (reference frame), which has been encoded temporally before or after, the small blocks are moved. In other words, motion estimation may be a process of finding a block that is closest to a target block when encoding a current block to be compressed. Motion estimation based on a block may be a process of estimating to which position a video object or an image processing unit block (macro block) has been temporally moved.

Motion compensation means, in order to encode a current image, a process of generating a prediction block of a current block based on motion information (motion vector, reference picture index) of an optimized prediction block during motion estimation for predicting the current image by using at least a part area of a reference image that is previously encoded. In other words, motion compensation may be a difference between the current block to be encoded and a reference block that is found to be closest to the current block, and refer to a process of generating an error block.

Motion prediction means a process of finding a motion vector when encoding is performed for motion compensation. Skip, temporal prediction, spatial prediction, etc. are used for motion prediction. Skip means that encoding of a corresponding image block is omitted when motion of an image is constant so that a size of an image block predicted in image encoding device is 0, or when a residue is sufficiently small to be negligible. Temporal prediction may be mainly used in inter-prediction, and spatial prediction or temporal prediction may be mainly used in intra-prediction.

Information related to inter-prediction may include information for distinguishing a reference picture list direction (one direction (L0 and L1), two directions), an index distinguishing a reference picture within a reference picture list, a motion vector, etc. Since a temporal correlation is used, motion information may be effectively encoded when a characteristic that a motion vector of a block adjacent to the current block is identical or similar to a motion vector of the current block is used.

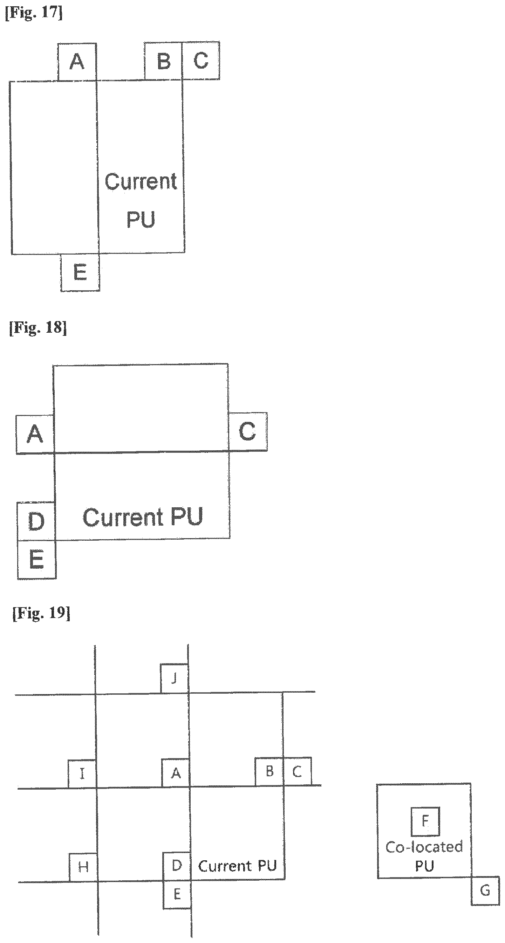

FIG. 16 is an example view of a current block and a neighbor block according to a comparative example. FIG. 17 is an example view of a current block and a neighbor block according to another comparative example. FIG. 18 is an example view of a current block and a neighbor block according to still another comparative example.

As shown in FIG. 16, FIG. 16 shows an example of a current block (current PU) and neighbor blocks (A, B, C, D, and E). At least one of blocks spatially adjacent to the current block, in other words, a left upper block (A), an upper block (B), a right upper block (C), a left block (D), and a left lower block (E), may be selected as a candidate, and information thereof may be used.

In addition, a block F within a reference block (co-located PU) present at a position corresponding to the current block in a selected reference picture or a neighbor block (G) thereof may be selected as a candidate, and information thereof may be used. FIG. 16 shows two candidates, in addition to the block (F) positioned at the center and which is identical to the current block, at least one of left upper, upper, right upper, left, left lower, lower, right lower, and right blocks may be selected as a candidate. Herein, a position of a block that is included in a candidate group may be determined according to a picture type, a size of the current block, and correlations with candidate blocks which are spatially adjacent. In addition, the selected reference picture may mean a picture having a distance of 1 with a picture that is present before or after the current picture.

In addition, as shown FIG. 17 and FIG. 18, using information of a specific block according to a size and a position of a current block (current PU) may be implemented. A prediction unit (PU) may be referred to a basic unit performing prediction of the prediction unit.

In the image encoding method of the present embodiment, an area of a spatially and temporally adjacent block may extend as below.

FIG. 19 is an example view of a current block and a neighbor block which may be used in the image encoding method according to an embodiment of the present invention.

Referring to FIG. 19, the image encoding method according to the present embodiment, when selecting a prediction candidate of motion information, may efficiently select a candidate block of motion information by using motion information of encoded blocks adjacent to a current block, blocks (co-located blocks) positioned at identical or adjacent coordinates to the current block in a reference image, or blocks that are not adjacent but positioned at the same space. Herein, the blocks that are not adjacent but positioned at the same space, may use as a candidate a block including at least one other block positioned between the current block determined based on information of an encoding mode, a reference picture index, preset coordinates, etc. and the corresponding block.

In order to reduce an amount of motion information, the image encoding method may encode the motion information by using motion vector copy (MVC) or motion vector prediction (MVP).

Motion vector copy is a method of deriving a motion vector, and uses a motion vector prediction value (motion vector predictor) as it is rather than transmitting a motion vector difference or a reference picture index. The above feature is partially similar to a merge mode in a HEVC. The merge mode combines a motion vector of a spatially and temporally adjacent block. However, in motion vector copy of the present embodiment, a motion vector is used for blocks that are not spatially and temporally adjacent (for example, blocks H, I, and J). Considering the above feature, motion vector copy has different concept from the merge mode, and may have a concept higher than the merge mode. In addition, an object of motion vector prediction is to generate a minimum motion vector difference when generating a prediction block.

Motion vector copy, as shown FIG. 19, may derive a reference direction, a reference picture index, and a motion vector prediction value from a block of various candidate groups. A motion vector may be transmitted by selecting n candidate blocks from the various candidate groups, and encoding index information of an optimized block among the n candidate blocks. Herein, when n is 1, motion vector copy may use motion information of a block having the highest priority according to a preset criterion. In addition, when n is 2, motion vector copy may determine which is best for each candidate group in consideration of an encoding cost.

Information of the n that is described above may be fixed in the encoder or decoder, or may be transmitted in a sequence unit, a picture unit, a slice unit, etc. In one embodiment, whether the n is 1 or 2 may be determined based on information of neighbor blocks. Herein, when motion vectors obtained from a block of a candidate group are similar to a preset criterion by being compared therebetween, it is determined that generating of at least two candidate groups is meaningless, and a motion vector prediction value may be generated in a fixed value by calculating an average or a median value (mvA, mvB, ..., mvJ). When it is determined that generating of at least two candidate groups is not meaningless, an optimized motion vector prediction value may be generated by using at least two candidate groups.

Motion vector prediction may be performed similar to motion vector copy. However, a criterion of a priority may be identical or different from motion vector copy. In addition, a number n of candidate blocks may be identical or different. Information for the same may be fixed in the encoder or the decoder or both, or may be transmitted in a sequence unit, a picture unit, a slice unit, etc.

Setting whether or not to reference a candidate group may be determined according to information of a current picture type, temporal layer information (temporal id), etc. Information for the same may be used by being fixed or may be transmitted in a sequence unit, a picture unit, a slice unit. Herein, setting whether or not to reference a candidate group may include, for example, using spatially adjacent blocks (A, B, C, D, and E), using spatially adjacent blocks (A, B, C, D, and E) and temporally adjacent blocks (H, I, and J), or using spatially adjacent blocks (A, B, C, D, and E) and spatially separated blocks (F and G).

Next, setting of "block matching may be applied to a current picture" will be described in below.

First, describing a case of an I-picture, for example, as a spatially adjacent block may have the highest priority, and remaining blocks may be set as a candidate group. In one embodiment, availability checking for reference blocks may be performed in an order of E → D → C → B → A → H → I → J. The availability may be determined by an encoding mode of a candidate block, motion information, a position of the candidate block, etc. The motion information may include a motion vector, a reference direction, a reference picture index, etc.

Since a current picture is an I-picture, motion information is present when an encoding mode is intra-prediction (hereinafter, INTER) of the present embodiment. Accordingly, according to the priority, whether or not an encoding mode is INTER may be checked. For example, when n is 3, and E is encoded by INTER, E is excluded from a candidate group, and the next D is checked. When D is encoded by INTER, block matching is performed in a current picture so that D has motion information, and D is added to the candidate group based on the motion information. After that, two n remain. Then, the image encoding device may check again the priority. When 3 candidates are padded as above, generating of the candidate group is stopped.

Availability is not determined by only an encoding mode, and may be determined by a picture boundary, slice boundary, a tile boundary, etc. In case of a boundary, the availability is checked as unavailable. In addition, when a block is determined to be identical or similar to a candidate that has been already padded, the corresponding block is excluded from a candidate, the reference pixel configuration unit checks the availability of a next candidate.

Herein, INTER is different from conventional inter-prediction (inter). In other words, an INTER mode of the present embodiment may use a structure of inter-prediction (inter), and generate a prediction block in a current picture, thus an INTER mode is different from inter-prediction generating a prediction block in a reference picture. In other words, in an encoding mode of the present embodiment, a method of performing block matching in a current picture may be applied by classifying into an INTER mode and intra (identical to conventional intra).

Meanwhile, the availability of a candidate that is padded first may not be checked. The availability may be checked according to the situation. In other words, when a motion vector range of a candidate block is equal to or greater than a predetermined criterion, or exceeds a picture boundary, a slice boundary, a tile boundary, etc., the availability may not be checked.

Hereinafter, when performing encoding, availability checking for reference blocks (refer to FIG. 19) in the described order of E → D → C → B → A → H → I → J, and obtaining a predetermined number ( for example, n=3) of candidate blocks will be described with reference to various embodiments.

< Embodiment 1 >

E (not coded) → D → C → B → A → H → I → J : E excluded

E (removed) D (Inter) → C → B → A → H → I → J : D included

E (removed) → D (included) → C (Inter) → B → A → H → I → J : C included

(block C is determined to be different after checking similarity)

E (removed) → D (included) C (included) → B (Intra) A → H → I → J : B excluded

E (removed) → D (included) → C (included) → B (removed) → A (Inter) → H → I → J : A included (block A is checked to be different after similarity checking)

Three blocks (D, C, and A) may be selected as above.

< Embodiment 2 >

E (Inter) → D → C → B → A → H → I → J : E included

E (included) → D (Inter) → C → B → A → H→ I → J : D included

(block D is checked to be identical or not similar to a current block after similarity checking.)

E (included) → D (included) → C (Inter) → B → A → H → I → J : C excluded

(block C is checked to be identical or similar after similarity checking.)

E (included) → D (included) → C (removed) → B (boundary) → A → H → I → J : B excluded

E (included) → D (included) → C (removed) → B (removed) → A (Intra) H → I → J : A excluded

E (included) → D (included) → C (removed) → B (removed) →A (removed) → H (Intra) → I → J : H included (block H is checked to be different after similarity checking.)

Three blocks (E, D, and H) may be selected as above.

< Embodiment 3 >

E (Intra) → D → C → B → A → H → I → J : E excluded

E (removed) → D (Intra) → C → B → A → H → I → J : D excluded

E (removed) → D (removed) C (Intra) → B → A → H → I → J : C excluded

E (removed) → D (removed) → C (removed) → B (boundary) → A → H → I → J : B excluded

E (removed) → D (removed) → C (removed) → B (removed) → A (Intra) → H → I → J : A excluded

E (removed) → D (removed) → C (removed) → B (removed) → A (removed) → H (Intra) → I → J : H excluded

E (removed) → D (removed) → C (removed) B (removed) → A (removed) → H (removed) → I (Inter) → J : I included

E (v) → D (removed) → C (removed) → B (removed) → A (removed) → H (removed) → I (included) → J (Inter) : J included (block J is checked to be different after similarity checking.)

E (removed) → D (removed) → C (removed) → B (removed) →A (removed) → H (removed) → I (included) → J (included) : (-a,0) included

In the above availability checking of eight reference blocks, two reference blocks are selected as a candidate block. In order to pad a number (n=3) of candidate blocks, preset fixed coordinates (-a, 0) may be added as a candidate.

< Embodiment 4 >

E (Intra) → D → C → B → A → H → I → J : E excluded

(Intra) → C → B → A → H → I → J : D excluded

→ C(Intra) → B → A → H → I → J : C excluded

→ B (boundary) → A → H → I → J : B excluded

→ A (Inter) → H → I → J : A included

A → H (Intra) → I → J : H excluded

A → I (Intra) → J : I excluded

A → J(Intra) : J excluded

A → (-a.0) : (-a,0) included

A → (-a.0) → (0. -b) : (0,-b)include

Since one reference block (A) is selected as a candidate block in the above checking of the availability of eight reference blocks, in order to pad a preset number (n=3) of candidate blocks, preset two fixed coordinates (-a, 0) and (0, -b) may be added as a candidate.

The embodiment 3 and the embodiment 4 will be described as follows.

In the embodiment 3, when n candidates are not found in a preset candidate group, a fixed candidate having fixed coordinates may be added as a motion vector candidate. In other words, in an inter-prediction mode of a HEVC, a zero vector may be added. However, when block matching is performed in a current picture as the present invention, a preset virtual zero vector (-a, 0) is added as the embodiment 3 since a (0,0) vector is not present in the current picture.

In addition, the embodiment 4 shows that a preset other virtual zero vector (0, -b) may be added to a candidate group when a number of motion vector candidates is not padded by performing availability checking after adding one virtual zero vector. Herein, a of (-a, 0) or b of (0, - b) may be variously set in consideration with a length size or width size of a block.

In addition, in the above description, the reference block is excluded from by performing availability checking, it may be set not to perform availability checking. Herein, since there is no need to transmit information about which one has to be transmitted, whether an average of two values is used or one of the two values is used may be automatically determined according to a preset setting when n is assumed to be 2. Herein, index information of which of the two values is used may be omitted. In other words, an index of a motion vector prediction value may be omitted.

In the above description, availability checking is performed by configuring the entire candidate group in a single group. The present invention is not limited thereto, a candidate may be selected by dividing the candidate group into at least two groups, and performing availability checking for each candidate group. Herein, assuming that a number (n) of candidate blocks is 2, a maximum number of candidates for each group may be identical, or may be independently set. In one embodiment, as the embodiment below, one candidate for group 1_1, and one candidate for group 1_2 may be set. In addition, a priority for each group may be independently set. In addition, after performing availability checking for the group 1_1 and the group 1_2, when a criterion of a number of motion vector candidates is not satisfied, in order to pad the number of motion vector candidates, a group 2 may be applied. The group 2 may include a fixed candidate having fixed coordinates.

For example, an order of availability checking or an order of priority of the group 1_1, the group 1_2, and the group 2, and a group distinguishing criterion are described in the following order.

group 1_1 = {A, B, C, I, J} , ( C → B → A → I → J), upper blocks based on a current block
group 1_2 = {D, E, H}, (E → D → H), left and left lower blocks based on the current block
group 2 = {fixed candidate}, (-a, 0) → (0, -b), (-a, 0)

Summarizing the above, the image encoding device of the present embodiment may spatially search a motion vector copy candidate or motion vector prediction candidate, and generate a candidate group in an order of a preset fixed candidate according to a result of searched candidate.

Hereinafter, motion vector copy (MVC) and motion vector prediction (MVP) will be described separately. This is because, an inclusion of a scaling process is different.

Motion vector prediction (MVP) will be described first below.

In case of a P-picture or B-picture

It will be described by adding temporal candidates (F and G) to the above mentioned candidates (A, B, C, D, E, F, G, H, I, and J). In the present embodiment, it is assumed that a candidate is spatially searched, is temporally searched, and is searched by configuring a combined list, and a fixed candidate is searched. The above operations are performed in the state order.

First, priorities of candidates are determined, and availability checking is performed according to the priorities. It is assumed that a number (n) of motion vector candidates is set to 2, and priorities thereof are as indicated in parentheses.

For example, when spatially searching, it may be classified into the following groups.

$$\text{group 1\_1} = \{A, B, C, I, J\}, ( C \to B \to A \to I \to J)$$

$$\text{group 1\_2} = \{D, E, H\}, (D \to E \to H)$$

In the present example, the group 1_1 of the two groups includes immediately upper, left upper, and right upper blocks based on a current block, and the group 1_2 includes immediately adjacent left, not immediately adjacent left, and left lower blocks based on the current block.

As another example, a candidate block of a motion vector may be spatially searched by classifying into three groups. The three groups may be classified as below.

$$\text{group 1\_1} = \{A, B, C\}, (C \to B \to A)$$

$$\text{group 1\_2} = \{D, E\}, (D \to E)$$

$$\text{group 1\_3} = \{H, I, J\}, (J \to I \to H)$$

In the present embodiment, among the three groups, the group 1_1 includes immediately upper adjacent, left upper, right upper blocks based on a current block, the group 1_2 includes immediately adjacent left and immediately adjacent left lower blocks based on the current block, and the group 1_3 includes non-adjacent blocks having a distance with the current block by at least one block.

As another example, a candidate block of a motion vector may be spatially searched by classifying using other method. The three groups may be classified as below.

$$\text{group 1\_1} = \{B\}$$

$$\text{group 1\_2} = \{D\}$$

$$\text{group 1\_3} = \{A, C, E\}, (E \to C \to A)$$

In the present example, among the three groups, the group 1_1 includes a block positioned at a vertical direction based on a current block, the group 1_2 includes an adjacent block positioned at a horizontal direction based on the current block, and the group 1_3 includes remaining adjacent blocks based on the current block.

As described above, in a P-picture or B-picture, since there are various kinds of referenceable information such as reference direction, reference picture, etc., a candidate group may be set according to the above information. A candidate block having a reference picture different from a reference picture of a current block based on the current block may be included in a candidate group. Alternatively, considering a temporal distance (picture of count, POC) between a reference picture of the current block, and a reference picture of the candidate block, a vector of the corresponding block may be scaled and added to a candidate group. In addition, a scaled candidate group may be added according to which picture the reference picture of the current block is. In addition, when a temporal distance between the reference picture of the current block and the reference picture of the candidate block exceeds a predetermined distance, the scaled block is excluded from the candidate group. Alternatively, when the distance is equal to or less than the predetermined distance, the scaled block may be added to the candidate group.

The above described similarity checking is a process of comparing and determining how much a motion vector that is newly added is similar to a motion vector that has been already included in a prediction candidate group. According to the definition, it may be set to be true when x, y components perfectly match, or to be true when the components have a difference equal to or less than a predetermined threshold value range.

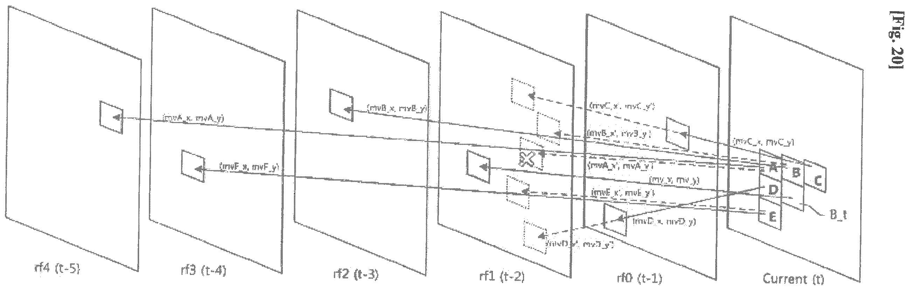

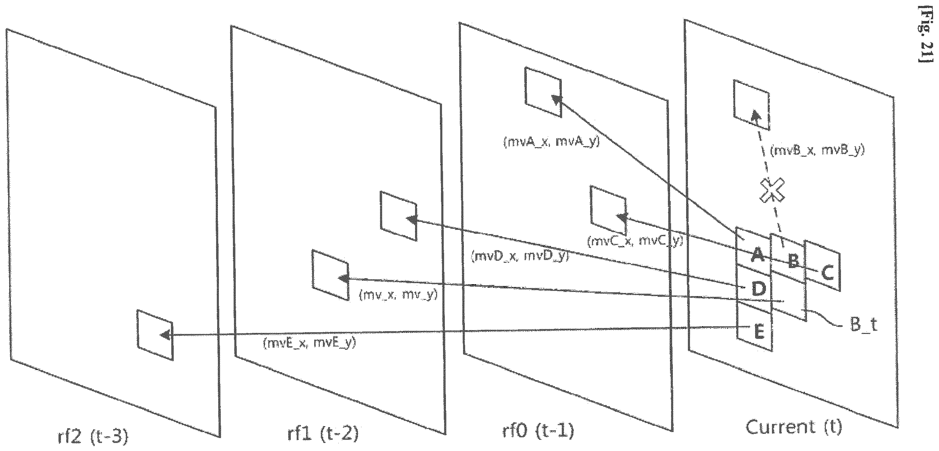

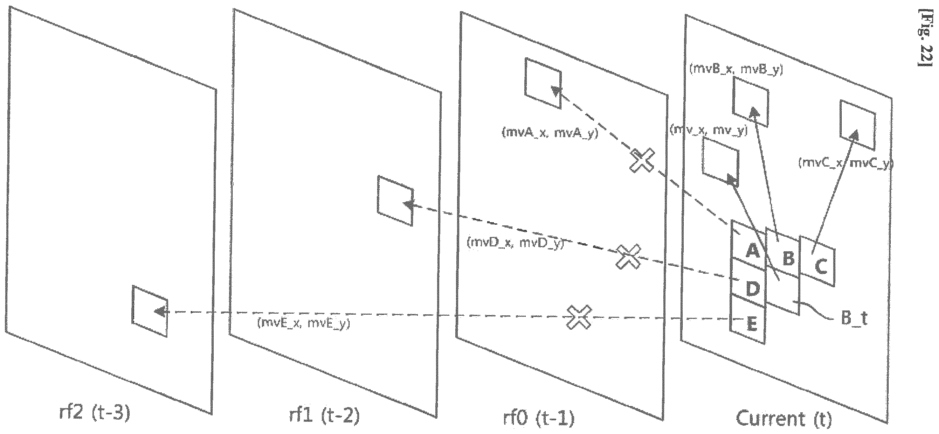

FIG. 20 is an example view for illustrating a case in the image encoding method according to an embodiment of the present invention of excluding from a candidate group when a temporal distance between a reference picture of a current block and a reference picture of a candidate block is equal to or greater than a predetermined distance, and including in a candidate group after performing scaling according to a distance when the temporal distance is less than the predetermined distance. FIG. 21 is an example view for illustrating a case in the image encoding method according to an embodiment of the present invention of adding a current picture to a prediction candidate group when a picture reference by a current block is a picture different from the current picture. FIG. 22 is an example view for illustrating a case in the image encoding method according to an embodiment of the present invention of adding a current picture to a prediction candidate group when a picture referenced by a current block is the current picture.

In the image encoding method according to the present embodiment, a motion information prediction candidate may be selected from reference pictures (rf1, rf2, rf3, rf4, and rf5) which are encoded before predetermined times (t-1, t-2, t-3, t-4, and t-5) based on a time (t) of the current picture, and from candidate blocks within the current picture which are encoded before a current block of the current picture.

Referring to FIG. 20, the image encoding method according to the present embodiment may select a motion information prediction candidate of a current block from reference pictures (rf1, rf2, rf3, rf4, and rf5) which are encoded temporally before the current picture (current (t)).

In one embodiment, when a current block (B_t) is encoded by referencing a second reference picture (rf1), for a left upper block (A) referencing a picture having a temporal distance equal to or greater than 3 based on the second reference picture (rf1), scaling is not allowed so that a corresponding motion vector (mvA_x', mvA_y') is not included in a candidate group. However, motion vectors of remaining blocks may be included in the candidate group by being scaled since the blocks have a temporal distance less than 3 based on (t-2). A subset of a motion vector included in the candidate group is as below.

$$MVS = \{(mvB\_x', \quad mvB\_y'), \quad (mvC\_x', mvC\_y'),$$
$$(mvD\_x', \quad mvD\_y'), \quad (mvE\_x', \quad mvE\_y')\}$$

In other words, a criterion of whether or not to include the motion vector in the candidate group may be based on a picture referenced by the current block, or may be based on the current picture. Accordingly, whether or not to add the motion vector to the candidate group may be determined by a distance between pictures, and information for the same, for example, information of a threshold or a picture being a criterion may be transmitted through a sequence, a picture, a slice, etc. In FIG. 20, solid lines show motion vectors of respective blocks, and dotted lines show blocks that are scaled properly to a picture referenced by a current block. The above feature may be represented as the Formula 1 below.

[Formula 1]

$$scaled\ factor = (POCcurr - POCcurr\_ref) / (POCcan$$
$$- POCcan\_ref)$$

In the Formula 1, POCcurr means a POC of the current picture, POCcurr_ref means a POC of the picture referenced by the current block, POCcan means a POC of a candidate block, and POCcan_ref means a POC of a picture referenced by the candidate block. Herein, the POC of the candidate block may represent a POC identical to the current picture when the candidate block is spatially adjacent candidate block, and may represent a POC different from the current picture when the candidate block is a block (co-located block) corresponding to a position temporally identical within a frame.

For example, as shown in FIG. 21, when a current block (B_t) and a reference picture are different so that scaling is performed, motion vectors obtained by scaling a corresponding motion vector, for example, {(mvA_x', mvA_y'), (mvC_x', mvC_y'), (mvD_x', mvD_y'), and (mvE_x', mvE_y')}, may be included in a candidate group. Unlikely in a general case in which a motion vector is included in a candidate group even when a reference picture index is different as in a HEVC, the above feature represents that there may be a limit according to which the reference picture is used as a reference picture.

In addition, as shown in FIG. 21, when a picture referenced by a current block (B_t) is another picture (t-1, t-2, t-3) different from the current picture(t), that is, in case of general inter-prediction (Inter), and a current picture is a picture different form the current picture as the current block (B_t), corresponding motion vectors {(mvA_x, mvA_y), (mvC_x, mvC_y), (mvD_x, mvD_y), (mvE_x, mvE_y)} may be included in a candidate group except when the picture of the candidate group indicates the current picture (t).

In addition, as shown in FIG. 22, when a picture referenced by a current block (B_t) is a current picture (t), motion vectors {(mvB_x,vB_y), (mvC_x, mvC_y)} within the current picture(t) may be added to a candidate group. In other words, when the same reference picture is indicated, that is, when the same picture is indicated by comparing a reference picture index, corresponding motion vectors may be added to the candidate group. This is because, since block matching is performed in a current picture (t), motion information used in conventional inter-prediction (inter) that references another picture is not required. In addition, except for performing block matching in a current picture (t), when reference picture indexes are different from each other as in a H.264/AVC, it may be implemented in a method of being excluded from a candidate group.

The present embodiment shows an example condition that a reference picture indicates a current picture. However, it may be extended to a case that the reference picture does not indicate the current picture. For example, a set such as 'a block using a picture further than a picture indicated by the current block is excluded' may be used. In FIG. 16, some blocks (A, B, an E) may be excluded from a candidate group since a temporal distance is farther than t-2.

In the present embodiment, although a current block and a reference picture are different, the reference picture may be included in a candidate group by performing scaling. It is assumed that a number (n) of motion vector candidates is 2. The below group 1_1 and group 1_2 show a case in which a reference picture of the current block is not the current picture.

The group 1_1 includes adjacent blocks or non-adjacent but upper blocks (A, B, C, I, and J) based on the current block, and priorities of availability checking for the blocks are as sated below.

Order of priority: C → B → A → I → J → C_s → B_s → A_s → I_s → J_s

The group 1_2 includes adjacent or non-adjacent but left and left lower blocks (D, E, H) based on the current block, and priorities of availability checking for the blocks are as stated below.

Order of priority: D → E → H → D_s → E_s → H_s

In the above order, a block having a symbol with a subscript (s) refers to a block having been scaled.

Meanwhile, in a modified example of the present embodiment, first, availability checking is performed for some blocks (A, B, C, I, and J) of the group 1_1 or for some blocks (D, E, and H) of the group 1_2 in a predetermined order of priority. Then, when it is determined that the blocks are non-available even though the blocks are Inter encoded but reference pictures thereof are different to the reference picture of the current block, the blocks are scaled according to a distance of a reference picture of the candidate block with the current picture (t), and then availability checking may be additionally performed for the scaled blocks (C_s, B_s, A_s, I_s, J_s, D_s, E_s, and H_s) according to a predetermined priority. According to the above availability checking, the image encoding device may determine two candidates, one candidate from each group, and use a motion vector of an optimized candidate block of the candidate group as a motion vector prediction value of the current block.

Meanwhile, when even a single candidate block is not obtained from a single group, for example, group 1_1, two candidate blocks may be obtained from the other group 1_2. In other words, when two candidates are not padded from a spatially adjacent block, a candidate block may be obtained from a temporal candidate group.

In one embodiment, when a reference picture of a current block is a current picture, blocks (co-located block) positioned at an identical position within a temporally adjacent reference picture, and blocks obtained by scaling the above blocks may be used. The above blocks (G, F, G_s, and F_s) may have the following order of priorities (G → F → G_s → F_s).

As similar to processing spatially adjacent candidate blocks, availability checking is performed according to the priority. When a distance between a picture of a candidate block and a reference picture of a candidate block is different from a distance between a current picture and a reference picture of a current block, availability checking may be performed for a candidate block that has been scaled. When the reference picture of the current block is the current picture, the above process is not performed.

Combined list

When motion information of each reference picture present in reference picture lists (L0 and L1) is present, the reference picture lists (L0 and L1) are obtained by performing two-directional prediction for a current block. Availability checking is performed according to a preset candidate group priority. Herein, the candidate that is encoded by two-directional prediction is checked first.

When respective reference pictures are different, scaling is performed. Among candidate blocks previously obtained, blocks encoded by one-directional prediction are added to a preliminary candidate group when searching is performed spatially and temporally, when blocks obtained by two-directional prediction are added to a candidate group, and when a number of blocks does not exceed a maximum candidate number. The candidate for two-directional prediction may be obtained by combining the above candidates.

[Table 3]

| candidats index | L0 | L1 | candidats index | L0 | L1 |
|---|---|---|---|---|---|
| 0 | $mvA_1$,ref1 | $mvA_2$, ref0 | 0 | $mvA_1$,ref1 | $mvA_2$, ref0 |
| 1 | $mvB_1$, ref1 | $mvB_2$, ref0 | 1 | $mvB_1$ ,ref1 | $mvB_2$'. ref0 |
| 2 | (mvC,ref0) | | 2 | mvC ,ref1 | mvD, ref0 |
| 3 | | (mvD, ref0) | 3 | mvC ,ref1 | mvE', ref0 |
| 4 | | (mvE, ref1) | 4 | | |
| (a) | | | (b) | | |

First, it is assumed that motion information of two-directional prediction of a current block is referenced from a reference picture 1 in L0 and a reference picture 0 in L1. In Table 3(a), motion information of a block included as a first candidate are (mvA1, ref1) and (mvA2, ref0), and motion information of a block included as a second candidate are (mvB1', ref1) and (mvB2', ref0). Herein, the apostrophe symbol (') means that is a scaled vector. When a number of candidates is two after completing spatial and temporal search, herein, assuming that n is 5, blocks that are one-directionally predicted in a previous process may be added to a preliminary candidate according to a preset priority.

In Table 3(a), the candidates are not padded as many as the maximum number of candidates, thus new candidates may be added by combining one-directional candidates obtained by performing scaling using remaining motion vectors which are mvC, mvD, and mvE.

In Table 3(b), each of motion information of a block obtained by one-directional prediction may be scaled according to a reference picture of a current block. Herein, an example of configuring a new combination by using one-directional candidates has been described. However, a new combination may be configured by using motion information of respective two-directional reference pictures (L0 and L1) which have been already added. Herein, the above configuration is not performed for one-directional prediction. In addition, the above configuration is not performed when a reference picture of a current block is a current picture.

Fixed candidate

When a candidate block having a maximum n candidates (in the present embodiment, assuming n being 2) is not configured by the above process, a fixed candidate having preset fixed coordinates may be added. A fixed candidate having fixed coordinates such as (0,0), (-a,0), (-2*a,0), and (0,-b) may be used, and a number of fixed candidates may be set according to the maximum number of candidates.

Fixed coordinates may be set as above, or a fixed candidate may be set by calculating an average, a weighted average, a median value of at least two motion vectors included in a candidate group up to the present by the above process. When n is 5, and three candidates {(mvA_x,mvA_y), (mvB_x, mvB_y), (mvC_x, mvC_y)} are added up to the present, the remaining two candidates may be added by fixed candidates according to a priority, the fixed candidates may be selected from a fixed candidate group including fixed candidates with preset priorities. The fixed candidate group may include fixed candidates such as {(mvA_x + mvB_x)/2, (mvA_y + mvB_y)/2), ((mvA_x + mvB_x + mvC_x)/3, (mvA_y + mvB_y + mvC_y)/3), (median(mvA_x, mvB_x, mvC_x), median(mvA_y, mvB_y, mvC_y)), etc.

In addition, a fixed candidate may be differently set according to a reference picture of a current block. For example, when a current picture is a reference picture, a fixed candidate may be set to (-a,0), (0,-b), (-2*a,0), etc. When the current picture is not the reference picture, the fixed candidate may be set to (0,0), (-a,0), (average(mvA_x, ...), average(mvA_y, ...)), etc. Information for the same may be preset in the encoder or the decoder, or may be transmitted in a sequence unit, a picture unit, a slice unit, etc.

Hereinafter, embodiments to which a fixed candidate is applied will be described with an example. In the following embodiments, it is assumed that n is 3.

<Embodiment 1 : n=3>

When a reference picture of a current block is a current picture, and reference pictures of a current block (B_t) are reference picture (rf1 and ref0). Numbers 0, 1, 2, 3, 4, and 5 of rf0, rf1, rf2, rf3, rf4, and rf5 which represent reference pictures and other pictures are applied to the present embodiment as an example, and do not specify any meaning.

(spatial search: E → D → A → B → C → E_s → D_s → A_s → B_s → C_s)
E (Inter, rf0) → D → A → B → C → E_s → D_s → A_s → B_s → C_s : E excluded (since the reference picture of the current block is the current picture)
E (removed) → D (Inter, ref2) → A → B → C → E_s → D_s → A_s → B_s → C_s : D excluded
E (removed) → D (removed) → A (Inter, rf1) → B → C → E_s → D_s → A_s → B_s → C_s : A included
E (removed) → D (removed) A (included) → B (Inter, rf1) → C → E_s → D_s → A_s → B_s → C_s : B included (determined to be different after similarity checking)
E (removed) → D (removed) → A (included) → B (included) → C (Intra) → E_s → D_s → A_s → B_s → C_s : C excluded
E (removed) →D (removed) →A (included) → B (included) → C (removed) → E_s → D_s → A_s → B_s → C_s : E_s excluded (There is no need to be scaled since the reference picture of the current block is the current picture.)
E (removed) → D (removed) →A (included) → B (included) → C (removed) → E_s (removed) → D_s → A_s → B_s → C_s : D_s included (After checking, similarity is determined to be different. In addition, it is excluded in D since reference pictures are different. Herein, there is no need to compare with a reference picture since it has been scaled.)

<Embodiment 2 : n=3>

When a reference picture of a current block is a current picture, and a reference picture of a current block is a single reference picture (rf0).

(spatial search: E → D → A → B → C → E_s → D_s → A_s → B_s → C_s)
E (Inter, rf1) → D → A → B → C → E_s → D_s → A_s → B_s → C_s : E excluded
E (removed) → D (Intra) → A → B → C → E_s → D_s → A_s → B_s → C_s : D excluded
E (removed) → D (removed) → A (Inter, rf0) → B → C → E_s → D_s → A_s → B_s → C_s : A included
E (removed) → D (removed) → A (included) → B (Inter, rf0) → C → E_s → D_s → A_s → B_s → C_s : B included
(according to a result of similarity checking)
E (removed) → D (removed) → A (included) → B (included) → C (Intra) → E_s → D_s → A_s → B_s → C_s : C excluded
E (removed) → D (removed) → A (included) → B (included) → C (removed) →E_s → D_s → A_s → B_s → C_s : C_s excluded from E_s

Since three 3 candidates are not padded yet, a fixed candidate may be applied, or additional candidate groups such as H, I, J, etc. may be checked.

<Embodiment 3 : n=3>

When a reference picture of a current block is not a current picture, a reference picture of a current block is a single reference picture (rf1), and a condition that a reference picture having a distance with the reference picture of the current block is equal to or greater than 2 is exclude from a candidate group is added. Herein, when a number x of (t-x) of a reference picture (rfx-1) means a distance from a current picture (t), scaling may not be supported from (t-2).

spatial search: E → D → A → C → E_s → D_s → A_s → B_s → C_s)
E (Intra) → D → A → B → C → E_s → D_s → A_s → B_s → C_s : E excluded
E (removed) → D (Inter, rf2) → A → B → C → E_s → D_s → A_s → B_s → C_s : D excluded
E (removed) → D (removed) → A (Inter, rf1) → B → C → E_s → D_s → A_s → B_s → C_s : A included
E (removed) →D (removed) → A (included) → B (Inter, rf3) → C → E_s → D_s → A_s → B_s → C_s : B excluded
E (removed) → D (removed) → A (included) → B (removed) → C (Inter, rf2) → E_s → D_s → A_s → B_s → C_s : C excluded
E (removed) → D (removed) → A (included) → B (removed) → C (removed) → E_s (Intra) → D_s → A_s → B_s → C_s : E_s excluded
E (removed) → D (removed) → A (included) → B (removed) → C (removed) → E_s (removed) → D_s → A_s → B_s → C_s : D_s included (similarity checking, using scaled motion vector)
E (removed) → D (removed) → A (included) → B (removed) → C (removed) → E_s (removed) → D_s (included) → A_s → B_s → C_s : A_s excluded (already included in A)
E (removed) → D (removed) → A (included) → B (removed) → C (removed) → E_s (removed) → D_s (included) → A_s (removed) → B_s → C_s : B_s excluded (since a number of reference pictures is equal to or greater than 2)
E (removed) → D (removed) → A (included) → B (removed) → C (removed) → E_s (removed) → D_s (included) → A_s (removed) → B_s (removed) → C_s : C_s included (similarity checking, using scaled motion vector)

<Embodiment 4 : n=3>

When a reference picture of a current block is not a current picture, and the current picture is a specific reference picture (rf1).

(spatial search : two motion vector candidates are selected by spatial search)
(temporal search : G → F → G_s → F_s)
G (Intra) → F → G_s → F_s : G excluded
G (removed) → F (Inter, rf3) → G_s → F_s : F excluded (Herein, it is assumed that a scaled factor is not 1. In other words, a distance between the current block of the current picture and the reference picture is different from a distance between a picture of a co-located block and a reference picture of a corresponding block.)
G (removed) → F (removed) → G_s → F_s : G_s excluded (since G is Intra)
G (removed) → F (removed) → G_s (removed) → F_s : F_s included (After checking, similarity is determined to be different. Herein, since a motion vector is a scaled vector, there is no need to compare with a reference picture)

Hereinafter, motion vector copy (MVC) will be described in detail.

Description of P-picture or B-picture

In the present embodiment, it is assumed that temporal candidates (F and G) are also included. A candidate group includes A, B, C, D, E, F, G, H, I, and J. Although a searching order is not determined, herein, it is assumed that an MVC candidate is spatially searched, temporally searched, and is searched by configuring a combined list, and then a fixed candidate is added.

In other words, in the above described part, similar to the above embodiment, searching is performed in an arbitrarily defined order, and is not performed by using a preset order. An order of priority is determined, and availability checking is performed according to the priority. It is assumed that n is 5, and the priority is as represented in the parenthesis.

In the following description, a part differing from the described motion vector prediction (MVP) will be described. MVP may be described in continuation of the above description, but the part of the scaling description is excluded. For a spatial candidate, availability checking may be performed while scaling is omitted. However, similar to MVC, a reference picture type, a distance with a reference picture of a current picture or current block, etc. may be excluded from a candidate group.

When a combined list is present, a candidate for two-directional prediction may be configured by combining candidates added up to the present as Table 4 below.

[Table 4]

| candidate index | L0 | L1 | candidate index | L0 | L1 |
|---|---|---|---|---|---|
| 0 | mvA,ref0 | | 0 | mvA,ref0 | |
| 1 | mvB,ref1 | | 1 | mvB,ref1 | |
| 2 | | mcC, ref0 | 2 | | mvC, ref0 |
| 3 | | | 3 | mvA,ref0 | mvC, ref0 |
| 4 | | | 4 | mvB,ref1 | mvC, ref0 |
| (a) | | | (b) | | |

As shown in Table 4 (a), a new candidate may be added to a motion vector candidate group by combining a candidate using a reference list LO and a candidate using a reference list L1. When a preset number of motion vectors is not padded, as shown in Table 4(b), a new candidate may be added by combining a candidate next to L0 and a candidate using L1.

The above described motion vector candidate selection method will be described below as an example. It is assumed that n is 3 in the example.

<Embodiment 5: n=3>

When a reference picture of a current block is not a current picture, a reference picture ref of a current block is 1. (spatial search : B → D → C → E → A → J → I → H)

B (Inter, rf3) → D → C → E → A → J → I → H : B included
B (included) → D (Inter, rf1) → C → E → A → J → I → H : D included (similarity check)
B (included) → D (included) → C (Intra) → E → A → J → I → H : C excluded
B (included) → D (included) → C (removed) → E (Inter, rf0 ) → A → J → I→ H : E excluded
B (included) → D (included) → C (removed) → E (removed) → A (Inter, rf3) → J → I → H : A included (similarity checking)

<Embodiment 6: n=3>

An example in which a reference picture of a current block is a current picture is as below.

(spatial search : B → D → C → E → A → J → I → H)
B (Inter, rfl) → D → C → E → A → J → I → H : B excluded
B (removed) → D (Intra) → C → E → A → J → I → H : D excluded

B (removed) → D (removed) → C (Inter, rf0) → E → A → J → I → H : C included

B (removed) → D (removed) → C (included) → E (Inter, rf0) → A → J → I → H : E included (similarity check)

B (removed) → D (removed) → C (included) → E (included) → A (Inter, rf2) → J → I → H : A excluded

B (removed) → D (removed) → C (included) → E (included) → A (removed) → J (Inter, rf0 ) → I →H : J included (similarity check)

Encoding may be performed according to a mode such as MVP, MVC, etc. which find a candidate of optimized motion information as above.

In case of a skip mode, encoding may be performed by using MVC. In other words, information for an optimized motion vector candidate may be encoded after processing a skip flag. When a number of candidates is 1, the above process may be omitted. Encoding may be performed by performing transform and quantization on a residue component that is a difference value between a current block and a prediction block rather than separately encoding a motion vector difference.

In case of not being a skip mode, whether or not to process motion information is checked by performing MVC according to an order of priority. When the motion information is processed, information of a candidate group of an optimized motion vector may be encoded. When the motion information is not processed by performing MVP, the motion information may be processed by performing MVP. In performing MVP, information of an optimized motion vector candidate may be encoded. Herein, when a number of candidates is 1, the processing of the motion information may be omitted. In addition, information about a difference value with a motion vector of a current block, a reference direction, a reference picture index, etc. may be encoded, a residue component may be obtained, and encoding may be performed by performing transform and quantization.

Afterwards, parts related to codec such as entropy and post-process filtering will be omitted in order to avoid redundancy with the above description.

A motion vector selection method used in the above image encoding method will be briefly described as below.

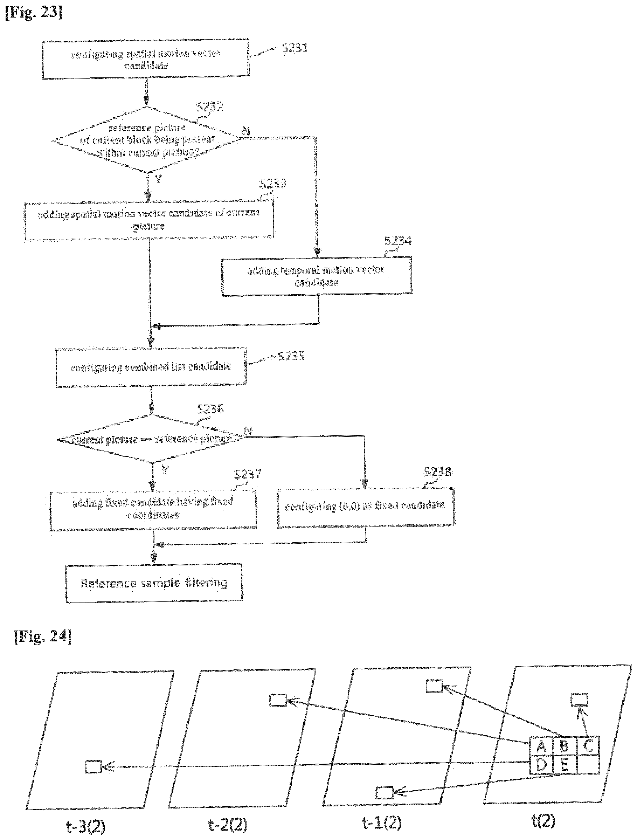

FIG. 23 is a flowchart of an image encoding method according to another embodiment of the present invention.

Referring to FIG. 23, a method of selecting a motion vector in the image encoding method according to the present embodiment fundamentally includes: step S231 of configuring a spatial motion vector candidate; step S232 of determining whether or not a reference picture of a current block (blk) is present within a current picture; and when the reference picture of the current block (blk) is present within the current picture (yes, Y), step S233 of adding a spatial motion vector candidate of the current picture. The step S233 refers to checking an additional spatial motion vector candidate and adding the checked spatial motion vector candidate.

In other words, in the present embodiment, a method of adding a motion vector to a candidate group includes: configuring a motion vector of a spatially adjacent block in a candidate group by performing MVC or MVP, and adding motion information of a block present in the same current picture when a reference picture of the current block is the current picture. Blocks such as I, J, and H of FIG. 19 may correspond to the above case. The above blocks may be blocks that are not immediately adjacent to the current block but recently INTER encoded. The above blocks means that the candidate group is configured from a block positioned spatially different from the block obtained by MVC, MVP, etc. Thus, the above blocks may be represented by using "added" or "additional".

When the reference picture of the current block is not the current picture, a candidate group may be set from a block of a temporally adjacent picture. Then, by configuring a combined list, a candidate for two-directional predictions may be configured by a combination of added candidates up to the present. In addition, a fixed candidate may be included according to the reference picture of the current picture. In addition, when the current picture is the reference picture, a fixed candidate having preset fixed coordinates may be added to the candidate group of the motion vector. Otherwise, a fixed candidate having (0, 0) coordinates may be included in the candidate group of the motion vector.

Meanwhile, in step S232, when the reference picture of the current block (blk) is not present within the current picture (no, N), step S234 of searching a temporal motion vector candidate, and adding the searched temporal motion vector candidate may be performed.

Then, the image encoding device performing the motion vector selection method, in step S235, may configure a combined list candidate including the motion vector candidates configured in at least one of steps S231, S233, and S234.

Then, the image encoding device, in step S236, checks whether or not the current picture is a reference picture, and in step S237, adds a fixed candidate having preset fixed coordinates when the current picture is the reference picture, and a number of combined list candidates is smaller than a number of preset motion vector candidates.

Meanwhile, in step S236, when the current picture is not the reference picture, the image encoding device, in step S238, adds a fixed candidate having (0, 0) coordinates to the candidate group.

When the reference pixel is configured by the above motion vector selection method, reference pixel filtering of FIG. 9 may be performed, but it is not limited thereto. In one embodiment, when the reference pixel is configured by the motion vector selection method, and motion estimation is performed based on the above, interpolation of FIG. 15 may be performed.

FIG. 24 is a view for illustrating when a motion vector precision varies in a block unit. FIG. 18 is a view for illustrating a case in the image encoding and decoding method according to an embodiment of the present invention of determining a motion vector precision of a block according to an interpolation precision of a reference picture.

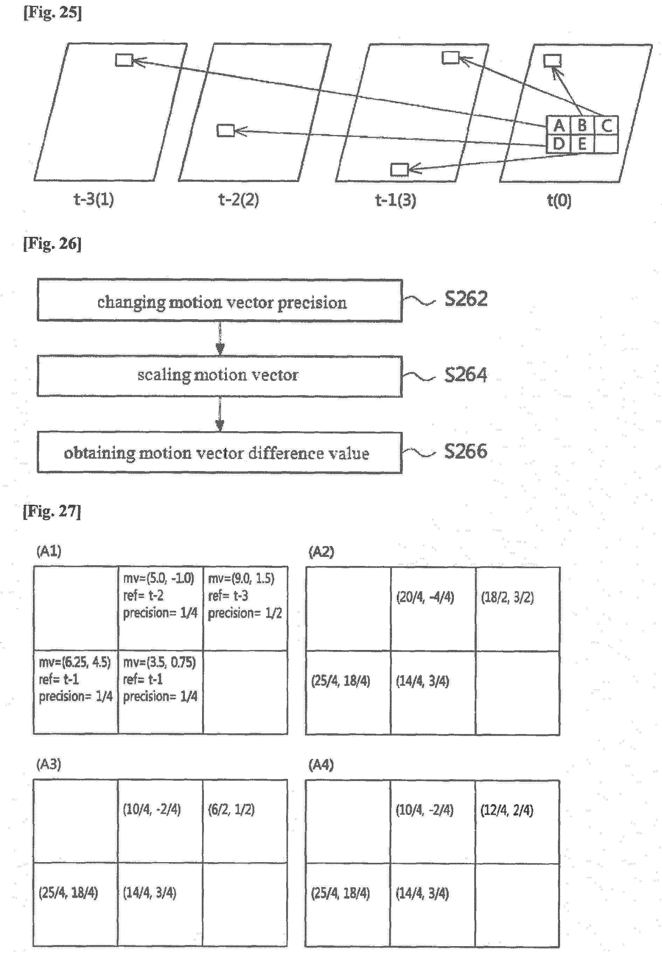

In FIG. 24, it is assumed that a number stated in a lower parenthesis of each picture, that is, (2), is interpolation precision depth information. In other words, in FIG. 24, respective interpolation precision of pictures including a current picture (t) and reference pictures (t-1, t-2, and t-3) are constant, but a motion vector precision is adaptively determined in a block unit. In FIG. 25, a motion vector precision is determined according to an interpolation precision of a reference picture. In FIG. 25, depth information of an interpolation precision

A motion vector prediction value may be generated for the two respective above cases based on of 'a motion information prediction candidate selection' or 'a motion vector candidate selection' which are described above.

In the present embodiment, a maximum number of candidates which is used for predicting a motion vector may be set to 3. Herein, a candidate block may be limited to left, upper, and right upper blocks of a current block. The candidate block may be set with a spatially and temporally adjacent block and a spatially non-adjacent block.

FIG. 26 is a flow chart of an image encoding and decoding method using a motion vector difference according to an embodiment of the present invention.

Referring to FIG. 26, the image decoding method according to the present embodiment may configure a motion information prediction candidate group by using the prediction unit, and calculate a differential value with a motion vector of a current block.

Describing in more detail, first, in step S262, a motion vector of a block belonging to a candidate group may be changed to according to a precision unit of the motion vector of the current block.

Then, step S264 of motion vector scaling may be performed according to a distance between the motion vector of the current block and the reference picture, that is, a distance between the current picture and the reference picture, and a distance between a picture of a block belonging to the candidate group and a reference picture of the corresponding block.

Then, in step S266, the prediction unit may obtain a motion vector difference between the current block and the corresponding block based on the motion vectors scaled in a single picture.

A method of obtaining a motion vector difference will be described in detail by using the above steps.

FIG. 27 to FIG. 32 are views for illustrating a process in the image encoding method according to an embodiment of the present invention of calculating a motion vector difference in various cases when an interpolation precision is determined in a block unit.

When an interpolation precision is determined in a picture unit.

As shown in FIG. 27, it is assumed that three blocks adjacent to a current block are candidate blocks for encoding motion information. Herein, it is assumed that an interpolation precision of a current picture(t) is an integer (Int), an interpolation precision of a first reference picture (t-1) is 1/4, an interpolation precision of a second reference picture (t-2) is 1/4, and, an interpolation precision of a third reference picture (t-3) is 1/2.

In FIG. 27, blocks of (A1) may be represented as blocks of (A2) according to each motion vector precision.

When it is set that a block indicating a reference picture different from a reference picture of a current block may be used as a candidate by performing scaling in consideration of a candidate between reference pictures, a block of (A2) may be scaled in consideration of a distance between a reference picture of candidate blocks of (A3) and the reference picture of the current block. A block of the same reference picture is not scaled. When performing scaling, when the above distance is smaller than a distance between the current picture and the reference picture, at least one of rounding, ceiling, and flooring may be selected and applied. Then, a motion vector of a candidate block may be adjusted in consideration of a motion vector precision of the current block such as blocks of (A4). In the present embodiment, it is assumed that a right upper block is selected as an optimized candidate.

In FIG. 27, based on a current block positioned at lower center, since a precision of a right upper block is a 1/2 unit, in order to change the unit to a 1/4 unit, the unit is multiplied by 2. However, in an alternative case, for example, when the precision is adjusted from a 1/8 unit to a 1/4 unit, an optimized candidate (MVcan) may be selected from the candidate group, and a difference value with a motion vector (MVx) of the current block may be calculated. Then the calculated difference value may be encoded. This may be expressed as the formula below.

$$MVD = MVx - MVcan \rightarrow (2/4, \; 1/4)$$

In the above described embodiment, scaling is performed first, and then the precision is adjusted, but it is not limited thereto. The precision may be adjusted first, and then scaling may be performed.

Assuming that an interpolation precision is determined in a block unit, a reference picture of a current block and reference pictures of candidate blocks are identical.

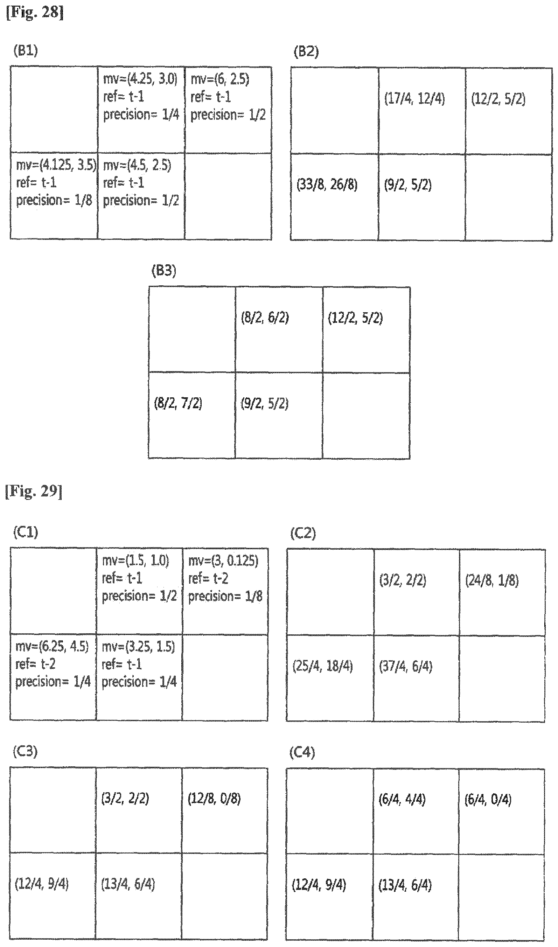

As shown in FIG. 28, three blocks adjacent to the current block are candidate blocks for encoding motion information. Herein, it is assumed that all interpolation precisions of reference pictures are 1/8. Blocks of (B1) may be represented as blocks of (B2) according to each motion vector precision. Scaling is omitted since the reference picture of the current block and the reference picture of the candidate block are identical.

Then, respective motion vectors of candidate blocks of (B2) may be adjusted as blocks of (B3) according to a motion vector precision of the current block.

Then, an optimized candidate (MVcan) is selected from a candidate group, a difference value with a motion vector (MVx) of the current block is calculated, and the calculated difference value is encoded. In FIG. 28, based on the current block positioned at lower center, it is assumed that an upper block thereof is selected as an optimized candidate.

$$\text{MVD} = \text{MVx} - \text{MVcan} \rightarrow (1/2, -1/2)$$

In case of when an interpolation precision is determined in a block unit, and a reference picture of a current block and reference pictures of candidate blocks are different.

In the present embodiment, it is assumed that interpolation precisions of reference pictures are identical. In one embodiment, interpolation precisions of reference pictures may be 1/8.

Referring to FIG. 29, blocks of (C1) may be represented as blocks of (C2) according to each motion vector precision. In addition, blocks of (C3) may be obtained by performing scaling since the reference picture of the current block and the reference picture of the reference picture are different.

Then, among blocks (C3), motion vectors of candidate blocks may be adjusted as blocks of (C4) in consideration of a motion vector precision of the current block. Then, an optimized candidate (MVcan) may be selected from a candidate group, a difference value (MVD) between a motion vector (MVx) of the current block may be calculated, and the calculated difference value (MVD) may be encoded. In FIG. 29, based on the current block positioned at lower center, it is assumed that a right upper block thereof is selected as an optimized candidate. This may be expressed as the formula below.

$$\text{MVD} = \text{MVx} - \text{MVcan} \rightarrow (1/4, 3/4)$$

In case of when an interpolation precision is determined in a picture unit, and a temporally positioned candidate block is included.

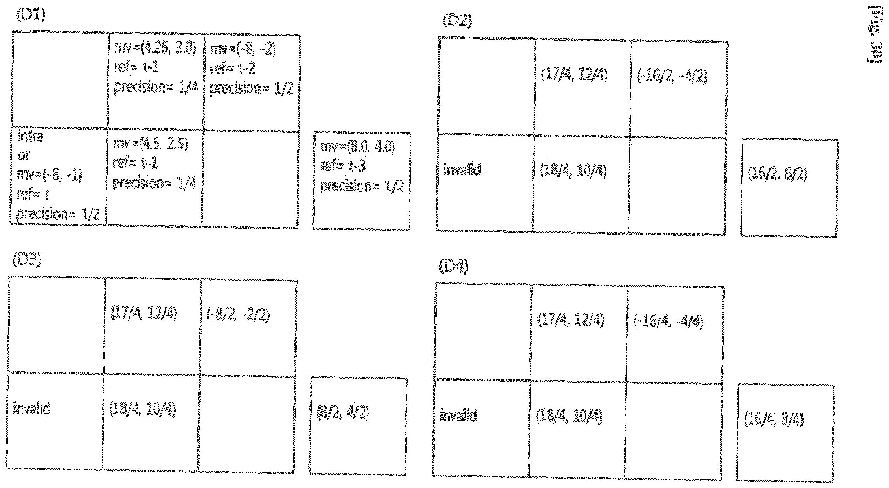

In the present embodiment, it is assumed that interpolation precisions of reference pictures are identical. In one embodiment, it is assumed that interpolation precisions of reference pictures are 1/2. As shown in FIG. 30, blocks of (D1) may be represented as blocks of (D2) according to each motion vector precision. In case of a block using a current picture as a reference picture, the corresponding block may be excluded (invalid) from a candidate group since it is not general motion prediction.

Then, blocks of (D3) may be obtained by performing scaling since the reference picture of the current block and the reference picture of the candidate block are different. Herein, it is assumed that a picture of a co-located block is a specific reference picture (t-1).

Then, among blocks of (D3), motion vectors of candidate block may be adjusted as blocks of (D4) in consideration of a motion vector precision of the current block positioned at lower center. Then, an optimized candidate (MVcan) may be selected from a candidate group, a difference value (MVD) with a motion vector (MVx) of the current block may be calculated, and the calculated difference value (MVD) may be encoded. In the present embodiment, it is assumed that the co-located block is selected as an optimized candidate. The above configuration may be expressed as the formula below.

$$\text{MVD} = \text{MVx} - \text{MVcan} \rightarrow (2/4, 2/4)$$

In case of when an interpolation precision is determined in a block unit, and a current block references a current picture.

In the present embodiment, it is assumed that interpolation precisions of reference pictures are identical. In one embodiment, interpolation precisions of reference picture may be 1/4.

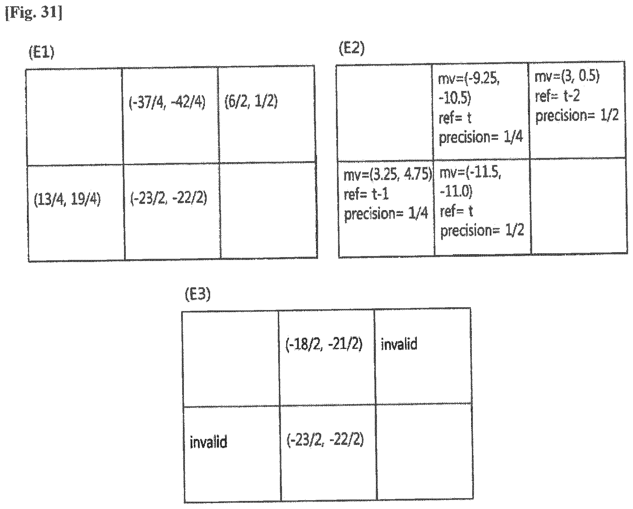

As shown in FIG. 31, blocks of (E1) may be represented as blocks of (E2) according to each motion vector precision. In a case that a block using a current picture positioned at lower center is selected as a reference picture, since it is not general motion prediction and block matching is performed in the current picture, an upper block performing the same process is selected as a candidate, and remaining blocks are excluded (invalid) from the candidate group.

Since the reference picture of the current block and the reference picture of the candidate block are identical, scaling is not performed. Then, motion vectors of candidate blocks may be adjusted as blocks of (E3) in consideration of a motion vector precision of the current block.

Then, an optimized candidate (MVcan) may be selected from a candidate group, a difference value (MVD) with a motion vector (MVx) of the current block may be calculated, and the calculated difference value (MVD) may be encoded. In the present embodiment, it is assumed that an upper block is selected as an optimized candidate. The above configuration may be expressed as the formula below.

$$MVD = MVx - MVcan \rightarrow (-5/2, -1/2)$$

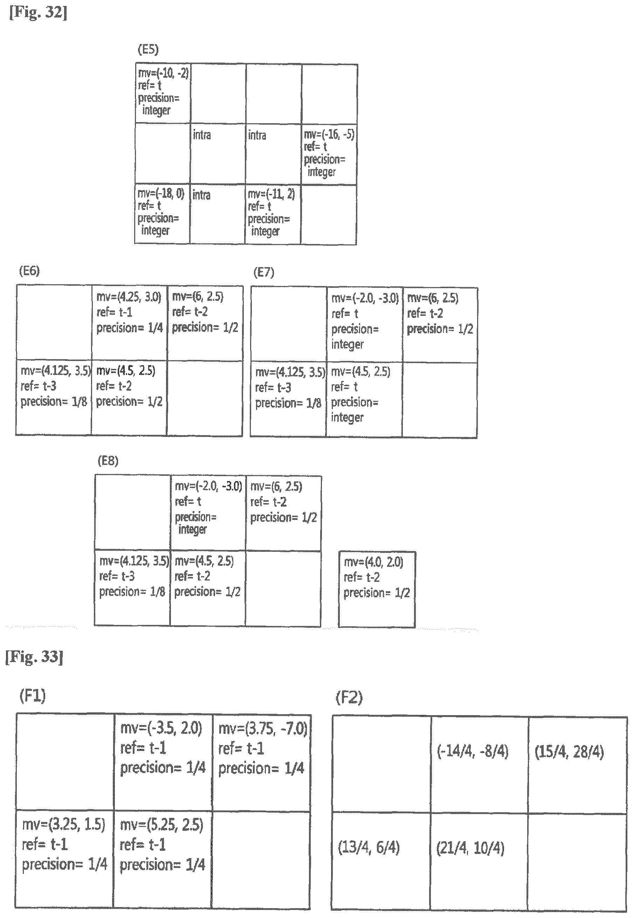

Then, the image encoding and decoding method according to the present embodiment may use information of a reference block adjacent to a current block to be encoded. Related to the above, as shown in FIG. 32, an encoding mode of a neighbor block and information thereof may be used based on the current block.

In FIG. 32, upper blocks (E5) are blocks when a current picture is an I-picture, encoding is performed by generating a prediction block by performing block matching in the current picture.

In inter-prediction of the present embodiment, the method of the present embodiment is applied to a method based on conventional extrapolation. Inter-prediction of the present embodiment may be represented as INTRA, and Inter may be included when block matching is performed in a current picture.

Describing in more detail, in case of Inter, information such as motion vector, reference picture, etc. may be used. When an encoding mode of a neighbor block and an encoding mode of the current block are identical, information of a corresponding block (E5, E6, and E7) may be used when encoding the current block in a stated order. In addition, for blocks which are not immediately adjacent, when a block is added to a candidate block by checking an encoding mode of the block in blocks of (E5) and the encoding mode is inter, a reference picture (ref) is additionally checked, and blocks with ref being t may be used for encoding the current block. When a motion vector precision is determined according to an interpolation precision of a reference picture, for example, when an interpolation precision of the current picture is an integer unit, motion vectors of Inter encoded blocks may be represented as an integer unit.

(E6) shows a case where a current picture is a P or B-picture. Information of a reference block adjacent to a current block to be encoded may be used. When a motion vector precision is determined according to an interpolation precision of a reference picture, motion vector precisions of respective blocks may be set according to interpolation precisions of respective reference pictures.

(E7) shows a case where a current picture is a P or B-picture, and the current picture is included (used) as a reference picture. A motion vector precision of each block may be determined according to an interpolation precision of a reference block.

(E8) shows a case that information of a co-located block is used for encoding a current block. A motion vector precision of each block may be determined according to an interpolation precision of each reference picture.

Then, when encoding and decoding, encoding motion information may be performed. However, in the present embodiment, encoding is performed by adaptively determining a precision for a motion vector difference value. In other words, when an interpolation precision of a reference picture is constant, and motion vector precisions between blocks are constant. In other words, a motion vector precision may be determined according to an interpolation precision of a reference picture.

FIG. 33 to FIG. 36 are views for illustrating a process in the image encoding method according to an embodiment of the present invention of representing a precision of a motion vector difference.

In the present embodiment, motion vectors of an optimized candidate block among various candidate blocks is (c, d), and a motion vector of a current block is (c, d). For convenience of description, it is assumed that reference pictures are identical.

As shown in (F1) of FIG. 33, it is assumed that an interpolation precision of a reference picture is 1/4. A motion vector difference (c-a, d-b) is calculated and transmitted to the decoder. For this, in the present embodiment, blocks of (F1) may be represented as blocks of (F2) according to each motion vector precision. Since the reference pictures are identical, and motion vector precisions of respective blocks are identical, motion vectors of blocks of (F2) may be directly used for encoding.

In other words, as shown in (F2), when (c,d) that is a motion vector of the current block is (21/4, 10/4) and an optimized candidate block is a left block, (a,b) that is a motion vector of the left block is (13/4, 6/4), thus a difference value therebetween (c-d, d-b) becomes (8/4, 4/4). Since the motion vector precision is a 1/4 unit, the precision may be processed in a binary index (bin index) by using 8 and 4 as the Table 5 below. However, when precision information of a motion vector difference value is transmitted, the precision may be processed in a shot bit index.

[Table]

| Integer number r | 0 | 1 | 2 | 3 | 4 | 5 | 6 | 7 | 8 | 9 |
|---|---|---|---|---|---|---|---|---|---|---|
| Integer | 0 | 1 | 2 | 3 | 4 | 5 | 6 | 7 | 8 | 9 |
| ½ | 0 | ½ | 1 | 3/2 | 2 | 5/2 | 3 | 7/2 | 4 | 9/2 |
| ¼ | 0 | ¼ | 2/4 | 3/4 | 1 | 5/4 | 6/4 | 7/4 | 2 | 9/4 |

When information that a motion vector difference of a current block has a precision in an integer unit is transmitted, a bin index shorter than conventional may be used by using 2 and 1 whereby 8 and 4 of a conventional bin index is changed to an integer unit. When various binarization methods are used, for example, when a unary binarization method is used, in order to transmit the above differential value (8/4, 4/4), 111111110 + 11110 of bits has to be transmitted. However, when precision information of the differential value and bits corresponding to (2/1, 1/1), that is 110 + 10, are transmitted, encoding efficiency may be improved by using shorter bits.

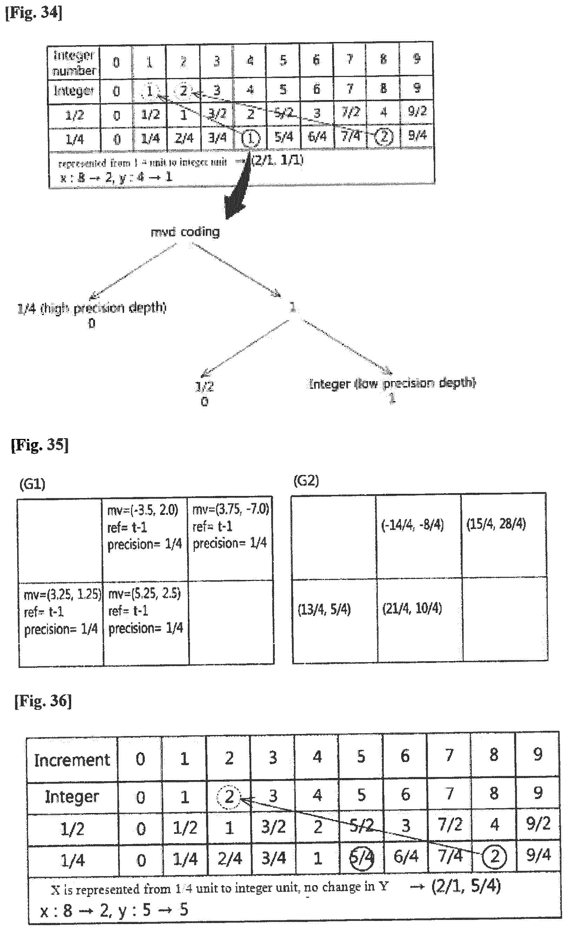

When a precision of a motion vector difference is represented as the method shown in FIG. 34, in the above case, information of 11 (integer) and information of the differential value (2/1, 1/1) may be transmitted.

In the above embodiment, a motion vector difference precision is applied for both x and y components. However, the motion vector difference precision may be independently applied.

In FIG. 35, (G1) may be represented as (G2) according to each motion vector precision. When reference pictures are identical, and respective motion vector precisions of blocks are identical, (G2) may be used for encoding a motion vector.

When it is assumed that an optimized candidate block is a left block of a current block, a differential value for the same may be represented as (8/4, 5/4). When a precision of a motion vector difference is respectively applied to x and y of the optimized candidate block represented as above, x may be represented as an integer unit being 2/1, and y may be represented as a 1/4 unit being 5/4.

When the precision of the motion vector difference is represented as the tree below in the Table of FIG. 34, information of 11 (integer) for x, information of 0 (1/4) for y, and information of 2/1 and 5/4 for each differential value may be transmitted (refer to FIG. 36).

In other words, in the above case, as shown in FIG. 36, a range for a differential value precision may be set from a maximum precision (1/4) to a minimum precision (integer) as a candidate group. However, the present invention is not limited to the above configuration, and the present invention may configure various candidate groups. It may be configured to include precisions of at least two units among a maximum precision (for example, 1/8) to a minimum precision (integer).

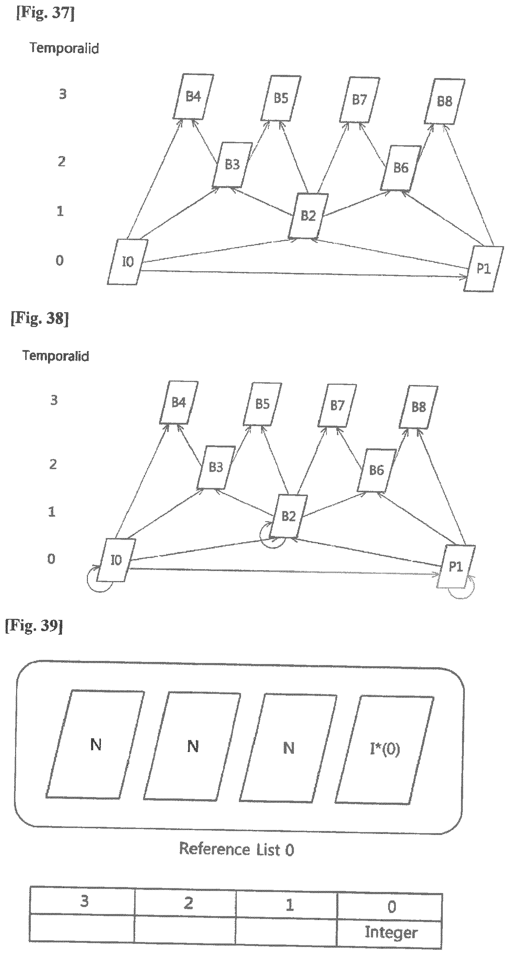

FIG. 37 shows an example of a reference structure of a random access mode in the image encoding and decoding method according to an embodiment of the present invention

Referring to FIG. 37, first, when encoding is sequentially performed from a picture having a lower temporal identifier (temporalID), an I-picture and a P-picture which have a lower ID are respectively encoded, then B(2) having a higher ID is encoded. It is assumed that a picture having an ID equal to or higher than itself is not referenced, and a picture having a lower ID may be selected as a reference picture.

First, describing based on FIG. 37, interpolation precisions of pictures used as a reference picture may be used by being constant (for example, any one of integer, 1/2, 1/4, 1/8). Alternatively, according to an implementation, interpolation precisions of pictures used as a reference picture may be differently set. For example, in case of an I-picture having an ID of 0, when the I-picture is used as a reference picture of a certain picture, the I-picture may have a distance of 1, 4, and 8 (in case of a picture B4, B2, and P1) by calculating a distance between pictures. In case of a P-picture, the P-picture may have a distance of 4, 2, and 1 (B2, B6, and B8). In case of B2 having an ID of 1, the B2 may have a distance of 2, 1, 1, and 2 (B3, B5, B7, and B6). In case of B3 having an ID of 2 may have a distance of 1, and 1 (B4 and B5).

An interpolation precision of each reference picture may be determined based on an average distance with a referenced picture. In other words, precise interpolation is required for a closer reference picture since a motion difference is low. In other words, for B3 or B6 having a short average distance with a referenced picture, interpolation is performed by increasing an interpolation precision (for example, 1/8). When a distance with a referenced picture is equal to or greater than that, an interpolation precision may be lowered. For example, the interpolation precision may be lowered to 1/4 (refer to case 1 the Table 6 below). Alternatively, when a precise interpolation precision is required for a reference picture that is farther away, opposite to the above example may be applied.

In addition, more precise interpolation may be performed for a picture that is referenced many times. For example, interpolation may be performed by increasing an interpolation precision of B2. Alternatively, other interpolation precision may be applied to a picture that is less referenced (refer to case 2 of the Table 6 below).

In addition, an interpolation precision may be differently applied according to a temporal layer. For example, more precise interpolation may be performed for a picture having an ID of 0, and a precision may be lowered for a picture having other ID, or vice_versa (refer to case 3 of the Table 6 below).

[Table 6]

| display | 0 | 1 | 2 | 3 | 4 | 5 | 6 | 7 | 8 |
|---|---|---|---|---|---|---|---|---|---|
| Coding | 0 | 4 | 3 | 5 | 2 | 7 | 6 | 8 | 1 |
| Case 1 | ¼ | - | 1/8 | - | ¼ | - | 1/8 | - | ¼ |
| Case 2 | ¼ | - | ¼ | - | 1/8 | - | ¼ | - | ¼ |
| Case 3 | 1/8 | - | ¼ | - | ¼ | - | ¼ | - | 1/8 |

Accordingly, inter-prediction may be performed by setting an interpolation precision in a picture unit. Information for the same may be pre-defined in the encoder or the decoder, or may be transmitted in a sequence unit, a picture unit, etc.

FIG. 38 is a view for illustrating that a single picture may have at least two interpolation precisions in the image encoding method according to an embodiment of the present invention.

Referring to FIG. 38, FIG. 38 shows an example of performing block matching in a current picture. In other words, FIG. 38 shows a case in which 10, P1, and B2 may reference themselves respectively.

In the present embodiment, a picture may not reference a picture having an ID higher than itself, and reference a picture having an ID equal to or lower than itself. In actual, although it is not shown in FIG. 38, it may be included in a case when a current picture having a temporalID of 2 or 3 is selected as a reference picture. The above case means that the current picture may be selected according to a temporalID. In addition to the temporal identifier (temporalID), a reference picture may be determined by according to a picture type.

The case of FIG. 38 is similar to the case of FIG. 37, but the case of FIG. 38 shows that an interpolation precision of a case where the current picture is selected as the reference picture when encoding the current picture, and an interpolation precision of a general case may be identical. In addition, FIG. 38 shows that different interpolation precisions may be determined when the current picture is selected as the reference picture. In other words, a single picture may have at least two interpolation precisions.

So far, a method of determining a precision of a motion vector in continuation of determining an interpolation precision of a reference picture has been described. In the following description, a method of determining a precision of a motion vector regardless of an interpolation precision will be described.

An interpolation precision of a picture may be constant (for example, 1/4), but a motion vector precision of a block may be set in a block unit of a picture to be encoded. A preset motion vector precision is used as basic setting. In the present embodiment, it may mean that at least two candidates may be supported. For example, when an interpolation precision of a reference picture is 1/4, a motion vector of a block referencing the reference picture has to be generally represented as a 1/4 unit. However, in the present embodiment, a motion vector may be represented as a general 1/4 unit, additionally represented as a 1/2 unit, or additionally represented as an integer unit.

[Table 7]

| Bin idx | 0 | 1 | 2 | 3 | 4 | 5 | 6 | 7 | 8 | 9 |
|---|---|---|---|---|---|---|---|---|---|---|
| integer | ⓪ | ① | ② | 3 | 4 | 5 | 6 | 7 | 8 | 9 |
| ½ | ⓪ | ½ | ① | 3/2 | ② | 5/2 | 3 | 7/2 | 4 | 9/2 |
| ¼ | ⓪ | ¼ | 2/4 | 3/4 | ① | 5/4 | 6/4 | 7/4 | ② | 9/4 |

Table 7 shows matching according to a precision of a motion vector having a predetermined constant number. For example, in order to represent 1, the precision may correspond to 1 in an integer unit, to 2 in a 1/2 unit 2, 4 in a 1/4 unit. In order to represent 2, the precision may correspond to 2 in an integer unit, 4 in a 1/2 unit, and 8 in a /4 unit.

When a precision is increased by 2 times based on a current precision of a block referencing a specific picture, an integer 1 becomes 1/2, and 1/2 becomes 1/4, thus, in order to represent the above, a numeral becomes doubled. When the above is represented by using various binarization methods such as a unary binarization method, truncated Rice binarization method, k-th order exp-golomb binarization method, etc., a number of bits to represent the same increases when a precision increases.

When an interpolation precision is increased, for example, from 1/2 to 1/4, but a motion vector is found in a lower precision unit (for example, integer or 1/2), encoding efficiency may be decreased since a bit amount increases.

In order to prevent the same, in the present embodiment, information from which precision unit the motion vector is found is represented in a block unit, and information for the same is used in the encoder or decoder or both. Herein, encoding and decoding may be efficiently performed.

For example, when a motion vector is encoded by using a unary binarization method, and an x component of a vector is 8/4 and a y component of the vector is 4/4, 111111110 + 11110 of binarization bits is required for representing the same. However, according to the present embodiment, the above binarization bit may be represented in a 1/2 unit (4/2, 2/2). Herein, the above binarization may be represented as 11110 + 110. In addition, the above binarization may be represented in an integer unit (2, 1). Herein, the above binarization may be represented as 110 + 10.

In addition, information of which precision unit is used when encoding a motion vector (for example, 0 in a 1/4 unit, 10 in a 1/2 unit, and 11 in an integer unit) is transmitted, and in the above case, the above binarization may be represented as 11 (precision unit) + 110 + 10, thus less bit than 111111110 + 11110 of a 1/4 unit may be used.

Accordingly, information representing a motion vector precision of a corresponding block in an integer unit may be transmitted/received with an encoding result of a motion vector of the present embodiment, thus transmitted/received encoding bits may be reduced.

In addition, as an embodiment, when x and y components of a motion vector are 3/4 and 1/4, since the components are not represented in an integer or 1/2 unit, the component may be represented as 1110 + 10 of a 1/4 unit. Herein, encoding and decoding according to the present embodiment may be performed by transmitting information that the motion vector precision of the corresponding block is represented in a 1/4 unit. Accordingly, an interpolation precision in a picture unit may be constant while a precision of a motion vector is adaptively determined in a block unit. A maximum precision of the motion vector in a block unit is identical to an interpolation precision of a reference picture.

In addition, a precision group supported in the present embodiment may be variably configured. For example, assuming that an interpolation precision of a reference picture is 1/8, the above precision of integer, 1/2, 1/4, and 1/8 units may be used. Alternatively, at least two precisions such as (1/2, 1/4, 1/8), (1/4, 1/8), (integer, 1/2, 1/8), (1/4, 1/8), etc. may be configured and used.

The precision group may be set in a picture unit, a slice unit, etc., or may be determined in consideration of an encoding cost. Information for the same may be transmitted in a sequence unit, a picture unit, a slice unit, etc. In addition, the decoder may select one of the transmitted sets, and adaptively use the set when determining a motion vector precision.

In addition, in the present embodiment, an index for selecting a precision may be represented according to a number of configured candidate groups by using a fixed length binarization method, a unary binarization method, etc. A short bit is assigned to a unit with the highest occurrence frequency or having a high chance to have the highest occurrence frequency based on a precision of a reference picture, otherwise, a long bit may be assigned.

For example, assuming that a 1/8 unit has the highest occurrence frequency, 0 to a 1/8 unit, 10 to a 1/4 unit, 110 to a 1/2 unit, and 111 to an integer unit may be assigned. In other words, the shortest bit is assigned to a 1/8 unit, and the longest bit is assigned to an integer unit.

In addition, when a 1/4 unit has the highest occurrence frequency, the shortest bit is assigned to a 1/4 unit. In addition, according to an implementation, a fixed length may be assigned regardless of the occurrence frequency. For example, a fixed length may be assigned according to a statistical occurrence frequency for example, 00 to an integer unit, 01 to a 1/2 unit, 10 to a 1/4 unit, and 11 to a 1/8 unit may be assigned.

In addition, in the present embodiment, when a reference picture is a specific picture, that is, when the reference picture is a current picture, a high priority may be assigned to a specific precision. When the reference picture is the current picture, a high priority may be assigned to an integer unit. The shortest bit may be assigned to the basic 1/8 unit, and the following short bit is assigned to an integer unit.

In other words, 0 to a 1/8 unit, 10 to an integer unit, 110 to a 1/4 unit, and 11 to a 1/2 unit may be assigned. In addition, according to an implementation, the shortest bit may be assigned to an integer unit. For example, 0 to an integer unit, 10 to a 1/8 unit, 110 to a 1/4 unit, and 111 to a 1/2 unit may be assigned.

Bits may be assigned as above since in case of an image including a screen content, motion searching is rarely performed for a corresponding part in a real number unit, but motion searching is mostly performed for a natural image part in a real number unit.

In other words, the image encoding and decoding method of the present embodiment may be effectively applied when an image is configured in combination of two areas including a part of an image is a screen content area such as a computer captured image and other part of the image is a natural image area.

In addition, in the present embodiment, information of a reference block used for predicting motion information of a current block may be used. Herein, the used reference block may use information of a first spatially adjacent block. The first block may include at least one of left upper, upper, right upper, left lower blocks based on a current block.

In addition, information of a reference block (co-located block) present at a position corresponding to the current block in a selected reference picture may be used. The reference block may select as a candidate, in addition to a co-located block, at least one of left upper, upper, right upper, left, left lower, lower, right lower, and right blocks based a reference block (central block) positioned at an identical position of the current block. Herein, a position included in a candidate group may be determined according to an encoding related parameter such as picture type, size of a current block, mode, motion vector, reference direction, etc., correlation between spatially adjacent candidate blocks, etc. Then, the selected reference picture may mean a picture having a distance of 1 with a picture present before or after the current picture.

In addition, in the present embodiment, information of blocks non-adjacent to a current block but positioned at the same space may be used. The block may include as a candidate a block including at least one block between the determined current block and the corresponding block based on information of an encoding mode, a reference picture index, preset coordinates, etc. The preset coordinates may be set to have a predetermined distance with a length and a width of the current block from a left upper coordinate of the current block.

For example, it is assumed that a left block and an upper block are referenced for representing a precision of a motion vector of a current block, and a truncated unary binarization method is used for representing the precision of the motion vector. A bit configuration may be 0 - 10 - 110 - 111. When a precision of the motion vector of the left block is determined in a 1/2 unit, and the precision of the motion vector of the upper block is determined in a 1/2 unit, it is determined that there is high change that the motion vector of the current block may be represented in a 1/2 unit, and precision related information may be binarized by assigning the shortest bit among various units. The various units may include integer, 1/2, 1/4, 1/8 units which are supported in the device, and may be fundamentally set to a 1/8 unit.

As another embodiment, when a precision of a left block is a 1/4 unit and a precision of an upper block is a 1/8 unit, a relatively short bit are assigned to a 1/4 unit and a 1/8 unit, and a relatively log bit may be assigned to remaining other units. Herein, additionally, when a 1/8 unit that is the basic unit is included, the shortest bit may be assigned to a 1/8 unit. In addition, when the basic unit is not included such as the precision of the left block is a 1/4 unit and the precision of the upper block is a 1/2 unit, the shortest bit may be assigned to a fixed position such that the fixed position may be used first. For example, when the left block has the highest priority, the shortest bit may be assigned to a 1/4 unit.

In addition, in the present embodiment, motion information of a candidate block may be used. The motion information may include, in addition to a motion vector, a reference picture index, a reference direction, etc. In one embodiment, when a precision of a left block is a 1/4 unit and a precision of an upper block is an integer unit, and when the left block has t-1 as a reference picture, the upper has t-2 as a reference picture, and the current block is t-2, the highest priority is assigned to a block having the same reference picture, the shortest bit may be assigned to an integer unit that is a precision of a motion vector of the corresponding block.

The above embodiment is briefly represented as the 1) to 4) below.

1) (1/2, 1/2) 1/2 - 1/8 - 1/4 - integer
2) (1/4, 1/8) 1/8 - 1/4 - 1/2 - integer
3) (1/4, 1/2) 1/4 - 1/2 - 1/8 - integer
4) (1/4, integer) integer - 1/4 - 1/8 - integer

In addition, in the present embodiment, a motion vector precision may be adaptively or constantly supported in a block unit according to information of a current picture type, etc. while an interpolation precision is fixed in a picture unit.

As shown in FIG. 38, when a current picture is a reference picture, a motion vector precision may be adaptively used. Alternatively, in order to find more precise motion when a distance between reference pictures such as B4 B5, B7, and B9 is short, a motion vector precision in a block unit may be supported to a corresponding picture, and a constant motion vector precision may be supported to remaining pictures.

In other words, when temporal layer information (Temporal ID)is 3, selecting one of integer, 1/2, and 1/4 units and supporting the selected unit is performed for a corresponding ID, and using and using a 1/4 unit for remaining IDs is performed. Alternatively, in case of a P-picture having distance farther from a reference picture, it is assumed that there is an area with precise motion and area with non- precise motion, a motion vector precision is adaptively determined in a block unit. In case of otherwise pictures, a constant motion vector precision may be supported.

In addition, according to an implementation, at least two sets configured with different precisions may be supported. For example, at least two of precision candidates such as (1/2, 1/4), (integer, 1/2, 1/4), (1/2, 1/4, 1/8), and (integer, 1/4) may be used (refer to Table 8).

[Table 8]

| bin idx | bin string | | | | |
|---------|---|---|---|---|---|
| 0 | 0 | | | | |
| 1 | 1 | 0 | | | |
| 2 | 1 | 1 | 0 | | |

(continued)

| bin idx | bin string | | | | | |
|---|---|---|---|---|---|---|
| 3 | 1 | 1 | 1 | 0 | | |
| 4 | 1 | 1 | 1 | 1 | 0 | |
| ... | 1 | 1 | 1 | 1 | 1 | ... |

When an interpolation precision may be set in a picture unit.

FIG. 39 is a view showing a reference picture list when a current picture is an I-picture in FIG. 38.

Referring to FIG. 39, a prediction block may be generated by performing block matching in a current picture. An I-picture is added to a reference picture (N). Represented as I*(0) means that the current picture is selected as a reference picture when encoding the current picture.

When an interpolation precision is set in a picture unit, it corresponds to a case where a precision is allowed up to an integer unit, thus interpolation is not performed. The image encoding and decoding devices may reference a reference picture list 0 (L0).

In addition, except for the case in which the current picture is selected as the reference picture according to a picture type, a temporal identifier (temporalID), etc., for example, block matching is allowed when a current picture is an I-picture and is not allowed for other pictures, a reference picture having a star(*) symbol may be omitted.

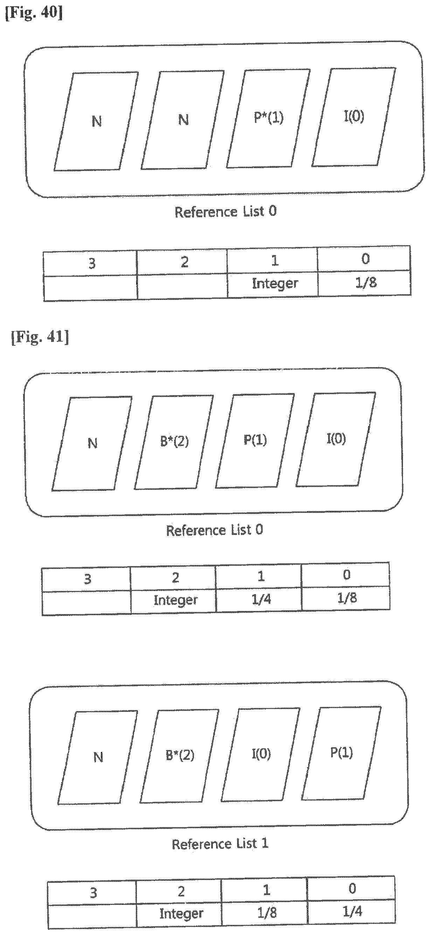

FIG. 40 is a view showing a reference picture list when a current picture is a P-picture in FIG. 38.

Referring to FIG. 40, a P-picture may be also added to a reference picture. Represented as P*(1) means that a P-picture is selected as a current picture when encoding the current picture. Herein, I(0) has a meaning different from the above I*(0). In other words, in I*(0), since motion searching is performed during encoding, motion searching may performed in a picture to which post-process filtering such as deblocking filter is applied or partially applied. However, I(0) is a picture to which post-process filtering is applied after completing the encoding process, thus I(0) may be a picture having the same POC, but may be different picture since filtering is applied thereto.

When a previous I-picture is selected as a reference picture, an interpolation precision of the corresponding picture becomes a 1/8 unit, thus an optimized motion vector may be found by performing motion searching up to a 1/8 unit. When the current picture (P*(1)) is selected as a reference picture, an interpolation precision of the corresponding picture becomes an integer unit, thus motion searching may be performed in an integer unit.

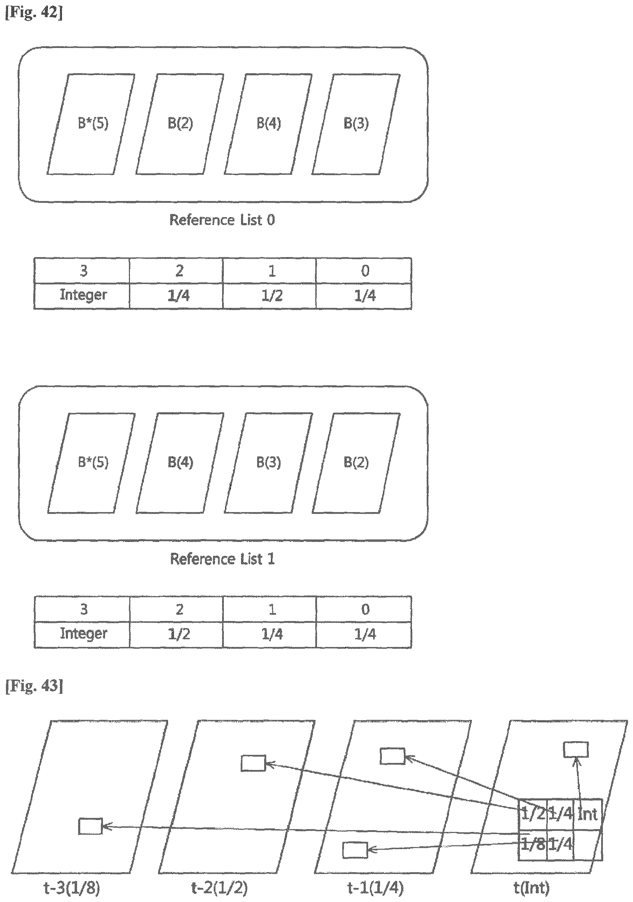

FIG. 41 is a view showing a reference picture list when a current picture is B(2) in the image encoding and decoding method according to an embodiment of the present invention. FIG. 42 is a view showing a reference picture list when a current picture is B(5) in the image encoding and decoding method according to an embodiment of the present invention.

Referring to FIG. 41, when a current picture is B(2), an I-picture(I(0)) and a P-picture (P(1)) are added to a reference picture, and motion searching may be performed on the corresponding picture up to a precision unit according to an interpolation precision of each picture. In the present embodiment, a motion vector may be searched in a precision of a 1/4 unit precision in the P-picture, and a motion vector may be searched in a precision of a 1/8 unit in the I-picture.

In addition, referring to FIG. 42, when a current picture is B(5), neither I-picture nor P-picture is included in a reference picture, but a motion vector may be searched by using different precision according to an interpolation precision of a plurality of reference pictures {B(2), B(4), B(3)}.

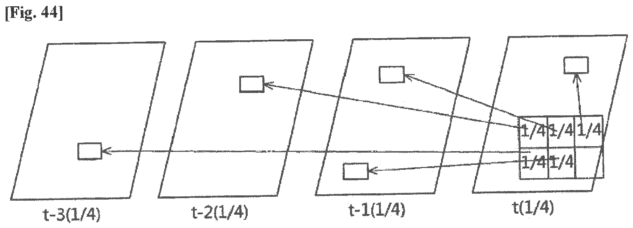

FIG. 43 is a view for illustrating a process in the image encoding and decoding method according to an embodiment of the present invention of determining a motion vector precision of each block according to an interpolation precision of a reference picture. FIG. 44 is a view for illustrating a process in the image encoding and decoding method according to an embodiment of the present invention of adaptively determining a motion vector precision of each block when an interpolation precision of each reference picture is constant.

Referring to FIG. 43, when an interpolation precision of a current picture is an integer (Int) unit, and interpolation precisions of three reference pictures (t-1, t-2, and t-3) are respectively 1/4, 1/2, and 1/8 units, and when searching motion vectors for neighbor blocks of a current block referencing a reference picture, the motion vectors of neighbor blocks may be searched by using respective precisions corresponding interpolation precisions of the corresponding reference pictures.

Referring to FIG. 44, when interpolation precisions of a current picture and reference pictures are identical such as 1/4 unit, and when searching motion vectors for neighbor blocks of a current block referencing the reference picture, the motion vectors of the neighbor blocks may be searched by using respective precisions corresponding to a predetermined interpolation precision. However, according to an implementation, although a precision of a motion vector is determined in a block unit, interpolation precisions of reference pictures may be respectively set.

In the above described embodiment, a precision of a motion vector is determined according to an interpolation precision of a reference picture. Alternatively, a precision of a motion vector is determined in a block unit while an interpolation precision is fixed. However, the present invention is not limited to the above configuration. It may be configured in combination of respectively setting interpolation precisions of reference pictures and determining a precision of a motion vector in a block unit. Herein, a maximum precision of the motion vector may be determined according to a precision of a referenced picture.

According to the above described embodiment, during inter-prediction, an interpolation precision may be adaptively set in a picture or block unit. In addition, an interpolation precision may be adaptively supported according to a temporal layer in a GOP structure, an average distance with a referenced picture, etc. In addition, when encoding index information according to a precision, an amount of encoding information may be reduced, and index information may be encoded by using various methods.

In the above described embodiment, when a motion vector precision which is described above is used when decoding an encoded image, the image encoding method may be used and replaced by the image decoding method. In addition, the image encoding and decoding method may be executed by at least one means for encoding and decoding, or an image processing device or image encoding and decoding device which is configured with a configuration unit performing a function corresponding to the above means.

According to the above described embodiment, an encoding and decoding method with high performance and efficiency may be provided, the method may be generally used in international codec such as MPEG-2, MPEG-4, H.264, etc. or other codec, and a medium using these codecs, and an image processing industry. In addition, in the future, the method of the present invention may be applied to a current high efficient image encoding method (HEVC), and an image processing field using standard codec and intra-prediction such as H.264/AVC.

Although a preferred embodiment of the present invention has been described for illustrative purposes, those skilled in the art will appreciate that various modifications, additions and substitutions are possible, without departing from the scope and spirit of the invention as disclosed in the accompanying claims.

**Claims**

1. An image encoding method, comprising:

   configuring a spatial motion vector candidate (first candidate);
   determining whether or not a reference picture of a current block is present within a current picture;
   when the reference picture of the current block is present within the current picture, adding a spatial motion vector candidate (second candidate) of other blocks of the current picture and which are encoded before the current block;
   when the reference picture of the current block is not present within the current picture, adding a temporal motion vector candidate (third candidate); and
   performing reference pixel filtering based on a motion vector candidate including any one of the first candidate, the second candidate, and the third candidate.

2. The image encoding method of claim 1, before performing the reference pixel filtering, further comprising:

   determining whether or not the current picture is the reference picture;
   when the current picture is the reference picture, and a number of motion vector candidates within the combined list candidate is smaller than a preset number, adding a fixed candidate having preset fixed coordinates; and
   when the current picture is not the reference picture, and a number of motion vector candidates within the combined list candidate is smaller than the preset number, adding a fixed candidate having (0, 0) coordinates.

3. The image encoding method of claim 1, after performing the reference pixel filtering, further comprising:

   generating a prediction block by performing intra-prediction; and
   encoding a prediction mode of the generated prediction block.

4. The image encoding method of claim 1, wherein the other blocks of the current picture are blocks facing the current block with a neighbor block of the current block therebetween, and includes a block that is encoded by performing inter-prediction for the current picture before the current block.

5. An image decoding method, wherein the method generates a reconstructed image by entropy decoding an encoded image, performing dequantization for the decoded image, and performing inverse-transform for the dequantized image, the method comprising:

configuring a motion information prediction candidate group of the reconstructed image based on header information of the image obtained by entropy decoding;
changing a motion vector of a candidate block belonging to the candidate group according to a precision unit of a motion vector of a current block; and
calculating a difference value by subtracting the motion vector of the candidate block according to the precision unit from the motion vector of the current block.

6. The image decoding method of claim 5, wherein in the changing of the motion vector, the motion vector is scaled according to a first distance between a current picture at which the current block is positioned and a reference picture, and a second distance between a picture of the candidate block and a reference picture of a corresponding candidate block.

7. The image decoding method of claim 6, after the calculating of the difference value, further comprising: determining an interpolation precision of each reference picture based on an average distance of the first distance and the second distance.

8. The image decoding method of claim 5, wherein the changing of the motion vector is omitted when a reference picture of the current block and a reference picture of the candidate block are identical.

9. The image decoding method of claim 5, wherein in the changing of the motion vector, a motion vector of a neighbor block or adjacent block is changed to a motion vector precision unit of the current block according to the motion vector precision of the current block.

10. The image decoding method of claim 9, wherein the neighbor block is included in and positioned at another block with the current block.

11. The image decoding method of claim 10, wherein the neighbor block is a block in which a motion vector thereof is searched by performing inter-prediction before the current block.

12. An image decoding method, comprising:

searching, when an interpolation precision of a reference picture is a first value, a precision of a motion vector for a first neighbor block of a current block referencing the reference picture, the precision being identical to the first value or being a second value greater than the first value;
searching a precision of a motion vector for a second neighbor block of the current block, the precision being a third value greater than the second value; and
decoding first information of the motion vectors for the first block and the second block based on matching information of the precisions of the motion vectors.

13. The image decoding method of claim 12, wherein the first value is a proper fraction, and the second value or the third value is an integer.

14. The image decoding method of claim 12, wherein the second value has a number of binary bits shorter than a number of binary bits of the third value when the second value has an occurrence frequency higher than an occurrence frequency of the third value within an index including the matching information.

15. The image decoding method of claim 12, wherein the first neighbor block or the second neighbor block is a block encoded by performing inter-prediction before the current block, and a reference picture of the first neighbor block or the second neighbor block is the current picture.

16. The image decoding method of claim 12, wherein the first neighbor block or the second neighbor block is included and positioned at another block that is spatially different from the current block.

17. An image decoding device including a memory storing a program or a program code for image decoding, and a processor connected to the memory, wherein the processor, by the program:

searches, when an interpolation precision of a reference picture is a first value, a precision of a motion vector for a first neighbor block of a current block referencing the reference picture, the precision being identical to the first value or being a second value greater than the first value;

searches a precision of a motion vector for a second neighbor block of the current block, the precision being a third value greater than the second value; and

decodes an image based on information of the motion vectors for the first block and the second block and matching information of the precisions of the motion vectors.

18. The image decoding device of the claim 17, wherein the first value is a proper fraction, and the second value or the third value is an integer.

19. The image decoding method of claim 17, wherein the second value has a number of binary bits shorter than a number of binary bits of the third value when the second value has an occurrence frequency higher than an occurrence frequency of the third value within an index including the matching information.

20. The image decoding method of claim 17, wherein the first neighbor block or the second neighbor block is a block encoded by performing inter-prediction before the current block, and a reference picture of the first neighbor block or the second neighbor block is the current picture.

[Fig. 1]

[Fig. 2]

[Fig. 3]

[Fig. 4]

t-2          t-1          Current (t)

[Fig. 5]

t-1          Current (t)          t+1

[Fig. 6]

t-2          t-1          Current (t)

[Fig. 7]

Reference List 0

Current (t)

Reference List 1

EP 3 306 935 A1

[Fig. 8]

Reference List 0

Reference List 1

Current (t)

52

[Fig. 9]

[Fig. 10]

[Fig. 11]

[Fig. 12]

```
coding_unit() {
    if( slice_type != I || curr_pic_BM_enabled_flag == 1 )
        cu_skip_flag
    if( cu_skip_flag )
        prediction_unit()
    else {
        if( slice_type != I || curr_pic_BM_enabled_flag == 1 )
            pred_mode_flag
        if( CuPredMode != MODE_INTRA || log2CbSize == MaxCbLog2SizeY )
            part_mode
        if( CuPredMode[ x0 ][ y0 ] == MODE_INTRA ) {
            if( PartMode == PART_2Nx2N && pcm_enabled_flag &&
                log2CbSize >= Log2MinIpcmCbSizeY &&
                log2CbSize <= Log2MaxIpcmCbSizeY )
                pcm_flag[ x0 ][ y0 ]
            if( pcm_flag[ x0 ][ y0 ] ) {
                while( !byte_aligned( ) )
                    pcm_alignment_zero_bit
                pcm_sample( x0, y0, log2CbSize )
            } else {
                pbOffset = ( PartMode == PART_NxN ) ? ( nCbS / 2 ) : nCbS
                for( j = 0; j < nCbS; j = j + pbOffset )
                    for( i = 0; i < nCbS; i = i + pbOffset )
                        prev_intra_luma_pred_flag[ x0 + i ][ y0 + j ]
                for( j = 0; j < nCbS; j = j + pbOffset )
                    for( i = 0; i < nCbS; i = i + pbOffset )
                        if( prev_intra_luma_pred_flag[ x0 + i ][ y0 + j ] )
                            mpm_idx[ x0 + i ][ y0 + j ]
                        Else
                            rem_intra_luma_pred_mode[ x0 + i ][ y0 + j ]
                intra_chroma_pred_mode[ x0 ][ y0 ]
            }
        } else {
            if( PartMode == PART_2Nx2N )
                prediction_unit( x0, y0, nCbS, nCbS )
            else if( PartMode == PART_2NxN ) {
                prediction_unit( x0, y0, nCbS, nCbS / 2 )
                prediction_unit( x0, y0 + ( nCbS / 2 ), nCbS, nCbS / 2 )
            } else if( PartMode == PART_Nx2N ) {
                prediction_unit( x0, y0, nCbS / 2, nCbS )
                prediction_unit( x0 + ( nCbS / 2 ), y0, nCbS / 2, nCbS )
            } else if( PartMode == PART_2NxnU ) {
                prediction_unit( x0, y0, nCbS, nCbS / 4 )
                prediction_unit( x0, y0 + ( nCbS / 4 ), nCbS, nCbS * 3 / 4 )
            } else if( PartMode == PART_2NxnD ) {
                prediction_unit( x0, y0, nCbS, nCbS * 3 / 4 )
                prediction_unit( x0, y0 + ( nCbS * 3 / 4 ), nCbS, nCbS / 4 )
            } else if( PartMode == PART_nLx2N ) {
                prediction_unit( x0, y0, nCbS / 4, nCbS )
                prediction_unit( x0 + ( nCbS / 4 ), y0, nCbS * 3 / 4, nCbS )
            } else if( PartMode == PART_nRx2N ) {
                prediction_unit( x0, y0, nCbS * 3 / 4, nCbS )
                prediction_unit( x0 + ( nCbS * 3 / 4 ), y0, nCbS / 4, nCbS )
            } else { /* PART_NxN */
                prediction_unit( x0, y0, nCbS / 2, nCbS / 2 )
                prediction_unit( x0 + ( nCbS / 2 ), y0, nCbS / 2, nCbS / 2 )
                prediction_unit( x0, y0 + ( nCbS / 2 ), nCbS / 2, nCbS / 2 )
                prediction_unit( x0 + ( nCbS / 2 ), y0 + ( nCbS / 2 ), nCbS / 2, nCbS / 2 )
            }
        }
    }
    ...
}
```

[Fig. 13]

| 2Nx2N | 2NxN | Nx2N | NxN | 2NxnU | 2NxnD | nLx2N | nRx2N |
|-------|------|------|-----|-------|-------|-------|-------|

Symmetric type      Asymmetric type

[Fig. 14]

| Intra | Inter | |
|---|---|---|
| | ref_idx = curr | else |
| 2Nx2N, NxN | skip, 2Nx2N, NxN | skip, 2Nx2N, 2NxN, Nx2N, nLx2N, nRx2N, 2NxnU, 2NxnD |

[Fig. 15]

[Fig. 16]

[Fig. 17]

[Fig. 18]

[Fig. 19]

[Fig. 20]

[Fig. 21]

[Fig. 22]

EP 3 306 935 A1

rf2 (t-3)

rf1 (t-2)

rf0 (t-1)

Current (t)

(mvA_x, mvA_y)

(mvD_x, mvD_y)

(mvE_x, mvE_y)

(mvB_x, mvB_y)

(mv_x, mv_y)

(mvC_x, mvC_y)

A B C

D

E

B_t

[Fig. 23]

[Fig. 24]

[Fig. 25]

t-3(1)          t-2(2)          t-1(3)          t(0)

[Fig. 26]

| | |
|---|---|
| changing motion vector precision | ~ S262 |
| scaling motion vector | ~ S264 |
| obtaining motion vector difference value | ~ S266 |

[Fig. 27]

(A1)

| | mv=(5.0, -1.0)<br>ref= t-2<br>precision= 1/4 | mv=(9.0, 1.5)<br>ref= t-3<br>precision= 1/2 |
|---|---|---|
| mv=(6.25, 4.5)<br>ref= t-1<br>precision= 1/4 | mv=(3.5, 0.75)<br>ref= t-1<br>precision= 1/4 | |

(A2)

| | (20/4, -4/4) | (18/2, 3/2) |
|---|---|---|
| (25/4, 18/4) | (14/4, 3/4) | |

(A3)

| | (10/4, -2/4) | (6/2, 1/2) |
|---|---|---|
| (25/4, 18/4) | (14/4, 3/4) | |

(A4)

| | (10/4, -2/4) | (12/4, 2/4) |
|---|---|---|
| (25/4, 18/4) | (14/4, 3/4) | |

[Fig. 28]

(B1)

| | mv=(4.25, 3.0)<br>ref= t-1<br>precision= 1/4 | mv=(6, 2.5)<br>ref= t-1<br>precision= 1/2 |
|---|---|---|
| mv=(4.125, 3.5)<br>ref= t-1<br>precision= 1/8 | mv=(4.5, 2.5)<br>ref= t-1<br>precision= 1/2 | |

(B2)

| | (17/4, 12/4) | (12/2, 5/2) |
|---|---|---|
| (33/8, 26/8) | (9/2, 5/2) | |

(B3)

| | (8/2, 6/2) | (12/2, 5/2) |
|---|---|---|
| (8/2, 7/2) | (9/2, 5/2) | |

[Fig. 29]

(C1)

| | mv=(1.5, 1.0)<br>ref= t-1<br>precision= 1/2 | mv=(3, 0.125)<br>ref= t-2<br>precision= 1/8 |
|---|---|---|
| mv=(6.25, 4.5)<br>ref= t-2<br>precision= 1/4 | mv=(3.25, 1.5)<br>ref= t-1<br>precision= 1/4 | |

(C2)

| | (3/2, 2/2) | (24/8, 1/8) |
|---|---|---|
| (25/4, 18/4) | (37/4, 6/4) | |

(C3)

| | (3/2, 2/2) | (12/8, 0/8) |
|---|---|---|
| (12/4, 9/4) | (13/4, 6/4) | |

(C4)

| | (6/4, 4/4) | (6/4, 0/4) |
|---|---|---|
| (12/4, 9/4) | (13/4, 6/4) | |

[Fig. 30]

[Fig. 31]

(E1)

|  | (-37/4, -42/4) | (6/2, 1/2) |
|---|---|---|
| (13/4, 19/4) | (-23/2, -22/2) |  |

(E2)

|  | mv=(-9.25, -10.5) ref= t precision= 1/4 | mv=(3, 0.5) ref= t-2 precision= 1/2 |
|---|---|---|
| mv=(3.25, 4.75) ref= t-1 precision= 1/4 | mv=(-11.5, -11.0) ref= t precision= 1/2 |  |

(E3)

|  | (-18/2, -21/2) | invalid |
|---|---|---|
| invalid | (-23/2, -22/2) |  |

# [Fig. 32]

(E5)

| mv=(-10, -2) ref= t precision= integer | | | |
|---|---|---|---|
| | intra | intra | mv=(-16, -5) ref= t precision= integer |
| mv=(-18, 0) ref= t precision= integer | intra | mv=(-11, 2) ref= t precision= integer | |

(E6)

| | mv=(4.25, 3.0) ref= t-1 precision= 1/4 | mv=(6, 2.5) ref= t-2 precision= 1/2 |
|---|---|---|
| mv=(4.125, 3.5) ref= t-3 precision= 1/8 | mv=(4.5, 2.5) ref= t-2 precision= 1/2 | |

(E7)

| | mv=(-2.0, -3.0) ref= t precision= integer | mv=(6, 2.5) ref= t-2 precision= 1/2 |
|---|---|---|
| mv=(4.125, 3.5) ref= t-3 precision= 1/8 | mv=(4.5, 2.5) ref= t precision= integer | |

(E8)

| | mv=(-2.0, -3.0) ref= t precision= integer | mv=(6, 2.5) ref= t-2 precision= 1/2 |
|---|---|---|
| mv=(4.125, 3.5) ref= t-3 precision= 1/8 | mv=(4.5, 2.5) ref= t-2 precision= 1/2 | |

| mv=(4.0, 2.0) ref= t-2 precision= 1/2 |
|---|

# [Fig. 33]

(F1)

| | mv=(-3.5, 2.0) ref= t-1 precision= 1/4 | mv=(3.75, -7.0) ref= t-1 precision= 1/4 |
|---|---|---|
| mv=(3.25, 1.5) ref= t-1 precision= 1/4 | mv=(5.25, 2.5) ref= t-1 precision= 1/4 | |

(F2)

| | (-14/4, -8/4) | (15/4, 28/4) |
|---|---|---|
| (13/4, 6/4) | (21/4, 10/4) | |

[Fig. 34]

| Integer number | 0 | 1 | 2 | 3 | 4 | 5 | 6 | 7 | 8 | 9 |
|---|---|---|---|---|---|---|---|---|---|---|
| Integer | 0 | 1 | 2 | 3 | 4 | 5 | 6 | 7 | 8 | 9 |
| 1/2 | 0 | 1/2 | 1 | 3/2 | 2 | 5/2 | 3 | 7/2 | 4 | 9/2 |
| 1/4 | 0 | 1/4 | 2/4 | 3/4 | 1 | 5/4 | 6/4 | 7/4 | 2 | 9/4 |

represented from 1 → unit to integer unit → (2/1, 1/1)
x : 8 → 2, y : 4 → 1

mvd coding

1/4 (high precision depth)
0

1

1/2
0

integer (low precision depth)
1

[Fig. 35]

(G1)

| | mv=(-3.5, 2.0)<br>ref= t-1<br>precision= 1/4 | mv=(3.75, -7.0)<br>ref= t-1<br>precision= 1/4 |
|---|---|---|
| mv=(3.25, 1.25)<br>ref= t-1<br>precision= 1/4 | mv=(5.25, 2.5)<br>ref= t-1<br>precision= 1/4 | |

(G2)

| | (-14/4, -8/4) | (15/4, 28/4) |
|---|---|---|
| (13/4, 5/4) | (21/4, 10/4) | |

[Fig. 36]

| Increment | 0 | 1 | 2 | 3 | 4 | 5 | 6 | 7 | 8 | 9 |
|---|---|---|---|---|---|---|---|---|---|---|
| Integer | 0 | 1 | 2 | 3 | 4 | 5 | 6 | 7 | 8 | 9 |
| 1/2 | 0 | 1/2 | 1 | 3/2 | 2 | 5/2 | 3 | 7/2 | 4 | 9/2 |
| 1/4 | 0 | 1/4 | 2/4 | 3/4 | 1 | 5/4 | 6/4 | 7/4 | 2 | 9/4 |

X is represented from 1/4 unit to integer unit, no change in Y → (2/1, 5/4)
x : 8 → 2, y : 5 → 5

[Fig. 37]

Temporalid

[Fig. 38]

Temporalid

[Fig. 39]

Reference List 0

| 3 | 2 | 1 | 0 |
|---|---|---|---|
| | | | Integer |

[Fig. 40]

N | N | P*(1) | I(0)

Reference List 0

| 3 | 2 | 1 | 0 |
|---|---|---|---|
|  |  | Integer | 1/8 |

[Fig. 41]

N | B*(2) | P(1) | I(0)

Reference List 0

| 3 | 2 | 1 | 0 |
|---|---|---|---|
|  | Integer | 1/4 | 1/8 |

N | B*(2) | I(0) | P(1)

Reference List 1

| 3 | 2 | 1 | 0 |
|---|---|---|---|
|  | Integer | 1/8 | 1/4 |

[Fig. 42]

| 3 | 2 | 1 | 0 |
|---|---|---|---|
| Integer | 1/4 | 1/2 | 1/4 |

Reference List 0

| 3 | 2 | 1 | 0 |
|---|---|---|---|
| Integer | 1/2 | 1/4 | 1/4 |

Reference List 1

[Fig. 43]

t-3(1/8)     t-2(1/2)     t-1(1/4)     t(Int)

[Fig. 44]

| | | |
|---|---|---|
| 1/4 | 1/4 | 1/4 |
| 1/4 | 1/4 | |

t-3(1/4)　　　　t-2(1/4)　　　　t-1(1/4)　　　　t(1/4)

## INTERNATIONAL SEARCH REPORT

| | International application No. |
|---|---|
| | **PCT/KR2016/005998** |

**A. CLASSIFICATION OF SUBJECT MATTER**

*H04N 19/52(2014.01)i, H04N 19/105(2014.01)i, H04N 19/176(2014.01)i, H04N 19/174(2014.01)i,*

*H04N 19/139(2014.01)i, H04N 19/51(2014.01)i*

According to International Patent Classification (IPC) or to both national classification and IPC

**B. FIELDS SEARCHED**

Minimum documentation searched (classification system followed by classification symbols)

H04N 19/52; H04N 19/46; H04N 19/51; H04N 19/107; H04N 19/105; H04N 19/139; H04N 19/50; H04N 19/573; H04N 19/176; H04N 19/174

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: spatial motion vector candidate, temporal motion vector candidate, motion vector, accuracy, screening

**C. DOCUMENTS CONSIDERED TO BE RELEVANT**

| Category* | Citation of document, with indication, where appropriate, of the relevant passages | Relevant to claim No. |
|---|---|---|
| A | KR 10-2014-0043759 A (LG ELECTRONICS INC.) 10 April 2014<br>See paragraphs [0078]-[0097] and figure 4. | 1-4 |
| A | KR 10-2014-0146541 A (SAMSUNG ELECTRONICS CO., LTD.) 26 December 2014<br>See paragraphs [0096]-[0118] and figures 4-5. | 1-4 |
| X | KR 10-2011-0139684 A (SONY CORPORATION) 29 December 2011<br>See paragraphs [0119]-[0146], [0227]-[0255] and figures 7, 13-14. | 5,9-10 |
| A | | 6-8,11-20 |
| A | KR 10-2011-0112187 A (SAMSUNG ELECTRONICS CO., LTD.) 12 October 2011<br>See paragraphs [0181]-[0184] and figure 26. | 5-20 |
| A | JP 2014-523714 A (QUALCOMM INC.) 11 September 2014<br>See paragraphs [0118]-[0126] and figures 8-9. | 5-20 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 AUGUST 2016 (24.08.2016) | **24 AUGUST 2016 (24.08.2016)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (January 2015)

72

## INTERNATIONAL SEARCH REPORT

International application No.

**PCT/KR2016/005998**

| Box No. II Observations where certain claims were found unsearchable (Continuation of item 2 of first sheet) |
| --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III Observations where unity of invention is lacking (Continuation of item 3 of first sheet) |
| --- |

This International Searching Authority found multiple inventions in this international application, as follows:

The invention of group 1: claims 1-4 pertain to an image encoding method for adding a spatial motion vector candidate or a temporal motion vector candidate according to whether a reference picture of a current block is present in a current picture.
The invention of group 2: claims 5-17 pertain to an image encoding method based on the precision of a motion vector, and a device for performing the same.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (January 2015)

INTERNATIONAL SEARCH REPORT
Information on patent family members

International application No.

**PCT/KR2016/005998**

| Patent document cited in search report | Publication date | Patent family member | Publication date |
|---|---|---|---|
| KR 10-2014-0043759 A | 10/04/2014 | CA 2840381 A1 | 03/01/2013 |
| | | CN 103748879 A | 23/04/2014 |
| | | EP 2728875 A1 | 07/05/2014 |
| | | US 2014-0126643 A1 | 08/05/2014 |
| | | WO 2013-002461 A1 | 03/01/2013 |
| KR 10-2014-0146541 A | 26/12/2014 | CN 104244002 A | 24/12/2014 |
| | | SG 11201510258P A | 28/01/2016 |
| | | US 2016-0134886 A1 | 12/05/2016 |
| | | WO 2014-200313 A1 | 18/12/2014 |
| KR 10-2011-0139684 A | 29/12/2011 | AU 2010-219746 A1 | 10/09/2010 |
| | | CA 2752736 A1 | 10/09/2010 |
| | | CN 102342108 A | 01/02/2012 |
| | | CN 102342108 B | 09/07/2014 |
| | | EP 2405659 A1 | 11/01/2012 |
| | | EP 2405659 A1 | 11/01/2012 |
| | | EP 2405659 A4 | 02/01/2013 |
| | | TW 201041404 A | 16/11/2010 |
| | | US 2012-0057632 A1 | 08/03/2012 |
| | | WO 2010-101064 A1 | 10/09/2010 |
| KR 10-2011-0112187 A | 12/10/2011 | CN 102934443 A | 13/02/2013 |
| | | CN 102934443 B | 25/11/2015 |
| | | EP 2556674 A2 | 13/02/2013 |
| | | US 2011-0243233 A1 | 06/10/2011 |
| | | US 8711939 B2 | 29/04/2014 |
| | | WO 2011-126278 A2 | 13/10/2011 |
| | | WO 2011-126278 A3 | 13/10/2011 |
| JP 2014-523714 A | 11/09/2014 | AU 2014-279234 A1 | 09/01/2014 |
| | | AU 279234 B2 | 07/05/2015 |
| | | CA 2840728 A1 | 10/01/2013 |
| | | CN 103703781 A | 02/04/2014 |
| | | DK 2727353 T3 | 19/10/2015 |
| | | EP 2727353 A1 | 07/05/2014 |
| | | EP 2727353 B1 | 15/07/2015 |
| | | ES 2546678 T3 | 25/09/2015 |
| | | KR 10-2014-0043807 A | 10/04/2014 |
| | | MX 2013014936 A | 11/02/2014 |
| | | PT 2727353 E | 23/10/2015 |
| | | RU 2014103485 A | 10/08/2015 |
| | | RU 2580054 C2 | 10/04/2016 |
| | | SG 195279 A1 | 30/12/2013 |
| | | US 2013-0003849 A1 | 03/01/2013 |
| | | US 2014-0341297 A1 | 20/11/2014 |
| | | WO 2013-006483 A1 | 10/01/2013 |

Form PCT/ISA/210 (patent family annex) (January 2015)